(19) Europäisches Patentamt
European Patent Office
Office européen des brevets

(11) EP 3 742 246 B1

(12) EUROPEAN PATENT SPECIFICATION

(45) Date of publication and mention of the grant of the patent:
**15.11.2023 Bulletin 2023/46**

(21) Application number: **20173844.0**

(22) Date of filing: **11.05.2020**

(51) International Patent Classification (IPC):
***G05B 19/4099*** *(2006.01)*

(52) Cooperative Patent Classification (CPC):
**G05B 19/4099;** G05B 2219/34187; G05B 2219/45152; G05B 2219/45234

# (54) COMPUTER IMPLEMENTED METHOD AND SYSTEM FOR GENERATING SLOPE SYNCHRONIZED TOOL PATHS FOR INCREMENTAL SHEET FORMING

COMPUTERIMPLEMENTIERTES VERFAHREN UND SYSTEM ZUR ERZEUGUNG VON GENEIGTEN SYNCHRONISIERTEN WERKZEUGBAHNEN FÜR INKREMENTALE BLECHUMFORMUNG

PROCÉDÉ MIS EN OEUVRE PAR ORDINATEUR ET SYSTÈME DE GÉNÉRATION TRAJETS D’OUTILS SYNCHRONISÉS EN PENTE POUR FORMAGE INCRÉMENTIEL DE FEUILLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2019 US 201916422898**

(43) Date of publication of application:
**25.11.2020 Bulletin 2020/48**

(73) Proprietor: **The Boeing Company**
**Arlington, VA 22202 (US)**

(72) Inventor: **ELFORD, Michael C**
**Chicago, IL Illinois 60606-2016 (US)**

(74) Representative: **Boult Wade Tennant LLP**
**Salisbury Square House**
**8 Salisbury Square**
**London EC4Y 8AP (GB)**

(56) References cited:
**US-A1- 2018 113 432**

- **CHANG ZHIDONG ET AL: "Investigations on a novel quadratic spiral tool path and its effect on incremental sheet forming process", THE INTERNATIONAL JOURNAL OF ADVANCED MANUFACTURING TECHNOLOGY, SPRINGER, LONDON, vol. 103, no. 5, 30 April 2019 (2019-04-30), pages 2953-2964, XP036840296, ISSN: 0268-3768, DOI: 10.1007/S00170-019-03649-7 [retrieved on 2019-04-30]**
- **LINGAM R ET AL: "Automatic feature recognition and tool path strategies for enhancing accuracy in double sided incremental forming", THE INTERNATIONAL JOURNAL OF ADVANCED MANUFACTURING TECHNOLOGY, SPRINGER, LONDON, vol. 88, no. 5, 20 May 2016 (2016-05-20), pages 1639-1655, XP036143585, ISSN: 0268-3768, DOI: 10.1007/S00170-016-8880-1 [retrieved on 2016-05-20]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 742 246 B1

## Description

FIELD

The disclosure relates generally to methods and systems for manufacturing parts using an incremental sheet forming (ISF) process, and more particularly, to methods and systems for manufacturing contoured parts, such as aircraft contoured parts, by generating slope synchronized tool paths for an incremental sheet forming process.

BACKGROUND

Part forming processes, such as incremental sheet forming (ISF), may be used to manufacture parts, such as contoured parts, including new parts, replacement parts, and spare parts, for vehicles, such as aircraft. ISF is a sheet metal forming process that uses a forming tool to deform sheet metal along a series of predefined tool paths, to impart the sheet metal with a desired shape, such as a three-dimensional shape. ISF tooling may be used with a computer numerical control (CNC) machine or another suitable machine or system to form the sheet metal into the desired shape for the part.

ISF is typically achieved by using a fixed or constant distance between successive Z-level tool paths thereby resulting in a series of step-downs (or step-ups) of the forming tool of a fixed height. This approach may be suitable for a fixed or constant wall angle part but may result in uneven step-acrosses when there are different wall angles on the same part. For example, a fixed or constant step-down may be too small for steep slopes, or may be too large for shallow slopes, and this may result in formed parts with surface imperfections, such as ridges or blemishes. This may, in turn, require additional surface treatment processes to remove or reduce the surface imperfections. Such additional surface treatment processes may increase the overall time and expense of the part manufacturing, or may result in a part that does not meet the design specification.

In addition, ISF may use known CAM (computer-aided manufacturing) software for part forming. Such known CAM software allows for tool path features and tools which are based around the machining process, where material is removed to sculpt a part out of a solid block of material. However, such tool path features and tools do not allow for a wall angle sensitive step-down, in combination with Z level (contour type) tool paths.

Accordingly, there is a need in the art for methods and systems for generating tool paths for part forming manufacturing, such as incremental sheet forming (ISF) manufacturing, of parts, that result in formed parts with decreased surface imperfections, improved shape definition, improved quality, reduced need for additional surface treatment processes, and that provide significant advantages over known methods and systems.

Chang Zhidong et al: "Investigations on a novel quadratic spiral tool path and its effect on incremental sheet forming process", The International Journal of Advanced Manufacturing Technology, Springer, London, in accordance with its abstract, states incremental sheet forming (ISF) is considered as a flexible sheet metal forming process suitable for rapidly producing complex sheet metal pails, and the tool path has a vital impact on the forming quality. The balance between efficiency and geometric accuracy is still challenging in tool path generation algorithm for the ISF process. A novel quadratic spiral tool path (QSTP) generation algorithm has been developed for the ISF process. For better understanding the impact of QSTP, the thickness thinning, forming cycle time, geometric accuracy, and surface quality are case-studied by using two typical parts with varied wall angle and compared with conventional spiral tool path (CSTP). Two different materials AA5052 and DCOS are used to evaluate the influences of sheet material properties. In addition, an analytical model is proposed to evaluate the surface quality of the part made by QSTP, which is also validated by experiments. Experimental comparison in forming AA5052 and DC05 by QSTP shows that larger ratio of yield stress to Young's module of the sheet metal may cause larger geometric deviation, but the material properties do not affect the thickness thinning mode which still generally follows the Cosine law in QSTP.

Lingam R et al: "Automatic feature recognition and tool path strategies for enhancing accuracy in double sided incremental forming", The International Journal of Advanced Manufacturing Technology, Springer, London, in accordance with its abstract, states incremental sheet forming (ISF) has demonstrated significant potential to form complex three-dimensional parts without using component-specific tools and is suitable for economically fabricating low-volume functional sheet metal parts. Single-point incremental forming (SPIF) uses only one tool to form components and requires additional setup to form complex geometries. Double-sided incremental forming (DSIF), using two tools (one on either side of the sheet), can form features from top and bottom of sheet in single setup. While forming components with multiple features, the accuracy of component depends on the tool path strategy used for each feature and sequence in which features are formed. Methodologies are developed to recognise features from free-form components modeled using single and/or multiple surfaces. Recognised features are sliced using horizontal, inclined or offset strategies (developed during the present work) based on the geometrical characteristics of a given feature. Selection of best-forming sequence is automated based on the relation between features and process mechanics.

SUMMARY

There is provided a computer implemented method for generating a series of slope synchronized tool paths for incremental sheet forming (ISF) of a contoured part using a computer system comprising a computer having a processor device, and comprising a modeling application and a slope synchronized tool path application, each implemented by a computer readable software program and each executed by the computer, the computer implemented method comprising the steps of: using the slope synchronized tool path application executed by the computer to perform a slope synchronized tool path application execution comprising the substeps of: defining a plurality of equally spaced apart Z values along a Z-axis where, for each of the plurality of equally spaced apart Z values, a horizontal plane at that Z value intersects a surface that approximates a three-dimensional geometry of the contoured part to define a line; determining, for each of the plurality of equally spaced apart Z values, a slope factor value based on a maximum slope angle of the surface along the line, to define an array of Z values and slope factor values that correspond to the Z values; and setting an initial Z coordinate corresponding to a starting portion of the surface, as a current Z coordinate; the slope synchronized tool path application execution then iteratively: calculating a series of calculated step-down values by calculating each calculated step-down value as a sum of a minimum step-down value and a percentage of a maximum step-down value less the minimum step-down value, to obtain the calculated step-down value, the percentage based on a current slope factor value for the current Z coordinate, that is calculated based on the array of the Z values and the corresponding slope factor values; decrementing the current Z coordinate by the last calculated step-down value; and determining an intersection of the surface with the horizontal plane at the current Z coordinate, thereby defining a tool path for the current Z coordinate; such that the slope synchronized tool path application creates a plurality of tool paths that are each respectively spaced apart by the calculated step-down values, to obtain the series of slope synchronized tool paths; and sending an output file, using the computer, to a numerically controlled incremental sheet forming (ISF) machine, wherein the output file, when executed by the numerically controlled incremental sheet forming (ISF) machine, causes the numerically controlled incremental sheet forming (ISF) machine to direct an incremental sheet forming (ISF) tool along the series of slope synchronized tool paths to incrementally form the contoured part.

All the methods from all the embodiments of the present disclosure are within the scope defined by independent claim 1.

There is also provided a computer implemented system for generating a series of slope synchronized tool paths for incremental sheet forming (ISF) of a contoured part, the computer implemented system comprising: a computer having a processor device and a modeling application implemented by a first computer readable software program and executed by the computer, the modeling application adapted to perform a surface discretization of a three-dimensional geometry of the contoured part, to produce a surface mesh of polygons that approximates the three-dimensional geometry of the contoured part; and a slope synchronized tool path application implemented by a second computer readable software program and executed by the computer, the slope synchronized tool path application adapted to: define a plurality of equally spaced apart Z values along a Z-axis where, for each of the plurality of equally spaced apart Z values, a horizontal plane at that Z value intersects the surface mesh of polygons that approximates the three-dimensional geometry of the contoured part to define a line; determine, for each of the plurality of equally spaced apart Z values, a slope factor value based on a maximum slope angle of the surface along the line, to define an array of Z values and slope factor values that correspond to the Z values; and set an initial Z coordinate corresponding to a starting portion of the surface mesh, as a current Z coordinate; the slope synchronized tool path application then adapted to iteratively: calculate a series of calculated step-down values by calculating each calculated step-down value as a sum of a minimum step-down value and a percentage of a maximum step-down value less the minimum step-down value, to obtain the calculated step-down value, the percentage based on a current slope factor value for the current Z coordinate, that is calculated based on the array of the Z values and the corresponding slope factor values; decrement the current Z coordinate by the last calculated step-down value; and determine an intersection of the surface mesh with the horizontal plane at the current Z coordinate, thereby defining a tool path for the current Z coordinate; such that the slope synchronized tool path application creates a plurality of tool paths that are each respectively spaced apart by the calculated step-down values, to obtain the series of slope synchronized tool paths; and wherein the computer sends an output file to a numerically controlled incremental sheet forming machine, wherein the output file, when executed by the numerically controlled incremental sheet forming (ISF) machine, causes the numerically controlled incremental sheet forming machine to direct an incremental sheet forming tool along the series of slope synchronized tool paths to incrementally form the contoured part.

All the systems from all the embodiments of the present disclosure are within the scope defined by independent claim 9.

As discussed in the below detailed description, versions of the methods and systems may provide significant advantages over existing methods and systems.

In one embodiment, there is provided a computer implemented method for generating a series of slope synchronized tool paths for incremental sheet forming (ISF) of a contoured part, where the tool paths are synchronized with a value of the slope or wall angle of the contoured part. The computer implemented method comprises the step of providing a computer system comprising a computer having a processor device, and comprising a modeling application and a slope synchronized tool path application, each implemented by a computer readable software program and each executed by the computer.

The computer implemented method further comprises the step of performing, with the computer and the slope synchronized tool path application, a slope synchronized tool path application execution. The slope synchronized tool path application execution comprises the substep of defining a plurality of equally spaced apart Z values along a Z-axis where, for each of the plurality of equally spaced apart Z values, a horizontal plane at that Z value intersects a surface that approximates a three-dimensional geometry of the contoured part to define a line. The slope synchronized tool path application execution further comprises the substep of determining, for each of the plurality of equally spaced apart Z values, a slope factor value based on a maximum slope angle of the surface along the line, to define an array of Z values and slope factor values that correspond to the Z values.

The slope synchronized tool path application execution further comprises the substep of setting an initial Z coordinate corresponding to a starting portion of the surface, as a current Z coordinate. The slope synchronized tool path application execution then comprises the substeps of iteratively calculating a series of calculated step-down values by calculating each calculated step-down value as a sum of a minimum step-down value and a percentage of a maximum step-down value less the minimum step-down value, to obtain each calculated step-down value. The percentage is based on a current slope factor value for the current Z coordinate that is calculated based on the array of Z values and the corresponding slope factor values.

In each iteration, the method then comprises decrementing the current Z coordinate by the last calculated step-down value; and determining an intersection of the surface with a horizontal plane at the current Z coordinate, thereby defining a tool path for the current Z coordinate.

In this way, the slope synchronized tool path application creates a plurality of tool paths that are each respectively spaced apart by the calculated step-downs values, to obtain the series of slope synchronized tool paths. The tool paths are slope synchronized as each step-down value is calculated based on the slope factor value for the current Z coordinate.

The computer implemented method further comprises the step of sending an output file, using the computer, to a numerically controlled incremental sheet forming (ISF) machine, which causes the numerically controlled incremental sheet forming (ISF) machine to direct an incremental sheet forming (ISF) tool along the series of slope synchronized tool paths that are spaced apart by the calculated step-down values, to incrementally form the contoured part.

In another version, there is provided a computer implemented method for generating a series of slope synchronized tool paths for incremental sheet forming (ISF) of an aircraft contoured part. The computer implemented method comprises the step of providing a computer system comprising a computer having a processor device, and comprising a modeling application and a slope synchronized tool path application, each implemented by a computer readable software program and each executed by the computer.

The computer implemented method further comprises the step of performing, with the computer and the modeling application, a surface discretization of a three-dimensional geometry of the aircraft contoured part, to produce a surface mesh of polygons that approximates the three-dimensional geometry of the aircraft contoured part. The computer implemented method further comprises the step of performing, with the computer and the slope synchronized tool path application, a slope synchronized tool path application execution.

The slope synchronized tool path application execution comprises the substep of defining a plurality of horizontal planes equally spaced apart at a plurality of Z values along a Z-axis, where each of the plurality of horizontal planes intersects the surface mesh of polygons that approximates the three-dimensional geometry of the aircraft contoured part. The slope synchronized tool path application execution further comprises the substep of determining, for each of the plurality of horizontal planes, a slope factor value based on a maximum slope angle of a series of slope angles where each slope angle is the slope angle of a polygon intersecting the horizontal plane. This defines a lookup table of Z values and slope factor values that correspond to the Z values.

The slope synchronized tool path application execution further comprises the substep of setting an initial Z coordinate corresponding to a starting portion of the surface mesh, as a current Z coordinate.

The slope synchronized tool path application execution then further comprises the substeps of iteratively calculating a series of calculated step-down values by calculating each step-down value as a sum of a minimum step-down value and a percentage of a maximum step-down value less the minimum step-down value, to obtain the calculated step-down value. The percentage is based on a current slope factor value for the current Z coordinate, that is calculated based on the lookup table of the Z values and the corresponding slope factor values.

In each iteration, the method then comprises decrementing the current Z coordinate by the last calculated step-down value; and determining an intersection of the surface mesh with a horizontal plane at the current Z coordinate. A collection of vectors in the horizontal plane is defined where each vector describes the intersection of the horizontal plane with a polygon. The collection of vectors are sorted to be in a tip-to-tail arrangement, to produce a tool path for the current Z coordinate.

In this way, the slope synchronized tool path application creates a plurality of tool paths that are each respectively spaced apart by the calculated step-down values, to obtain the series of slope synchronized tool paths.

The computer implemented method further comprises the step of sending an output file, using the computer, to a numerically controlled incremental sheet forming (ISF) machine, which causes the numerically controlled incremental sheet forming (ISF) machine to direct an incremental sheet forming (ISF) tool along the series of slope synchronized tool paths spaced apart by the calculated step-down values, to incrementally form the aircraft contoured part.

In another embodiment, there is provided a computer implemented system for generating a series of slope synchronized tool paths for incremental sheet forming (ISF) of a contoured part. The computer implemented system comprises a computer having a processor device and a modeling application implemented by a first computer readable software program and executed by the computer. The modeling application is adapted to perform a surface discretization of a three-dimensional geometry of the contoured part, to produce a surface mesh of polygons that approximates the three-dimensional geometry of the contoured part. The computer implemented system further comprises a slope synchronized tool path application implemented by a second computer readable software program and executed by the computer. The slope synchronized tool path application is adapted to define a plurality of equally spaced apart Z values along a Z-axis where, for each of the plurality of equally spaced apart Z values, a horizontal plane at that Z value intersects the surface mesh of polygons that approximates the three-dimensional geometry of the contoured part. The slope synchronized tool path application is further adapted to determine, for each of the plurality of equally spaced apart Z values, a slope factor value based on a maximum slope angle of a series of slope angles where each slope angle is the slope angle of a polygon intersecting the corresponding horizontal plane. This defines an array of Z values and corresponding slope factor values.

The slope synchronized tool path application is further adapted to set an initial Z coordinate corresponding to a starting portion of the surface mesh, as a current Z coordinate.

The slope synchronized tool path application is then adapted to iteratively calculate a series of step-down values by calculating each step-down value as a sum of a minimum step-down value and a percentage of a maximum step-down value less the minimum step-down value, to obtain the calculated step-down value. The percentage is based on a current slope factor value for the current Z coordinate, that is calculated based on the array of the Z values and the corresponding slope factor values.

In each iteration, the slope synchronized tool path application is further adapted to decrement the current Z coordinate by the calculated step-down value; and determine an intersection of the surface mesh with a horizontal plane at the current Z coordinate. The slope synchronized tool path application is configured to create a plurality of tool paths that are each respectively spaced apart by calculated step down values, to obtain the series of slope synchronized tool paths.

The computer sends an output file to a numerically controlled incremental sheet forming (ISF) machine. This causes the numerically controlled incremental sheet forming (ISF) machine to direct an incremental sheet forming (ISF) tool along the series of slope synchronized tool paths spaced apart by the calculated step-down values, to incrementally form the contoured part.

The features, functions, and advantages that have been discussed can be achieved independently in various versions of the disclosure or may be combined in yet other examples further details of which can be seen with reference to the following description and drawings, as long as they stay within the scope of the appended claims.

## BRIEF DESCRIPTION OF THE DRAWINGS

The disclosure can be better understood with reference to the following detailed description taken in conjunction with the accompanying drawings which illustrate preferred and exemplary versions, but which are not necessarily drawn to scale, wherein:

FIG. 1A is an illustration of a flow diagram showing an exemplary version of a computer implemented method of the disclosure;

FIG. 1B is an illustration of a flow diagram showing another exemplary version of a computer implemented method of the disclosure;

FIG. 2A is an illustration of a functional block diagram showing an exemplary computer implemented system of the disclosure;

FIG. 2B is an illustration of a functional block diagram showing an exemplary computer system that may be used with the computer implemented methods and the computer implemented system of the disclosure;

FIG. 3 is an illustration of a bottom perspective view of a model of a part and an offset surface;

FIG. 4 is an illustration of a top perspective view of a surface mesh of a model of a part;

FIG. 5A is an illustration of an isometric view of a series of known constant step-down tool paths for a first contoured part;

FIG. 5B is an illustration of an isometric view of a series of slope synchronized tool paths of the disclosure for a first contoured part;

FIG. 6A is an illustration of a top view of the known constant step-down tool paths of FIG. 5A;

FIG. 6B is an illustration of a top view of the slope synchronized tool paths of FIG. 5B;

FIG. 7A is an illustration of a top view of an enlarged portion of the known constant step-down tool paths of FIG. 6A;

FIG. 7B is an illustration of a top view of an enlarged portion of the slope synchronized tool paths of FIG. 6B;

FIG. 8A is an illustration of a front view of the known constant step-down tool paths of FIG. 5A;

FIG. 8B is an illustration of a front view of the slope synchronized tool paths of FIG. 5B;

FIG. 9A is an illustration of an isometric view of a known constant step-down tool paths for a second contoured part;

FIG. 9B is an illustration of an isometric view of a slope synchronized tool paths of the disclosure for a second contoured part;

FIG. 10A is an illustration of an isometric view of a known constant step-down tool paths for a third contoured part;

FIG. 10B is an illustration of an isometric view of a slope synchronized tool paths of the disclosure for a third contoured part;

FIG. 11A is an illustration of an isometric view of a known constant step-down tool paths for a fourth contoured part;

FIG. 11B is an illustration of an isometric view of a slope synchronized tool paths of the disclosure for a fourth contoured part;

FIG. 12 is an illustration of a front view of an exemplary incremental sheet forming (ISF) tool that may be used with the computer implemented methods and the computer implemented system of the disclosure;

FIG. 13 is an illustration of a partial perspective view of an exemplary numerically controlled incremental sheet forming (ISF) machine with an incremental sheet forming (ISF) tool forming a contoured part formed using one of the computer implemented methods and the computer implemented system of the disclosure;

FIG. 14 is an illustration of a perspective view of an air vehicle incorporating a contoured part formed using one of the computer implemented methods and the computer implemented system of the disclosure;

FIG. 15 is a flow diagram of a version of an aircraft manufacturing and service method; and

FIG. 16 is an illustration of a functional block diagram of a version of an aircraft.

The Figures shown in this disclosure represent various aspects of the versions presented, and only differences will be discussed in detail.

DETAILED DESCRIPTION

Disclosed embodiments will now be described more fully hereinafter with reference to the accompanying drawings. Other embodiments can also be envisaged within the scope of the appended claims.

Now referring to the Figures, FIG. 1A is an illustration of a flow diagram showing a computer implemented method 10 of the disclosure with method steps 12-30. There is provided the computer implemented method 10 for generating a series of slope synchronized tool paths 32 for incremental sheet forming (ISF) 34 of a contoured part 36.

FIG. 1B is an illustration of a flow diagram showing an exemplary version of another computer implemented method 40 of the disclosure with method steps 42-58. In another version of the disclosure, there is provided the computer implemented method 40 for generating a series of slope synchronized tool paths 32 for ISF 34 of an aircraft contoured part 38.

The blocks in FIGS. 1A-1B represent operations and/or portions thereof, or elements, and lines connecting the various blocks do not imply any particular order or dependency of the operations or portions thereof, or elements. FIGS. 1A-1B and the disclosure of the steps of the computer implemented method 10 and the computer implemented method 40, respectively, set forth herein, should not be interpreted as necessarily determining a sequence in which the steps are to be performed. Rather, although one illustrative order is indicated, it is to be understood that the sequence of the steps may be modified when appropriate. Accordingly, certain operations may be performed in a different order or simultaneously.

As discussed with the computer implemented method 10 and the computer implemented method 40, respectively, of FIGS. 1A-1B, FIG. 2A is an illustration of a functional block diagram showing an exemplary computer implemented system 60 of the disclosure, and FIG. 2B is an illustration of a functional block diagram showing a computer system 62 that is used with the computer implemented method 10, the computer implemented method 40, and the computer implemented system 60 of the disclosure. In another version of the disclosure, as shown in FIG. 2A, there is provided the computer implemented system 60 for generating a series of slope synchronized tool paths 32 for ISF 34 of a contoured part 36, such as an aircraft contoured part 38.

As shown in FIG. 1A, the computer implemented method 10 comprises the step of providing 12 the computer system 62. As shown in FIGS. 2A-2B, the computer system 62 comprises one or more computers 64 having one or more processor devices 66. The computer further comprises an operating system 68.

As shown in FIGS. 2A-2B, the computer system 62 further comprises a modeling application 70 implemented by a computer readable software program 72, such as a first computer readable software program 72a, and executed by the computer 64, to perform a modeling application execution 71. The computer readable software program 72, such as the first computer readable software program 72a, used to implement the modeling application 70 may comprise a computer aided design (CAD) program, a computer aided manufacturing (CAM) program, a computer aided engineering (CAE) program, a tool path manufacturing workbench program, or another suitable computer readable software program 72, or a combination thereof.

The modeling application 70 is adapted to perform, and performs, a surface discretization 74, for example, a surface tessellation 76, also referred to as a surface mesh 82, of a three-dimensional geometry 78, of a model 79 of the part 35, such as the contoured part 36 to produce a surface 80. The surface 80 may comprise the surface mesh 82 of a plurality or collection of polygons 84 that approximates or represents the three-dimensional geometry 78 of the model 79 of the contoured part 36. As shown in FIG. 2A, the plurality, or collection, of polygons 84 may comprise one or more of, triangles 84a, quadrilaterals 84b, pentagons 84c, hexagons 84d, another suitable polygon 84 or polygonal shape, or a combination of two or more of the polygons 84, that approximates or represents the three-dimensional geometry 78 of the contoured part 36. The surface 80, such as in the form of the surface mesh 82, has extreme ends 86 (see FIG. 4), such as a starting portion 88a, for example, a top-most portion or another portion of the surface 80, and an ending portion 88b, for example, a bottom-most portion or another portion of the surface 80. The modeling application 70 may generate, or be adapted to, or configured to, generate, an offset surface 90 spaced a constant offset distance 92 from the surface 80, such as the surface mesh 82, of the three-dimensional geometry 78 of the model 79 of the part 35, such as the contoured part 36. The ISF 34 may use a numerically controlled incremental sheet forming (ISF) machine 94 with an incremental sheet forming (ISF) tool 96, or ISF stylus, having an incremental sheet forming (ISF) tool tip 98. As shown in FIG. 12, the ISF tool tip 98 has an incremental sheet forming (ISF) tool tip radius 100. The offset surface 90 may be generated to take into account the ISF tool tip radius 100 and to take into account a blank sheet thickness 93 of a blank sheet, such as a blank metal sheet, used in the numerically controlled ISF machine 94, and the offset surface 90 may be formed to make tool paths 102. As used here, "tool paths" means the paths or geometry that a tool, such as an ISF tool 96, or a forming tool stylus, must follow to form a designed part.

An offset surface 90 is generated from the surface 80 of the part 35, such as the contoured part 36 (see FIG. 3). The offset surface 90 is calculated such that it maintains a constant offset distance 92 from the surface 80. The tool paths 102 are generated from the offset surface 90.

As shown in FIG. 1A, the computer implemented method 10 further comprises the step of performing 14, with the computer 64 and a slope synchronized tool path application 110, a slope synchronized tool path application execution 112. The slope synchronized tool path application 110 is implemented by a computer readable software program 72, such as a second computer readable software program 72b, and is executed by the computer 64. The slope synchronized tool path application 110 performs, and is adapted to perform, the slope synchronized tool path application execution 112.

As shown in FIG. 1A, the slope synchronized tool path application execution 112 comprises the substep of defining 16 a plurality of Z values 114 that are equally spaced apart along a Z-axis 116, for example, a plurality of equally spaced apart Z values 114a. For each of the plurality of equally spaced apart Z values 114a, a horizontal plane intersects the surface 80, such as the surface mesh 82 that approximates or represents the three-dimensional geometry 78 of the contoured part 36. The plurality of horizontal planes 118 may be a plurality of level planes 120, or x-y planes.

As shown in FIG. 1A, the slope synchronized tool path application execution 112 further comprises the substep of determining 18, for each of the plurality of equally spaced apart Z values 114a, a slope factor value 122 based on a maximal Z-axis component 126b of a normal vector 128 (see FIG. 2A), for the surface 80 intersecting each of the horizontal planes 118 corresponding to the plurality of equally spaced apart Z values 114a. Put another way, each slope factor value is based on a maximum slope angle of the surface 80 along a line of intersection of each horizontal plane 118 with the surface 80. A minimal Z-axis component 126a may be defined for each Z value as a minimum slope angle of the surface 80 along the line of intersection of each horizontal plane 118 with the surface 80.

An array 130, or a function 132, of Z values 114 and slope factor values 124 that correspond to the Z values 114 may be defined. The Z values 114 and the corresponding slope factor values 124, that is, the corresponding slope factor values 124a, are defined and stored in the array 130, or the function 132. The array 130 may comprise a lookup table 134 comprised of the Z values 114 and the corresponding slope factor values 124a. As used here, "normal vector" means the normalized cross product of any two edges of a planar polygon.

As used herein, the term "array" means a systematic arrangement of similar objects, such as values, usually in rows and/or columns, and as disclosed herein, includes Z values 114 and slope factor values 124 that correspond to the Z values, respectively.

As used herein, the term "lookup table" means an array that can store multiple key-value pairs. The lookup table is used by searching for a particular key in the table and retrieving the value associated with that key, if it has been stored in the table. The lookup table may be manually populated when a software program is written, or the software program may populate the table with values as it calculates them. When the values are needed later, the software program can look them up, saving computer and processing resources.

As used herein, the term "function" means a process that associates to each element of a set X, a single element of a set *Y.*

As shown in FIG. 2A, the slope synchronized tool path application execution 112 further comprises the substep of setting 20 a Z coordinate 136 as a current Z coordinate 136b, such as an initial Z coordinate 136a corresponding to the starting portion 88a of the surface 80 such as the surface mesh 82 (see FIGS. 2A, 4), . In this way, the Z value 114 is set to be a maximum Z coordinate 136c of the surface 80, such as the surface mesh 82, or such as the offset surface 90 (see FIG. 3).

As shown in FIG. 2A, the slope synchronized tool path application execution 112 then iteratively comprises the substeps in an iterative loop 138 of calculating 22 a calculated step-down value 146 as a sum of a minimum step-down value 144 and a percentage 142a of a maximum step-down value 142 less the minimum step-down value 144 (i.e., a percentage 142a of the difference between the maximum step-down value 142 and the minimum step-down value 144), to obtain the calculated step-down value 146, where the percentage 142a is based on a current slope factor value 122a for the current Z coordinate 136b. The current slope factor value 122a is calculated based on the array 130 of the Z values 114 and the corresponding slope factor values 124. Hence each calculated step-down value 146 is proportional to the slope factor value 122a for the corresponding Z coordinate 136.

For each iteration, the slope synchronized tool path application execution 112 then decrements 24 the current Z coordinate 136b by the calculated step-down value 146; and determines 26 an intersection 150 of the surface 80 with a horizontal plane 118a at the current Z coordinate 136b, to define a collection 153 of vectors 154 in the horizontal plane 118a, to produce a contour loop 158 that corresponds to a contour tool path loop 160 (see FIGS. 2A, 6B), for the current Z coordinate 136b.

In this way, the slope synchronized tool path application 110 creates a plurality of contour tool path loops 160a (see FIGS. 2A, 5B, 6B, 7B, 8B, 9B, 10B, 11B) that are each respectively spaced apart by the calculated step-down values 146 (see FIG. 2A): the plurality of contour tool path loops 160a form the series of slope synchronized tool paths 32.

Each calculated step-down value 146 may be constrained to lie within a maximum step-down value 142 and a minimum step-down value 144 which may be set by a user of the modeling application 70. In some examples, the user may select a maximum step-down value 142 of 8.0 mm and a minimum step-down value 144 of 0.5 mm to incrementally sheet form a part with bounding dimensions of 300 mm wide by 300 mm long and 200 mm deep, with an initial blank sheet thickness of 1 mm, using a 30 mm diameter stylus tool.

As used herein, the term "slope factor value" means a maximum slope angle of the surface 80 along a line of intersection of a horizontal plane 118 with a particular Z coordinate 136 with the surface 80; or a maximal Z-axis component of a normal vector of the surface 80 intersecting each of the plurality of equally spaced apart Z values 114, or each polygon 84 intersected by each horizontal plane 118, or intersected by each level plane 120. As used herein, the term "current slope factor value" means a given slope factor value for a current Z coordinate 136.

As used herein, "Z value" means a value along a Z-axis. As used herein, "Z coordinate" means a coordinate whose value is determined by measuring parallel to a Z-axis. As used herein, "current Z coordinate" means a Z coordinate at the current point in the slope synchronized tool path application execution.

As used here, "step-down value" means a ΔZ distance, for example, a vertical distance, from one tool path 160 to the next subsequent tool path 160; or from one contour loop or contour tool path loop, to the next subsequent contour loop or contour tool path loop.

As used herein, "slope synchronized tool path" means a Z-level tool path with a calculated step down value that is slope synchronized and so not necessarily constant or fixed, but varies in distance between tool paths 160 depending on the slope of the part 35, such as the contoured part 36, at that Z coordinate 136.

With the slope synchronized tool path application execution 112 of the slope synchronized tool path application 110, all of the polygons 84 that intersect the horizontal plane 118a, or the level plane 120a, i.e., x-y plane, with the current Z coordinate 136b, are determined. The intersection 150 of each of the polygons 84 with the horizontal plane 118a, or the level plane 120a, is processed to produce the collection 153 of vectors 154 in the horizontal plane 118, or the level plane 120a. Each vector 154 describes the intersection of the horizontal plane 118 with that polygon 84. The step of determining 26 the intersection 150 of the surface 80, such as the surface mesh 82, with the horizontal plane 118a at the current Z coordinate 136b, to define the collection 153 of vectors 154 in the horizontal plane 118a, may further comprise, sorting the collection 153 of vectors 154 in a tip-to-tail arrangement 156, to produce the contour loop 158, such as the contour tool path loop (tool path) 160, for the current Z coordinate 136b.

Another way of achieving the slope synchronized tool path application execution 112 of the slope synchronized tool path application 110 is calculating a minimum wall angle 162 on a current contour loop 158a and using the minimum wall angle 162 that is calculated to adjust the calculated step-down value 146 on a next subsequent contour loop 158b (see FIG. 2A). A wall angle 164 is the angle or slope of the surface 80 or polygon 84 with respect to the horizontal plane 118a, or the level plane 120a, i.e. the x-y plane. A minimum wall angle 162 is the smallest or most minimum of the wall angles 164 along that current contour loop 158a (i.e. line of intersection of the horizontal plane 118a with the surface 80).

The step of calculating 22 the calculated step-down value 146 may further comprise, calculating the current slope factor value 122a for the current Z coordinate 136b using interpolation 166, when the current Z coordinate 136b is between two adjacent Z values 114b defined in the array 130. The slope factor value 122 may be calculated from the array 130 of Z values 114 that are stored in the array 130, via interpolation 166, in order to find a Z value 114 which corresponds to the current Z coordinate 136b. Interpolation 166 may be used when the array 130 or the lookup table 134 does not have the exact Z value 114 listed in the array 130 or lookup table 134 of the Z values 114 and the slope factor values 124 corresponding to the Z values 114.

As used herein, the term "interpolation" means a method of estimating new data points within a range of a discrete set of known data points, for example, between two adjacent Z values 114b in the array 130.

The step of calculating 22 may further comprise, calculating the calculated step-down value 146, i.e., $\Delta Z$, as the minimum step-down value 144 plus (the maximum step-down value 142 minus the minimum step-down value 144) multiplied by a quantity of 1 (one) minus the current slope factor value 122a, to obtain the calculated step-down value 146, that is, $\Delta Z$ = minimum step-down value + (maximum step-down value - minimum step-down value) x (1.0 - slope factor value).

As shown in FIG. 1A, the computer implemented method 10 further comprises the step of sending 28 an output file 168, using the computer 64, to a numerically controlled incremental sheet forming (ISF) machine 94. This causes the numerically controlled ISF machine 94 to direct an incremental sheet forming (ISF) tool 96 along the series of slope synchronized tool paths 32 comprising the plurality of contour tool path loops 160a spaced apart by the calculated step-down values 146, to incrementally form the contoured part 36. The output file 168 may comprise an incremental sheet forming (ISF) command file 168a to provide commands or instructions to the numerically controlled ISF machine 94, or may comprise another suitable type of output file 168.

As shown in FIG. 1A and with reference to FIGS. 2-4, the computer implemented method 10 may further comprise prior to the step of performing 14 the slope synchronized tool path application execution 112, the step of performing 30, with the computer 64 and the modeling application 70 , the surface discretization 74 of the three-dimensional geometry 78 of the part 35, such as the contoured part 36, to produce the surface 80 comprising the surface mesh 82, of polygons 84 that approximates or represents the three-dimensional geometry 78 of the contoured part 36. The step of performing 30 the surface discretization 74 of the three-dimensional geometry 78 of the contoured part 36, further comprises, performing 30 the surface discretization 74, to produce the surface mesh 82 of polygons 84 comprising one or more of, triangles 84a, quadrilaterals 84b, pentagons 84c, hexagons 84d, another suitable polygon 84, or a combination of the polygons 84, for example, a combination of two or more of the triangles 84a, quadrilaterals 84b, pentagons 84c, hexagons 84d, or other suitable polygons 84, that approximates or represents the three-dimensional geometry 78 of the part 35, such as the contoured part 36. As used herein, "surface discretization" means an approximation of a surface with a collection of simpler geometries, for example, triangles, quadrilaterals, or other polygons, and the process of transferring continuous functions, models, variables, and equations of surfaces into discrete counterparts.

Now referring to FIG. 1B and with reference to FIGS. 2-4, FIG. 1B shows the computer implemented method 40 for generating a series of slope synchronized tool paths 32 for ISF 34 of an aircraft contoured part 38. The computer implemented method 40 comprises the step of providing 42 a computer system 62 comprising a computer 64 having a processor device 66, and comprising a modeling application 70 and a slope synchronized tool path application 110. The modeling application 70 is implemented by a computer readable software program 72, such as a first computer readable software program 72a, and the modeling application 70 is executed by the computer 64. The slope synchronized tool path application 110 is implemented by a computer readable software program 72, such as a second computer readable software program 72b, and the slope synchronized tool path application 110 is executed by the computer 64.

The computer implemented method 40 further comprises the step of performing 44, with the computer 64 and the modeling application 70, a surface discretization 74 of a three-dimensional geometry 78 of the part 35, such as the aircraft contoured part 38, to produce a surface mesh 82 of polygons 84 that approximates or represents the three-dimensional geometry 78 of the aircraft contoured part 38. The plurality, or collection, of polygons 84 may comprise one or more of, triangles 84a, quadrilaterals 84b, pentagons 84c, hexagons 84d, another suitable polygon 84 or polygonal shapes, or a combination of the polygons 84, that approximates or represents the three-dimensional geometry 78 of the aircraft contoured part 38. As shown in FIG. 4, the surface mesh 82, has extreme ends 86, such as the starting portion 88a and the ending portion 88b.

The step of performing 44 the surface discretization 74 of the three-dimensional geometry 78 of the aircraft contoured part 38 may further comprise, using the modeling application 70 to generate a surface 80. The surface is an offset surface 90 spaced a constant offset distance 92 from the surface 80, like that shown in FIG. 3 and shown as a surface mesh 82 in FIG. 4. The offset surface 90 and surface mesh 82 approximates or represents the three-dimensional geometry 78 of the aircraft contoured part 38, to account for an ISF tool tip radius 100 of an ISF tool tip 98 of the ISF tool 96 (see FIG. 12), and to account for a blank sheet thickness 93.

As shown in FIG. 1B, the computer implemented method 40 further comprises the step of performing 46, with the computer 64 and the slope synchronized tool path application 110, a slope synchronized tool path application execution 112. The slope synchronized tool path application execution 112 comprises the substep of defining 48 a plurality of horizontal planes 118 equally spaced apart at a plurality of Z values 114 along a Z-axis 116. Each of the plurality of horizontal planes 118 intersects the surface mesh 82 of polygons 84 that approximates or represents the three-dimensional geometry 78 of the aircraft contoured part 38.

The slope synchronized tool path application execution 112 further comprises the substep of determining 50, for each of the plurality of horizontal planes 118, a slope factor value 124 based on a maximum slope angle of a series of slope angles where each slope angle is the slope angle of a polygon 84 intersecting the horizontal plane 118; or a maximal Z-axis component 126b of a normal vector 128 for each polygon 84 intersecting each of the plurality of horizontal planes 118. A lookup table 134 (see FIG. 2A) of Z values 114 (see FIG. 2A) and slope factor values 124 (see FIG. 2A) that correspond to the Z values 114 is defined.

The slope synchronized tool path application execution 112 further comprises the substep of setting 52 an initial Z coordinate 136a corresponding to a starting portion 88a of the surface mesh 82, as a current Z coordinate 136b.

The slope synchronized tool path application execution 112 then iteratively comprises the substep of calculating 54 a calculated step-down value 146 as a percentage 142a of a maximum step-down value 142 to obtain the calculated step-down value 146, the percentage 142a based on a current slope factor value 124 for the current Z coordinate 136b, that is calculated based on the lookup table 134 of the Z values 114 and the corresponding slope factor values 124 Each iteration also comprises the substep of decrementing 56 the current Z coordinate 136b by the calculated step-down value 146; and the substep of determining 57 an intersection 150 of the surface mesh 82 with a current horizontal plane 118b at the current Z coordinate 136b, to define a collection 153 of vectors 154 in the current horizontal plane 118b. The collection 153 of vectors 154 are sorted to be in a tip-to-tail arrangement 156 to produce a contour loop 158, such as a contour tool path loop 160, for the current Z coordinate 136b. The slope synchronized tool path application 110 thereby creates a plurality of contour tool path loops 160a that are each respectively spaced apart by the calculated step-down values 146 (see FIG. 2A), to obtain the series of slope synchronized tool paths 32.

The substep of calculating 54 the calculated step-down value 146 may further comprise calculating the current slope factor value 124 for the current Z coordinate 136b using interpolation 166, when the current Z coordinate 136b is between two adjacent Z values 114b of the Z values 114 defined or stored in the lookup table 134.

The substep of calculating 54 the step-down value 146, i.e., $\Delta Z$, as the minimum step-down value 144 plus (the maximum step-down value 142 minus the minimum step-down value 144) multiplied by a quantity of 1 (one) minus the current slope factor value 124, to obtain the calculated step-down value 146, that is, ($\Delta Z$ = minimum step-down value + (maximum step-down value - minimum step-down value) x (1.0 - slope factor value)). The substep of calculating 54 the step-down value 146 may further comprise, adjusting the calculated step-down value 146 to be equal to a minimum step-down value 144 if the calculated step-down value 146 is less than the minimum step down value 144.

As shown in FIG. 1B, the computer implemented method 40 further comprises the step of sending 58 an output file 168, using the computer 64, to a numerically controlled ISF machine 94, which causes the numerically controlled ISF machine 94 to direct an ISF tool 96 along the series of slope synchronized tool paths 32 comprising the plurality of contour tool path loops 160a spaced apart by the calculated step-down values 146, to incrementally form the aircraft contoured part 38.

FIG. 2A shows the computer implemented system 60 for generating a series of slope synchronized tool paths 32 for ISF 34 of a contoured part 36. The contoured part 36 may comprise an aircraft contoured part 38 for use in an aircraft 250a.

The computer implemented system 60 comprises a computer 64 having a processor device 66 and a modeling application 70 implemented by a computer readable software program 72, such as a first computer readable software program 72a, and executed by the computer 64.

The modeling application 70 is adapted or configured to perform, and performs, a surface discretization 74 of a three-dimensional geometry 78 of the contoured part 36, such as the aircraft contoured part 38, to produce a surface mesh 82 of polygons 84 that approximates or represents the three-dimensional geometry 78 of the contoured part 36. The plurality, or collection, of polygons may comprise one or more of, triangles 84a, quadrilaterals 84b, pentagons 84c, hexagons 84d, another suitable polygon 84 or polygonal shape, or a combination of the polygons 84, that approximates or represents the three-dimensional geometry 78 of the aircraft contoured part 38. As shown in FIG. 4, the surface mesh 82, has extreme ends 86, such as a starting portion 88a, for example, a top-most portion or another portion of the surface mesh 82, and an ending portion 88b, for example, a bottom-most portion or another portion of the surface mesh 82.

The modeling application 70 preferably generates an offset surface 90 spaced a constant offset distance 92 from the surface 80 (see FIG. 3), such as the surface mesh 82 of FIG. 4, that approximates or represents the three-dimensional geometry 78 of the part 35. The part 35 may be a contoured part 36, for example an aircraft contoured part 38. The offset surface 90 may account for an incremental sheet forming (ISF) tool tip radius 100 of an incremental sheet forming (ISF) tool tip 98 (see FIG. 12), and to account for the blank sheet thickness 93.

The computer implemented system 60 further comprises a slope synchronized tool path application 110 implemented by a computer readable software program 72, such as a second computer readable software program 72b,

and executed by the computer 64.

The slope synchronized tool path application 110 is adapted to, or configured to, define, and defines a plurality of equally spaced apart Z values 114a along a Z-axis 116, where each of the plurality of equally spaced apart Z values 114a intersects the surface mesh 82 of polygons 84 that approximates or represents the three-dimensional geometry 78 of the contoured part 36, such as the aircraft contoured part 38.

The slope synchronized tool path application 110 is further adapted to, or configured to, determine, and determines, for each of the plurality of equally spaced apart Z values 114a, a slope factor value 124 based on a maximal Z-axis component 126b of a normal vector 128, for each polygon 84 intersecting each of the plurality of equally spaced apart Z values 114a, to define an array 130 or a function 132, of Z values 114 and slope factor values 124 that correspond to the Z values 114, respectively. The array 130 may be in the form of a lookup table 134 of the Z values 114 and the slope factor values 124 corresponding to the Z values 114, respectively. FIG. 2A further shows a slope 121 used for the slope factor value 124. The slope 121 is the minimal slope of the offset surface 90 at the Z coordinate 136.

The slope synchronized tool path application 110 is further adapted to, or configured to, set, and sets, an initial Z coordinate 136a corresponding to a starting portion 88a of the surface mesh 82, as a current Z coordinate 136b.

The slope synchronized tool path application 110 is then iteratively: adapted to, or configured to, calculate, and calculates, a calculated step-down value 146 as a percentage 142a of a maximum step-down value 142 to obtain the calculated step-down value 146, the percentage 142a based on a current slope factor value 124 for the current Z coordinate 136b, that is calculated based on the array 130 of the Z values 114 and the slope factor values 124 that correspond to the Z values 114, respectively; adapted to, or configured to, decrement, and decrements, the current Z coordinate 136b by the calculated step-down value 146; and adapted to, or configured to, determine, and determines, an intersection 150 of the surface mesh 82 with a horizontal plane 118a, or a level plane 120a, at the current Z coordinate 136b, to define a collection 153 of vectors 154 in the horizontal plane 118a, to produce a contour loop 158, such as a contour tool path loop 160, for the current Z coordinate 136b, wherein the slope synchronized tool path application 110 creates a plurality of contour tool path loops 160a that are each respectively spaced apart by the calculated step-down values 146, to obtain the series of slope synchronized tool paths 32.

The current slope factor value 122a for the current Z coordinate 136b may be calculated using interpolation 166, when the current Z coordinate 136b is between two adjacent Z values 114b of the Z values 114 defined in the array 130 or the lookup table 134.

The calculated step-down value 146, i.e., $\Delta Z$, is preferably calculated as the minimum step-down value 144 plus (the maximum step-down value 142 minus the minimum step-down value 144) multiplied by a quantity of 1 (one) minus the current slope factor value 124, to obtain the calculated step-down value 146, that is, $\Delta Z$ = minimum step-down value + (maximum step-down value - minimum step-down value) x (1.0 - slope factor value), and further wherein the calculated step-down value 146 is adjusted to be equal to the minimum step-down value 144, if the calculated step-down value 146 is less than the minimum step-down value 144. The collection 153 of vectors 154 is preferably sorted in a tip-to-tail arrangement 156 to produce the contour tool path loop 160 for the current Z coordinate 136b.

The computer 64 sends an output file 168 to a numerically controlled ISF machine 94. This causes the numerically controlled ISF machine 94 to direct an ISF tool 96 along the series of slope synchronized tool paths 32 comprising the plurality of contour tool path loops 160a spaced apart by the calculated step-down values 146, to incrementally form the contoured part 36, such as the aircraft contoured part 38. The output file 168 may comprise an incremental sheet forming (ISF) command file 168a, which may be in the format of G-code, or another suitable output file 168.

FIG. 2B is an illustration of a functional block diagram showing an exemplary computer system 62 that may be used with the computer implemented method 10, the computer implemented method 40, and the computer implemented system 60 of the disclosure.

The computer system 62 comprises a computer assembly 169 comprising one or more computers 64, which may include one or more processor devices 66, and an operating system 68. The computer assembly 169 of the computer system 62 further comprises storage devices 170, such as a computer memory 172 and a persistent storage 174. The computer memory 172 may comprise one or more of a random access memory (RAM), including dynamic and/or static RAM, on-chip or off-chip cache memory, or other suitable computer memory 172. The persistent storage 174 may comprise one or more of a flash memory, a hard drive, Read-Only Memory (ROM), magnetic storage devices such as hard disks, floppy disk drives, and rewritable magnetic tape, rewritable optical disk drives and/or media, non-volatile random access memory (NVRAM), or other suitable persistent storage 174.

The computer assembly 169 of the computer system 62 may further comprise one or more computer communications device(s) 176, such as one or more network communications device(s) 178, for linking the computer implemented system 60, for example, to one or more separate systems. The one or more network communications device(s) 178 may comprise network links between various computers and devices connected together within a network data processing system via wire connections, wireless communication links, fiber optic cables, or other suitable network connections, and that may connect to a network, a server, the Internet, or another system or device.

The one or more computer communications device(s) 176 may be configured to provide for communications in accordance with any of a number of wired or wireless communication standards. The one or more computer(s) 64, or one or more processor device(s) 66, may also be configured to facilitate communications via the one or more computer communications device(s) 176, for example, controlling hardware included within the one or more computer communications device(s) 176). The one or more computer communications device(s) 176 may include, for example, one or more antennas, a transmitter, a receiver, a transceiver and/or supporting hardware, including, for example, a processor for enabling communications.

The computer assembly of the computer system 62 further comprises one or more input/output unit(s) 180, a display 182, and a power supply 184. The one or more input/output unit(s) 180 provide for the input and output of data with other devices connected to the computer system 62, such as computer interfaces. The one or more input/output unit(s) 180 may comprise such devices as a keyboard, a mouse, a joystick, or other input/output devices. For example, the one or more input/output unit(s) 180 may provide a connection for user input though a keyboard and mouse, or may send output to a printer or other device. The display 182 provides the means to display data or information to a user, one or more separate automated systems, automated computer programs, automated apparatuses, or automated devices, or another suitable separate system, program, or device. The power supply 184 of the computer system 62 may comprise batteries, electricity, or other power supply elements.

The computer assembly 169 of the computer system 62 further comprises a data bus 186 that transfers data between the one or more computers 64, the storage devices 170, the one or more computer communications devices 176, the one or more input/output units 180, and the display 182. The data bus 186 may include hardware components such as wires, optical fibers, and other hardware devices, and may include software components such as communications protocols or other software devices.

The computer system 62 further comprises a computer program product 188 that may be loaded into the computer assembly 169 of the computer system 62, via a loading mechanism 190, or other suitable mechanism. The computer program product 188 may comprise a system logic 192.

The system logic 192 comprises computer readable software programs 72, including the first computer readable software program 72a, that implements the modeling application 70, and the second computer readable software program 72b, that implements the slope synchronized tool path application 110. The one or more computer(s) 64 may be configured to control, and control, one or more functions of one or more elements of the computer implemented system 60 through computer program instructions, such as the computer readable software programs 72 stored on the computer memory 172, accessible to the one or more computer(s) 64, and/or the one or more processor device(s) 66. The slope synchronized tool path application 110 implements a slope synchronized tool path algorithm 198.

The computer program product 188 further comprises a computer readable medium 194. The computer readable medium 194 may comprise a computer readable storage media 196, or another suitable computer readable medium 194.

The system logic 192, such as the computer readable software programs 72, including the modeling application 70 and the slope synchronized tool path application 110, may be stored in, and retrieved from, the computer readable storage media 196 and loaded into the computer assembly 169, and into the one or more computer(s) 64, the one or more processor device(s) 66, or other programmable device, to configure and direct the one or more computer(s) 64, the one or more processor device(s) 66, or other programmable device to execute operations to be performed on, or by, the one or more computer(s) 64, the one or more processor device(s) 66, or other programmable device, and to function in a particular way. Execution of the system logic 192, such as the computer readable software programs 72, including the modeling application 70 and the slope synchronized tool path application 110, may execute the computer implemented system 60, the computer implemented method 10, and the computer implemented method 40, such that the system logic 192, such as the computer readable software programs 72, including the modeling application 70 and the slope synchronized tool path application 110, executed by the one or more computer(s) 64, one or more processor device(s) 66, or other programmable device, provide operations for implementing the functions disclosed herein.

FIG. 3 is an illustration of a bottom perspective view of a model 79 of a part 35, such as a contoured part 36, and an offset surface 90. The modeling application 70 may generate, or be adapted to, or configured to, generate, the offset surface 90 spaced a constant offset distance 92 from the surface 80 of the three-dimensional geometry 78, of the model 79 of the part 35, such as the contoured part 36. FIG. 3 shows the offset surface 90, which is generated from the surface 80 of the part 35, such as the contoured part 36, with the constant offset distance 92 between the surface 80 and the offset surface 90.

FIG. 4 is an illustration of a top perspective view of the surface mesh 82 of the model 79 of the part 35, such as the contoured part 36. The modeling application 70 is adapted to perform, and performs, the surface discretization 74, for example, the surface tessellation 76, also referred to as the surface mesh 82, of the surface 80 of the model 79 of the contoured part 36. FIG. 4 shows the surface mesh 82 comprising the plurality, or collection, of polygons 84, in the form of quadrilaterals 84b, that approximate or represent the three-dimensional geometry 78 of the model 79 of the contoured part 36. The surface 80, such as in the form of the surface mesh 82, has extreme ends 86, such as a starting portion 88a and an ending portion 88b. FIG. 4 further shows a three-dimensional coordinate axis system 200 with an X-axis 202, a Y-axis 204, and the Z-axis 116.

FIG. 5A is an illustration of an isometric view of a known series of constant step-down tool paths 206, such as a first constant step-down tool path 206a, for a contoured part 36, such as a first contoured part 36a. The contoured part 36, such as the first contoured part 36a, has a three-dimensional raised C-shape 209. FIG. 5A shows the known constant step-down tool paths 206, such as the first constant step-down tool path 206a, with a plurality of constant height step-downs 208, or fixed height step-downs, such as a plurality of first constant step-downs 208a, between a plurality of tool path loops 207. Each constant step-down 208, such as each first constant step-down 208a, may have, for example, a 5 mm distance between two adjacent tool path loops 207. FIG. 5A further shows the ISF tool 96 with the ISF tool tip 98 and shows the three-dimensional coordinate axis system 200 with the X-axis 202, the Y-axis 204, and the Z-axis 116. The known constant step-down tool paths 206, such as the first constant step-down tool path 206a, distributes the action of this tool path uniformly in a Z-direction.

FIG. 5B is an illustration of an isometric view of a series of slope synchronized tool paths 32, such as a first slope synchronized tool path 32a, of the disclosure, for a contoured part 36, such as a first contoured part 36a. The contoured part 36, such as the first contoured part 36a, has the three-dimensional raised C-shape 209. FIG. 5B shows the slope synchronized tool paths 32, such as the first slope synchronized tool path 32a, with a plurality of step-downs 140, such as a plurality of first step-downs 140a, between a plurality of contour tool path loops 160a. Preferably, the plurality of step-downs 140, such as the plurality of first step-downs 140a, comprise slope synchronized step-downs 148 having the calculated step-down values 146. The slope synchronized step-downs 148 are spaced a smaller distance apart in their Z coordinates 136 at or near the starting portion 88a of the surface 80 of the contoured part 36 where the wall angle is at its shallowest and hence the slope factor values 124 are at their largest. The slope synchronized step-downs 148 are spaced a greater distance apart in their Z coordinates 136 at or near the ending portion 88b and along a body portion 210 of the contoured part 36 where the wall angle is at its steepest and hence the slope factor values 124 are at their smallest. The plurality of step-downs 140, such as the plurality of first step-downs 140a, for example the slope synchronized step-downs 148, may preferably each have a separation between the Z coordinates 136 of adjacent contour tool path loops 160a in a range of 0.5 mm to 10.0 mm.

FIG. 5B further shows the ISF tool 96 with the ISF tool tip 98 that follows the series of slope synchronized tool paths 32, such as the first slope synchronized tool path 32a. FIG. 5B further shows the three-dimensional coordinate axis system 200 with the X-axis 202, the Y-axis 204, and the Z-axis 116. The ISF tool 96 follows each slope synchronized tool path 32, such as the first slope synchronized tool path 32a, and steps downwardly along the Z-axis 116 according to the calculated step-down value 146 before following the next tool path 32.

FIG. 6A is an illustration of a top view of the known series of constant step-down tool paths 206 which each have a fixed height, such as the first constant step-down tool path 206a, of FIG. 5A, for the contoured part 36, such as the first contoured part 36a. FIG. 6A shows the known constant step-down tool paths 206, such as the first constant step-down tool path 206a, with the plurality of constant step-downs 208, or fixed step-downs, such as the plurality of first constant step-downs 208a, between the plurality of tool path loops 207. As the step-downs 208 have a fixed step-down height, the tool paths 206 are separated more in the XY-plane at the top of the contoured part 36 where the wall angle is at its shallowest. Hence, while the step-down height is fixed, the step-across distance varies and is more for shallow wall angles than for steep wall angles. FIG. 6A further shows the ISF tool 96 with the ISF tool tip 98 and shows the three-dimensional coordinate axis system 200 with the X-axis 202, the Y-axis 204, and the Z-axis 116 point, as the Z-axis 116 is coming out of the page.

FIG. 6B is an illustration of a top view of the series of slope synchronized tool paths 32, such as the first slope synchronized tool path 32a, of FIG. 5B, for the contoured part 36, such as the first contoured part 36a. FIG. 6B shows the slope synchronized tool paths 32, such as the first slope synchronized tool path 32a, with the plurality of step-downs 140, such as the plurality of first step-downs 140a, between the plurality of contour tool path loops 160a. Preferably, the plurality of step-downs 140, such as the plurality of first step-downs 140a, comprise slope synchronized step-downs 148, where the slope synchronized step-downs 148 are spaced a smaller distance apart in their Z coordinates 136 at or near the starting portion 88a of the surface 80 of the contoured part 36 where the wall angle is at its shallowest and hence the slope factor values 124 are at their largest. The slope synchronized step-downs 148 are spaced - a greater distance apart at or near the ending portion 88b and along the body portion 210 of the contoured part 36 where the wall angle is at its steepest and hence the slope factor values 124 are at their smallest. FIG. 6B further shows the ISF tool 96 with the ISF tool tip 98 forming the slope synchronized tool paths 32, such as the first slope synchronized tool path 32a. FIG. 6B further shows the three-dimensional coordinate axis system 200 with the X-axis 202, the Y-axis 204, and the Z-axis 116 point, as the Z-axis 116 is coming out of the page.

FIG. 7A is an illustration of a top view of an enlarged portion of the known constant step-down tool paths 206, such as the first constant step-down tool path 206a, of FIG. 6A, for the contoured part 36, such as the first contoured part 36a. FIG. 7A shows the known constant step-down tool paths 206, such as the first constant step-down tool path 206a, with the plurality of constant step-downs 208, or fixed step-downs, such as the plurality of first constant step-downs 208a, between the plurality of tool path loops 207. FIG. 7A further shows the three-dimensional coordinate axis system 200 with the X-axis 202, the Y-axis 204, and the Z-axis 116 point, as the Z-axis 116 is coming out of the page.

As can be seen, the step-across distance varies between adjacent tool paths 206.

FIG. 7B is an illustration of a top view of an enlarged portion of the slope synchronized tool paths 32, such as the first slope synchronized tool path 32a, of FIG. 6B, for the contoured part 36, such as the first contoured part 36a. FIG. 7B shows the slope synchronized tool paths 32, such as the first slope synchronized tool path 32a, with the plurality of step-downs 140, such as the plurality of first step-downs 140a, between the plurality of contour tool path loops 160a. Preferably, the plurality of step-downs 140, such as the plurality of first step-downs 140a, comprise slope synchronized step-downs 148. FIG. 7B further shows the three-dimensional coordinate axis system 200 with the X-axis 202, the Y-axis 204, and the Z-axis 116 point, as the Z-axis 116 is coming out of the page. As can be seen, the step-across distance between adjacent tool paths 32 does not vary.

FIG. 8A is an illustration of a front view of the known constant step-down tool paths 206, such as the first constant step-down tool path 206a, of FIG. 5A, for the contoured part 36, such as the first contoured part 36a. FIG. 8A shows the known constant step-down tool paths 206, such as the first constant step-down tool path 206a, with the plurality of constant step-downs 208, or fixed step-downs, such as the plurality of first constant step-downs 208a, between the plurality of tool path loops 207. FIG. 8A further shows the ISF tool 96 with the ISF tool tip 98, and shows the three-dimensional coordinate axis system 200 with the X-axis 202 point, as the X-axis 202 is coming out of the page, the Y-axis 204, and the Z-axis 116. As can be seen, the step-down distance between adjacent tool paths 206 does not vary.

FIG. 8B is an illustration of a front view of the slope synchronized tool paths 32, such as a first slope synchronized tool path 32a, of FIG. 5B, for the contoured part 36, such as the first contoured part 36a. FIG. 8B shows the slope synchronized tool paths 32, such as the first slope synchronized tool path 32a, with the plurality of step-downs 140, such as the plurality of first step-downs 140a, between the plurality of contour tool path loops 160a. Preferably, the plurality of step-downs 140, such as the plurality of first step-downs 140a, comprise slope synchronized step-downs 148, where the slope synchronized step-downs 148 are spaced a smaller distance apart in their Z coordinates 136 at or near the starting portion 88a of the surface 80 of the contoured part 36 where the wall angle is at its shallowest and hence the slope factor values 124 are at their greatest. The slope synchronized step-downs 148 are spaced a greater distance apart in their Z coordinates 136 at or near the ending portion 88b and along the body portion 210 of the contoured part 36 where the wall angle is at its steepest and hence the slope factor values 124 are at their smallest. FIG. 8B further shows the ISF tool 96 with the ISF tool tip 98. FIG. 8B further shows the three-dimensional coordinate axis system 200 with the X-axis 202 point, as the X-axis 202 is coming out of the page, the Y-axis 204, and the Z-axis 116. The ISF tool 96 forms the slope synchronized tool paths 32, such as the first slope synchronized tool path 32a, by looping downwardly along the Z-axis 116 between successive tool paths 32.

FIG. 9A is an illustration of an isometric view of a known series of constant step-down tool paths 206, such as a second constant step-down tool path 206b, for a contoured part 36, such as a second contoured part 36b. The contoured part 36, such as the second contoured part 36b, has a three-dimensional arc shape 212. FIG. 9A shows the known constant step-down tool paths 206, such as a second constant step-down tool path 206b, with a plurality of constant step-downs 208, or fixed step-downs, such as a plurality of second constant step-downs 208b, between the plurality of tool path loops 207. Each constant step-down 208, such as each second constant step-down 208b, may have, for example, a 2.0 mm distance between the Z coordinates 136 of adjacent tool path loops 207. FIG. 9A further shows the ISF tool 96 with the ISF tool tip 98 forming the known constant step-down tool paths 206, such as the second constant step-down tool path 206b. FIG. 9A further shows the three-dimensional coordinate axis system 200 with the X-axis 202, the Y-axis 204, and the Z-axis 116. The known constant step-down tool paths 206, such as the second constant step-down tool path 206b, distributes the action of this tool path uniformly in the Z-direction.

FIG. 9B is an illustration of an isometric view of a series of slope synchronized tool paths 32, such as a second slope synchronized tool path 32b, of the disclosure, for a contoured part 36, such as a second contoured part 36b. The contoured part 36, such as the second contoured part 36b, has the three-dimensional arc shape 212. FIG. 9B shows the slope synchronized tool paths 32, such as the second slope synchronized tool path 32b, with a plurality of step-downs 140, such as a plurality of second step-downs 140b, between the plurality of contour tool path loops 160a. Preferably, the plurality of step-downs 140, such as the plurality of second step-downs 140b, comprise slope synchronized step-downs 148, where the slope synchronized step-downs 148 are spaced a smaller distance apart at or near the starting portion 88a of the contoured part 36 where the wall angle is at its shallowest and hence the slope factor values 124 are at their greatest. The slope synchronized step-downs 148 are spaced farther apart and at a greater distance apart at or near the ending portion 88b and along the body portion 210 of the contoured part 36 where the wall angle is at its steepest and hence the slope factor values 124 are at their smallest. The plurality of step-downs 140 (see FIG. 9B), such as the plurality of second step-downs 140b (see FIG. 9B), for example, the slope synchronized step-downs 148, may preferably each have a distance between the Z coordinates 136 of adjacent contour tool path loops 160a in a range of 0.10 mm to 8.0 mm.

FIG. 9B further shows the ISF tool 96 with the ISF tool tip 98 used to form the slope synchronized tool paths 32, such as the second slope synchronized tool path 32b. FIG. 9B further shows the three-dimensional coordinate axis system 200 with the X-axis 202, the Y-axis 204, and the Z-axis 116. The ISF tool 96 forms the slope synchronized tool paths 32, such as the second slope synchronized tool path 32b, by looping downwardly along the Z-axis 116 between successive tool paths 32.

FIG. 10A is an illustration of an isometric view of a known series of constant step-down tool paths 206, such as a third constant step-down tool path 206c, for a contoured part 36, such as a third contoured part 36c. The contoured part 36, such as the third contoured part 36c, has a three-dimensional hexagonal shape 214. FIG. 10A shows the known constant step-down tool paths 206, such as the third constant step-down tool path 206c, with a plurality of constant step-downs 208, or fixed step-downs, such as a plurality of third constant step-downs 208c, between the plurality of tool path loops 207. Each constant step-down 208, such as each third constant step-down 208c, may have, for example, a 4.0 mm distance between Z coordinated 136 of adjacent tool path loops 207. FIG. 10A further shows the ISF tool 96 with the ISF tool tip 98 used to form the known constant step-down tool paths 206, such as the third constant step-down tool path 206c. FIG. 10A further shows the three-dimensional coordinate axis system 200 with the X-axis 202, the Y-axis 204, and the Z-axis 116. The known constant step-down tool paths 206, such as the third constant step-down tool path 206c, distributes the action of this tool path uniformly in the Z-direction.

FIG. 10B is an illustration of an isometric view of a series of slope synchronized tool paths 32, such as a third slope synchronized tool path 32c, of the disclosure, for a contoured part 36, such as a third contoured part 36c. The contoured part 36, such as the third contoured part 36c, has the three-dimensional hexagonal shape 214. FIG. 10B shows the slope synchronized tool paths 32, such as the third slope synchronized tool path 32c, with a plurality of step-downs 140, such as a plurality of third step-downs 140c, between the plurality of contour tool path loops 160a. Preferably, the plurality of step-downs 140, such as the plurality of third step-downs 140c, comprise slope synchronized step-downs 148, where the slope synchronized step-downs 148 are spaced a smaller distance apart in their Z coordinates 136 at or near the starting portion 88a of the surface 80 of the contoured part 36 where the wall angle is at its shallowest and hence the slope factor values 124 are at their greatest. The slope synchronized step-downs 148 are spaced a greater distance apart in their Z coordinates 136 at or near the ending portion 88b and along the body portion 210 of the contoured part 36 where the wall angle is at its steepest and hence the slope factor values 124 are at their smallest. The plurality of step-downs 140, such as the plurality of third step-downs 140c, for example, the slope synchronized step-downs 148, may preferably each have a distance between Z coordinates 136 of adjacent contour tool path loops 160a in a range of 0.10 mm to 8.0 mm.

FIG. 10B further shows the ISF tool 96 with the ISF tool tip 98 used to form the slope synchronized tool paths 32, such as the third slope synchronized tool path 32c. FIG. 10B further shows the three-dimensional coordinate axis system 200 with the X-axis 202, the Y-axis 204, and the Z-axis 116. The ISF tool 96 forms the slope synchronized tool paths 32, such as the third slope synchronized tool path 32c, by looping downwardly along the Z-axis 116 between successive tool paths 32.

FIG. 11A is an illustration of an isometric view of a known series of constant step-down tool paths 206, such as a fourth constant step-down tool path 206d, for a contoured part 36, such as a fourth contoured part 36d. The contoured part 36, such as the fourth contoured part 36d, has a three-dimensional dome shape 216. FIG. 11A shows the known constant step-down tool paths 206, such as the fourth constant step-down tool path 206d, with a plurality of constant step-downs 208, or fixed step-downs, such as a plurality of fourth constant step-downs 208d, between the plurality of tool path loops 207. Each constant step-down 208, such as each fourth constant step-down 208d, may have, for example, a 4.0 mm distance between the Z coordinates 136 of adjacent tool path loops 207. FIG. 11A further shows the ISF tool 96 with the ISF tool tip 98 used to form the known constant step-down tool paths 206, such as the fourth constant step-down tool path 206d. FIG. 11A further shows the three-dimensional coordinate axis system 200 with the X-axis 202, the Y-axis 204, and the Z-axis 116. The known constant step-down tool paths 206, such as the fourth constant step-down tool path 206d, distributes the action of this tool path uniformly in the Z-direction.

FIG. 11B is an illustration of an isometric view of a series of slope synchronized tool paths 32, such as a fourth slope synchronized tool path 32d, of the disclosure, for a contoured part 36, such as a fourth contoured part 36d. The contoured part 36, such as the third contoured part 36c, has the three-dimensional dome shape 216. FIG. 11B shows the slope synchronized tool paths 32, such as the fourth slope synchronized tool path 32d, with a plurality of step-downs 140, such as a plurality of fourth step-downs 140d, between the plurality of contour tool path loops 160a. Preferably, the plurality of step-downs 140, such as the plurality of fourth step-downs 140d, comprise slope synchronized step-downs 148, where the slope synchronized step-downs 148 are spaced a smaller distance apart in their Z coordinates 136 at or near the starting portion 88a of the surface 80 of the contoured part 36 where the wall angle is at its shallowest and hence the slope factor values 124 are at their greatest. The slope synchronized step-downs 148 are spaced a greater distance apart in their Z coordinates 136 at or near the ending portion 88b and along the body portion 210 of the contoured part 36 where the wall angle is at its steepest and hence the slope factor values 124 are at their smallest. The plurality of step-downs 140, such as the plurality of fourth step-downs 140d, for example, the slope synchronized step-downs 148, may preferably each have a distance between Z coordinates 136 of adjacent contour tool path loops 160a in a range of 0.10 mm to 8.0 mm.

FIG. 11B further shows the ISF tool 96 with the ISF tool tip 98 used to form the slope synchronized tool paths 32, such as the fourth slope synchronized tool path 32d. FIG. 11B further shows the three-dimensional coordinate axis system 200 with the X-axis 202, the Y-axis 204, and the Z-axis 116. The ISF tool 96 forms the slope synchronized tool paths 32, such as the fourth slope synchronized tool path 32d, by looping downwardly along the Z-axis 116 between successive toolpaths 32.

EXAMPLE

The computer implemented method 10 was performed to generate a series of slope synchronized tool paths 32 for incremental sheet forming (ISF) 34 of an aircraft metallic repair patch from a blank sheet made of aluminum.
VISUAL STUDIO coding software was used to create code for the computer implemented method. (VISUAL STUDIO is a registered trademark of Microsoft Corporation of Redmond, Washington.)
An initial Z coordinate was set to be a maximum Z coordinate of an offset surface of the part.
A $\Delta$Z (delta Z, i.e., step-down) was set to be a small increment in Z (Z value on Z-axis) of 0.05 mm.
A surface tessellation was performed on geometry that was developed using CAD (computer aided design) software to produce a collection of polygons in the form of triangles.
While Z > Z min. (Z value is greater than a minimum Z value), the following loop was executed:

(1) Z = Z - $\Delta$Z (here $\Delta$Z represents the search step-down);
(2) Find all triangles which intersect a level plane with a Z coordinate at Z (Z value on a Z-axis);
(3) Find a maximal Z-axis component of a normal vector of the triangles, and call this value a "slope factor value"; and
(4) Store this value in an array, or a lookup table, of Z values and slope factor values corresponding to the Z values, respectively.

A series of Z contour tool paths (slope synchronized tool paths) with tool path step-down values calculated as a function of the slope factor values was generated. For example:
The initial Z coordinate was reset to be the maximum Z coordinate of the offset surface of the part. Values for a maximum step-down value and a minimum step-down value were provided.
While Z > Z min. (Z value is greater than a minimum Z value), the following loop was executed:

LOOP BEGINS;

(1) Calculate a slope factor value from the array of stored Z values and corresponding slope factor values, via interpolation, in order to find a value which corresponds to a current Z value;
(2)

$$\Delta Z = \text{minimum step-down value} + (\text{maximum step-down value - minimum step-down value}) * (1.0 - \text{slope factor value});$$

(3)

$$Z = Z - \Delta Z;$$

(4) Find all triangles which intersect a level plane with a Z coordinate at Z (Z value on a Z-axis);
(5) Process an intersection of each of the triangles with the level plane, to produce a collection of vectors in the level plane that describe the line of intersection of the level plane with the polygon;
(6) Sort the collection of vectors to be in a tip-to-tail arrangement, to produce a contour loop; and

LOOP ENDS.

An output file with the Z contour tool paths (i.e. the slope synchronized tool paths) was then sent to a numerically controlled incremental sheet forming (ISF) machine, such as a DLNC-PC dieless numerically controlled forming machine from Amino North America Corporation of Ontario, Canada. A FANUC CNC controller in the dieless numerically controlled forming machine interpreted G-code of the output file to drive the forming tool of the dieless numerically controlled forming machine. (FANUC is a registered trademark of Fanuc Corporation of Japan.)
FIG. 12 is an illustration of a front view of an exemplary incremental sheet forming (ISF) tool 96 that may be used with the computer implemented method 10 of FIG. 1A, the computer implemented method 40 of FIG. 1B, and the computer implemented system 60 of FIG. 2A of the disclosure. As shown in FIG. 12, the exemplary ISF tool 96 has a first end 218a and a second end 218b, an ISF tool tip 98 (220) extending from the first end 218a, and a body portion 220 coupled to or integral with the ISF tool tip 98 and extending between the ISF tool tip 98 and the second end 218b.

As discussed above, performing either the computer implemented methods 10, 40 comprises sending the output file 168, such as the ISF command file 168a to the numerically controlled ISF machine 94. In addition to the output file 168, or included in the output file 168, data 222 may be included for the ISF tool 96 used to form the part 35, such as the contoured part 36. Such data 222 may comprise parameters for the ISF tool 96, including but not limited to, as shown in FIG. 12, ISF tool tip diameter 224, the ISF tool tip radius 100, a body diameter 226 of the ISF tool 96, an overall length 228 of the ISF tool 96, a length 230 of the ISF tool tip 98, and a centerline 232 of the ISF tool 96. The data 222 for the ISF tool 96 parameters may define the ISF tool 96 contact position on the surface 80 (see FIGS. 3, 4) of the part 35, such as the contoured part 36.

FIG. 13 is an illustration of a partial perspective view of an exemplary numerical control forming machine 234, such as a numerically controlled ISF machine 94, with an ISF tool 96 forming the part 35, such as the contoured part 36, that may be formed using the computer implemented method 10 of FIG. 1A, the computer implemented method 40 of FIG. 1B, and/or the computer implemented system 60 of FIG. 2A of the disclosure.

In one exemplary version, the numerical control forming machine 234, such as in the form of the numerically controlled ISF machine 94, may comprise a die 236 attached to a fixture 238. Alternatively, the numerical control forming machine 234, such as in the form of the numerically controlled ISF machine 94, may have no die. FIG. 13 further shows a tool path 102.

The numerical control forming machine 234, such as in the form of the numerically controlled ISF machine 94, preferably uses the process of ISF 34 to form the part 35, such as the contoured part 36. The process of ISF 34 is a flexible sheet metal forming technique that uses tooling to locally deform sheet metal along predefined tool paths to impart the sheet with a desired or designated shape, such as a three-dimensional shape or geometry. Single point incremental forming (SPIF) uses a single forming tool on one side of the sheet metal to cause the deformation. Dual-sided incremental forming (DSIF) uses one forming tool above the sheet metal and another forming tool below the sheet metal to cause the deformation. Two point incremental forming (TPIF) uses one or more forming tools and a sheet formed against full or partial dies.

The process of ISF 34 may be performed on a number of different types of sheet metal materials. For example, without limitation, the process of ISF 34 may be performed using aluminum, steel, titanium, and/or other suitable metals. The sheet metal may be formed using the ISF tool 96, or another suitable type of tool. The ISF tool 96, or other suitable tool, may be attached to the numerical control forming machine 234, such as the numerically controlled ISF machine 94, or to a robot arm, or to another suitable machine or system to shape the sheet metal into the desired shape for the part 35, such as the contoured part 36 (see FIG. 13, such as in the form of a sheet metal part. The ISF tool 96, or other suitable tool, makes indentations, creases, or other physical changes or deformations into the sheet metal that may follow tool paths, contours, or mold line for the desired part. The tool paths, contours, or mold line may be defined using the die 236 or tool on which the ISF tool 96 presses or deforms the sheet metal material.

FIG. 14 is a diagrammatic representation of a perspective view of an air vehicle 250, such as in the form of an aircraft 250a, that incorporates a part 35, such as an aircraft contoured part 38, formed using the computer implemented method 10 of FIG. 1A, the computer implemented method 40 of FIG. 1B, and/or the computer implemented system 60 of FIG. 2A of the disclosure. As further shown in FIG. 14, the air vehicle 250, such as in the form of aircraft 250a, comprises fuselage 252, a nose 254, a cockpit 256, wings 258, engines 260, and an empennage 262 comprising a vertical stabilizer 264 and horizontal stabilizers 266. Although the aircraft 250a shown in FIG. 14 is generally representative of a commercial passenger aircraft having one or more parts 35, such as one or more contoured parts 36, for example, one or more aircraft contoured parts 38, the teachings of the disclosed versions and examples may be applied to other passenger aircraft. For example, the teachings of the disclosed versions and examples may be applied to cargo aircraft, military aircraft, rotorcraft, and other types of aircraft or aerial vehicles, as well as aerospace vehicles, satellites, space launch vehicles, rockets, and other aerospace vehicles.

FIG. 15 is a flow diagram of an aircraft manufacturing and service method 300, and FIG. 16 is an illustration of a functional block diagram of an aircraft 316. Versions of the disclosure may be described in the context of the aircraft manufacturing and service method 300, as shown in FIG. 15, and the aircraft 316, as shown in FIG. 14. During pre-production, the exemplary aircraft manufacturing and service method 300 may include specification and design 302 of the aircraft 316 and material procurement 304. During manufacturing, component and subassembly manufacturing 306 and system integration 308 of the aircraft 316 takes place. Thereafter, the aircraft 316 may go through certification and delivery 310 in order to be placed in service 312. While in service 312 by a customer, the aircraft 316 may be scheduled for routine maintenance and service 314, which may also include modification, reconfiguration, refurbishment, and other suitable services. Each of the processes of the aircraft manufacturing and service method 300 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may include an airline, leasing company, military entity, service organization, and other suitable operators.

As shown in FIG. 16, the aircraft 316 produced by the exemplary aircraft manufacturing and service method 300 may include an airframe 318 with a plurality of systems 320 and an interior 322. Examples of the systems 320 may include one or more of a propulsion system 324, an electrical system 326, a hydraulic system 328, and an environmental system 330. Any number of other systems may be included. Although an aerospace example is shown, the principles of the disclosure may be applied to other industries, such as the automotive industry, including automotive vehicles, the marine industry, including watercraft, ships, and submarines, and other suitable industries.

Methods and systems embodied herein may be employed during any one or more of the stages of the aircraft manufacturing and service method 300. For example, components or subassemblies corresponding to component and subassembly manufacturing 306 (see FIG. 15) may be fabricated or manufactured in a manner similar to components or subassemblies produced while the aircraft 316 is in service 312. Also, one or more method examples, system examples, or a combination thereof, may be utilized during component and subassembly manufacturing 306 and system integration 308, for example, by expediting (or substantially expediting) assembly of, or reducing the cost of, the aircraft 316. Similarly, one or more of method versions, system versions, or a combination thereof, may be utilized while the aircraft 316 is in service 312, for example and without limitation, to maintenance and service 314.

Disclosed versions of the computer implemented method 10 of FIG. 1A, the computer implemented method 40 of FIG. 1B, and the computer implemented system 60 of FIG. 2A provide the novel feature of calculating the minimum wall angle 162 on a given contour tool path loop 160, and using this minimum wall angle 162 that is calculated to adjust the step-down value 146, i.e., $\Delta Z$, on the next subsequent contour loop 158b. The series of slope synchronized tool paths 32 are generated with slope synchronized step-downs 148 determined as a function of the slope factor value 122 of the contoured part 36. Disclosed versions of the computer implemented method 10, the computer implemented method 40, and the computer implemented system 60 provide a tool path generation algorithm to adapt a next subsequent contour loop 158b to a minimum slope encountered on a current contour loop 158a at a current Z coordinate 136b of a given contour tool path loop 160, and take into account the slope 121 of the part 35.

In addition, disclosed versions of the computer implemented method 10 of FIG. 1A, the computer implemented method 40 of FIG. 1B, and the computer implemented system 60 of FIG. 2A improve the quality of parts 35, such as contoured parts 36, having wall angles 164 that are shallow, and that are preferably formed by the process of ISF 34. Because the computer implemented method 10 of FIG. 1A, the computer implemented method 40 of FIG. 1B, and the computer implemented system 60 of FIG. 2A do not necessarily have constant or fixed step-downs, which may be too small for steep slopes, or too large for shallow slopes, the parts 35 formed using the computer implemented method 10 of FIG. 1A, the computer implemented method 40 of FIG. 1B, and the computer implemented system 60 of FIG. 2A avoid surface imperfections, such as uneven step-across imperfections, surface ridges, and surface blemishes, that may occur during ISF 34. Reducing or eliminating surface imperfections may result in reducing or eliminating secondary surface treatment processes to remove the surface imperfections, and may, in turn, result in decreased time and expense of manufacturing. Thus, disclosed versions of the computer implemented method 10 of FIG. 1A, the computer implemented method 40 of FIG. 1B, and the computer implemented system 60 of FIG. 2A may improve the shape definition and surface finish on shallow walled sections of parts 35 which are formed using the ISF 34 manufacturing process. This may reduce the need to rework the parts 35, and in turn, may reduce the cost of manufacturing and production of such parts 35.

Moreover, disclosed versions of the computer implemented method 10 of FIG. 1A, the computer implemented method 40 of FIG. 1B, and the computer implemented system 60 of FIG. 2A may easily be automated and implemented with computer readable software programs 72 by simply interfacing the defined instructions or steps of the computer implemented methods 10, 40 with variable user inputs. Further, disclosed versions of the computer implemented method 10 of FIG. 1A, the computer implemented method 40 of FIG. 1B, and the computer implemented system 60 of FIG. 2A may provide faster lead time to fabricate new tooling and produce replacement parts or spare parts, such as replacement parts or spare parts for aircraft and rotorcraft brought back into service. For example, the lead time to fabricate new tooling and manufacture the part, from design to manufacture, may be reduced significantly, and may result in overall decreased time and costs of manufacturing. In addition, disclosed versions of the computer implemented method 10 of FIG. 1A, the computer implemented method 40 of FIG. 1B, and the computer implemented system 60 of FIG. 2A are adaptable to complex part design geometries and production of parts in limited numbers and for prototype testing, and generate and output an output file 168 for a numerically controlled ISF machine 94 for incremental sheet forming of parts 35, such as contoured parts 36, and provide benefit to air vehicles 250, such as aircraft 250a, including commercial aircraft and rotorcraft.

**Claims**

1. A computer implemented method (10) for generating a series of slope synchronized tool paths (32) for incremental sheet forming (ISF) (34) of a contoured part (36) using a computer system (62) comprising a computer (64) having a processor device (66), and comprising a modeling application (70) and a slope synchronized tool path application (110), each implemented by a computer readable software program (72) and each executed by the computer (64), the computer implemented method (10) comprising the steps of:

   using the slope synchronized tool path application (110) executed by the computer (64) to perform (14) a slope synchronized tool path application execution (112) comprising the substeps of:

      defining (16) a plurality of equally spaced apart Z values (114a) along a Z-axis (116) where, for each of the plurality of equally spaced apart Z values (114a), a horizontal plane at that Z value intersects a surface (80) that approximates a three-dimensional geometry (78) of the contoured part (36) to define a line;
      determining (18), for each of the plurality of equally spaced apart Z values (114a), a slope factor value (124) based on a maximum slope angle of the surface (80) along the line, to define an array (130) of Z values (114) and slope factor values (124) that correspond to the Z values (114); and
      setting (20) an initial Z coordinate (136a) corresponding to a starting portion (88a) of the surface (80), as a current Z coordinate (136b);

   the slope synchronized tool path application execution (112) then iteratively:

      calculating (22) a series of calculated step-down values (146) by calculating each calculated step-down value (146) as a sum of a minimum step-down value (144) and a percentage (142a) of a maximum step-down value (142) less the minimum step-down value (144), to obtain the calculated step-down value (146), the percentage (142a) based on a current slope factor value (124) for the current Z coordinate (136b), that is calculated based on the array (130) of the Z values (114) and the corresponding slope factor values (124);
      decrementing (24) the current Z coordinate (136b) by the last calculated step-down value (146); and
      determining (26) an intersection (150) of the surface (80) with the horizontal plane (118a) at the current Z coordinate (136b), thereby defining a tool path (32) for the current Z coordinate (136b);

   such that the slope synchronized tool path application (110) creates a plurality of tool paths (32) that are each respectively spaced apart by the calculated step-down values (146), to obtain the series of slope synchronized tool paths (32); and
   sending (28) an output file (168), using the computer (64), to a numerically controlled incremental sheet forming (ISF) machine (94), wherein the output file (168), when executed by the numerically controlled incremental sheet forming (ISF) machine (94), causes the numerically controlled incremental sheet forming (ISF) machine (94) to direct an incremental sheet forming (ISF) tool (96) along the series of slope synchronized tool paths (32) to incrementally form the contoured part (36).

2. The computer implemented method (10) of claim 1, wherein prior to performing (14) the slope synchronized tool path application execution (112), the computer implemented method (10) further comprises the step of performing (30), with the computer (64) and the modeling application (70), a surface discretization (74) of the three-dimensional geometry (78) of the contoured part (36) to produce the surface (80), wherein the surface discretization (74) produces a surface mesh (82) of polygons (84) that approximates the three-dimensional geometry (78) of the contoured part (36).

3. The computer implemented method (10) of claim 2, wherein the surface mesh (82) of polygons (84) comprises one or more of, triangles (84a), quadrilaterals (84b), pentagons (84c), hexagons (84d), and a combination of polygons (84), that approximates the three-dimensional geometry (78) of the contoured part (36).

4. The computer implemented method (10) of claim 2 or 3, wherein determining (26) the intersection (150) of the surface (80) further comprises, determining (26) the intersection of the surface mesh (82) with a current horizontal plane (118b) at the current Z coordinate (136b), to define a collection (153) of vectors (154) in the current horizontal plane (118b) wherein each vector describes the intersection of the horizontal plane (118b) with a polygon (84) of the surface mesh (82), and sorting the collection (153) of vectors (154) in a tip-to-tail arrangement (156), to produce the tool path (32) for the current Z coordinate (136b).

5. The computer implemented method (10) of any of claims 2 to 4, wherein performing (30) the surface discretization (74) of the three-dimensional geometry (78) of the contoured part (36) further comprises, using the modeling application (70) to generate, as the surface (80), an offset surface (90) that is spaced a constant offset distance (92) from the contoured part (36), wherein the offset surface (90) accounts for a blank sheet thickness (93) and an incremental sheet forming (ISF) tool tip radius (100) of an incremental sheet forming (ISF) tool tip (98) of the incremental sheet forming (ISF) tool (96).

6. The computer implemented method (10) of any of claims 1 to 5, wherein determining (18) the slope factor values (124) for each of the plurality of equally spaced apart Z values (114a) further comprises determining (18), for each of the plurality of equally spaced apart Z values (114a), the slope factor value (124) for the surface (80) to define the array (130) comprising a lookup table (134) of the Z values (114) and the slope factor values (124) corresponding to the Z values (114).

7. The computer implemented method (10) of any of claims 1 to 6, wherein calculating (22) the calculated step-down values (146) further comprises, calculating the current slope factor value (124) for the current Z coordinate (136b) using interpolation (166) when the current Z coordinate (136b) is between two adjacent Z values (114b) of the Z values (114) defined in the array (130).

8. The computer implemented method (10) of any of claims 1 to 7, wherein calculating (22) the calculated step-down value (146) further comprises, calculating the calculated step-down value (146) as the minimum step-down value (144) plus a quantity of the maximum step-down value (142) minus the minimum step-down value (144) multiplied by a quantity of 1 minus the current slope factor value (124), to obtain the calculated step down value (146).

9. A computer implemented system (60) for generating a series of slope synchronized tool paths (32) for incremental sheet forming (ISF) (34) of a contoured part (36), the computer implemented system (60) comprising:

a computer (64) having a processor device (66) and a modeling application (70) implemented by a first computer readable software program (72a) and executed by the computer (64), the modeling application (70) adapted to perform a surface discretization (74) of a three-dimensional geometry (78) of the contoured part (36), to produce a surface mesh (82) of polygons (84) that approximates the three-dimensional geometry (78) of the contoured part (36); and
a slope synchronized tool path application (110) implemented by a second computer readable software program (72b) and executed by the computer (64), the slope synchronized tool path application (110) adapted to:

define a plurality of equally spaced apart Z values (114a) along a Z-axis (116) where, for each of the plurality of equally spaced apart Z values (114a), a horizontal plane at that Z value intersects the surface mesh (82) of polygons (84) that approximates the three-dimensional geometry (78) of the contoured part (36) to define a line;
determine, for each of the plurality of equally spaced apart Z values (114a), a slope factor value (124) based on a maximum slope angle of the surface (80) along the line, to define an array (130) of Z values (114) and slope factor values (124) that correspond to the Z values (114); and
set an initial Z coordinate (136a) corresponding to a starting portion (88a) of the surface mesh (82), as a current Z coordinate (136b);

the slope synchronized tool path application (110) then adapted to iteratively:

calculate a series of calculated step-down values (146) by calculating each calculated step-down value (146) as a sum of a minimum step-down value (144) and a percentage (142a) of a maximum step-down value (142) less the minimum step-down value (144), to obtain the calculated step-down value (146), the percentage (142a) based on a current slope factor value (124) for the current Z coordinate (136b), that is calculated based on the array (130) of the Z values (114) and the corresponding slope factor values (124);
decrement the current Z coordinate (136b) by the last calculated step-down value (146); and
determine an intersection (150) of the surface mesh (82) with the horizontal plane (118a) at the current Z coordinate (136b), thereby defining a tool path (32) for the current Z coordinate (136b);

such that the slope synchronized tool path application (110) creates a plurality of tool paths (32) that are each respectively spaced apart by the calculated step-down values (146), to obtain the series of slope synchronized tool paths (32); and

wherein the computer (64) sends an output file (168) to a numerically controlled incremental sheet forming machine (94), wherein the output file (168), when executed by the numerically controlled incremental sheet forming (ISF) machine (94), causes the numerically controlled incremental sheet forming machine (94) to direct an incremental sheet forming tool (96) along the series of slope synchronized tool paths (32) to incrementally form the contoured part (36).

**10.** The computer implemented system (60) of claim 9, wherein the polygons (84) of the surface mesh (82) comprise one or more of, triangles (84a), quadrilaterals (84b), pentagons (84c), hexagons (84d), and a combination of polygons (84), that approximate the three-dimensional geometry (78) of the contoured part (36).

**11.** The computer implemented system (60) of claim 9 or 10, wherein the modeling application (70) generates as the surface mesh (82) from an offset surface (90) spaced a constant offset distance (92) from the contoured part (36), wherein the offset surface (90) accounts for a blank sheet thickness (93) and an incremental sheet forming (ISF) tool tip radius (100) of an incremental sheet forming (ISF) tool tip (98) of the incremental sheet forming (ISF) tool (96).

**12.** The computer implemented system (60) of any of claims 9 to 11, wherein the array (130) comprises a lookup table (134) of the Z values (114) and the slope factor values (124) corresponding to the Z values (114).

**13.** The computer implemented system (60) of any of claims 9 to 12, wherein the current slope factor value (124) for the current Z coordinate (136b) is calculated using interpolation (166), when the current Z coordinate (136b) is between two adjacent Z values (114b) of the Z values (114) defined in the array (130).

**14.** The computer implemented system (60) of any of claims 9 to 13 wherein the calculated step-down value (146) is calculated as the minimum step-down value (144) plus a quantity of the maximum step-down value (142) minus the minimum step-down value (144) multiplied by a quantity of 1 minus the current slope factor value (1224).

**15.** The computer implemented system (60) of any of claims 9 to 13 wherein the contoured part (36) comprises an aircraft contoured part (38) for use in an aircraft (250a).

**Patentansprüche**

**1.** Computerimplementiertes Verfahren (10) zum Erzeugen einer Reihe von neigungssynchronisierten Werkzeugwegen (32) für die inkrementelle Blechumformung (incremental sheet forming, ISF) (34) eines konturierten Teils (36) unter Verwendung eines Computersystems (62), das einen Computer (64) mit einer Prozessorvorrichtung (66) umfasst, und das eine Modellierungsanwendung (70) und eine neigungssynchronisierte Werkzeugweganwendung (110) umfasst, die jeweils durch ein computerlesbares Softwareprogramm (72) implementiert sind und jeweils von dem Computer (64) ausgeführt werden, wobei das computerimplementierte Verfahren (10) die folgenden Schritte umfasst:

Verwenden der von dem Computer (64) ausgeführten neigungssynchronisierten Werkzeugweganwendung (110), um eine Ausführung (14) einer neigungssynchronisierten Werkzeugweganwendung (112) vorzunehmen, welche die folgenden Unterschritte umfasst:

Definieren (16) einer Mehrzahl von gleichmäßig beabstandeten Z-Werten (114a) entlang einer Z-Achse (116), wobei für jeden der Mehrzahl von gleichmäßig beabstandeten Z-Werten (114a) eine horizontale Ebene bei diesem Z-Wert eine Oberfläche (80) schneidet, die eine dreidimensionale Geometrie (78) des konturierten Teils (36) approximiert, um eine Linie zu definieren;
Bestimmen (18), für jeden der Mehrzahl von gleichmäßig beabstandeten Z-Werten (114a), eines Neigungsfaktorwertes (124) auf der Grundlage eines maximalen Neigungswinkels der Oberfläche (80) entlang der Linie, um ein Array (130) von Z-Werten (114) und den Z-Werten (114) entsprechenden Neigungsfaktorwerten (124) zu definieren; und
Einstellen (20) einer Anfangs-Z-Koordinate (136a), die einem Anfangsabschnitt (88a) der Oberfläche (80) entspricht, als eine aktuelle Z-Koordinate (136b);

wobei die Ausführung der neigungssynchronisierten Werkzeugweganwendung (112) dann iterativ umfasst:

Berechnen (22) einer Reihe von berechneten Absenkungswerten (146) durch Berechnen jedes berechneten Absenkungswertes (146) als eine Summe eines minimalen Absenkungswertes (144) und eines Prozentsatzes (142a) eines maximalen Absenkungswertes (142) abzüglich des minimalen Absenkungswertes (144), um den berechneten Absenkungswert (146) zu erhalten, wobei der Prozentsatz (142a) auf einem aktuellen Neigungsfaktorwert (124) für die aktuelle Z-Koordinate (136b) basiert, der auf der Grundlage des Arrays (130) der Z-Werte (114) und der entsprechenden Neigungsfaktorwerte (124) berechnet wird;
Dekrementieren (24) der aktuellen Z-Koordinate (136b) um den zuletzt berechneten Absenkungswert (146); und
Bestimmen (26) eines Schnittpunkts (150) der Oberfläche (80) mit der horizontalen Ebene (118a) an der aktuellen Z-Koordinate (136b), wodurch ein Werkzeugweg (32) für die aktuelle Z-Koordinate (136b) definiert wird;

so dass die neigungssynchronisierte Werkzeugweganwendung (110) eine Mehrzahl von Werkzeugwegen (32) erzeugt, die jeweils durch die berechneten Absenkungswerte (146) beabstandet sind, um die Reihe von neigungssynchronisierten Werkzeugwegen (32) zu erhalten; und
Senden (28) einer Ausgabedatei (168) unter Verwendung des Computers (64) an eine numerisch gesteuerte Inkrementellblechumformungsmaschine (94), wobei die Ausgabedatei (168), wenn sie von der numerisch gesteuerten inkrementellen Inkrementellblechumformungsmaschine (94) ausgeführt wird, die numerisch gesteuerte Inkrementellblechumformungsmaschine (94) veranlasst, ein Inkrementellblechumformungswerkzeug (96) entlang der Reihe von neigungssynchronisierten Werkzeugwegen (32) zu führen, um das konturierte Teil (36) inkrementell zu formen.

**2.** Computerimplementiertes Verfahren (10) nach Anspruch 1, bei dem das computerimplementierte Verfahren (10) vor der Ausführung (14) der neigungssynchronisierten Werkzeugweganwendung (112) ferner den Schritt der Durchführung (30), mit dem Computer (64) und der Modellierungsanwendung (70), einer Oberflächendiskretisierung (74) der dreidimensionalen Geometrie (78) des konturierten Teils (36) zum Erzeugen der Oberfläche (80) umfasst, wobei die Oberflächendiskretisierung (74) ein Oberflächennetz (82) aus Vielecken (84) erzeugt, das die dreidimensionale Geometrie (78) des konturierten Teils (36) approximiert.

**3.** Computerimplementiertes Verfahren (10) nach Anspruch 2, bei dem das Oberflächennetz (82) aus Vielecken (84) eines oder mehrere der folgenden Elemente umfasst: Dreiecke (84a), Vierecke (84b), Fünfecke (84c), Sechsecke (84d) und eine Kombination von Vielecken (84), die die dreidimensionale Geometrie (78) des konturierten Teils (36) approximiert.

**4.** Computerimplementiertes Verfahren (10) nach Anspruch 2 oder 3, bei dem das Bestimmen (26) des Schnittpunktes (150) der Oberfläche (80) ferner das Bestimmen (26) des Schnittpunktes des Oberflächennetzes (82) mit einer aktuellen horizontalen Ebene (118b) an der aktuellen Z-Koordinate (136b) umfasst, um eine Sammlung (153) von Vektoren (154) in der aktuellen horizontalen Ebene (118b) zu definieren, wobei jeder Vektor den Schnittpunkt der horizontalen Ebene (118b) mit einem Vieleck (84) des Oberflächennetzes (82) beschreibt, und Sortieren der Sammlung (153) von Vektoren (154) in einer Kopf-an Fuß-Anordnung (156), um den Werkzeugweg (32) für die aktuelle Z-Koordinate (136b) zu erzeugen.

**5.** Computerimplementiertes Verfahren (10) nach einem der Ansprüche 2 bis 4, bei dem die Durchführung (30) der Oberflächendiskretisierung (74) der dreidimensionalen Geometrie (78) des konturierten Teils (36) ferner die Verwendung der Modellierungsanwendung (70) umfasst, um als die Oberfläche (80) eine versetzte Oberfläche (90) zu erzeugen, die um einen konstanten Versatzabstand (92) von dem konturierten Teil (36) entfernt ist,
wobei die versetzte Oberfläche (90) eine Rohblechdicke (93) und einen Inkrementellblechumformungs- (ISF) -Werkzeugspitzenradius (100) einer Inkrementellblechumformungs- (ISF) -Werkzeugspitze (98) des Inkrementellblechumformungs- (ISF) -Werkzeugs (96) berücksichtigt.

**6.** Computerimplementiertes Verfahren (10) nach einem der Ansprüche 1 bis 5, bei dem das Bestimmen (18) der Neigungsfaktorwerte (124) ferner für jeden der Mehrzahl von gleichmäßig beabstandeten Z-Werten (114a) das Bestimmen (18) des Neigungsfaktorwertes (124) für die Oberfläche (80) umfasst, um das Array (130) zu definieren, das eine Nachschlagetabelle (134) der Z-Werte (114) und der den Z-Werten (114) entsprechenden Neigungsfaktorwerte (124) umfasst.

**7.** Computerimplementiertes Verfahren (10) nach einem der Ansprüche 1 bis 6, bei dem das Berechnen (22) der berechneten Absenkungswerte (146) ferner das Berechnen des aktuellen Neigungsfaktorwertes (124) für die aktuelle Z-Koordinate (136b) mittels Interpolation (166) umfasst, wenn die aktuelle Z-Koordinate (136b) zwischen zwei benachbarten Z-Werten (114b) der in dem Array (130) definierten Z-Werte (114) liegt.

**8.** Computerimplementiertes Verfahren (10) nach einem der Ansprüche 1 bis 7, bei dem das Berechnen (22) des berechneten Absenkungswerts (146) ferner das Berechnen des berechneten Absenkungswerts (146) als den minimalen Absenkungswert (144) zuzüglich einer Größe des maximalen Absenkungswerts (142) abzüglich des minimalen Absenkungswerts (144), multipliziert mit einer Größe von 1 abzüglich des aktuellen Neigungsfaktorwerts (124) umfasst, um den berechneten Absenkungswert (146) zu erhalten.

**9.** Computerimplementiertes System (60) zum Erzeugen einer Reihe von neigungssynchronisierten Werkzeugwegen (32) für die inkrementelle Blechumformung (incremental sheet forming, ISF) (34) eines konturierten Teils (36), wobei das computerimplementierte System (60) umfasst:

einen Computer (64) mit einer Prozessorvorrichtung (66) und einer durch ein erstes computerlesbares Softwareprogramm (72a) implementierten und durch den Computer (64) ausgeführten Modellierungsanwendung (70), wobei die Modellierungsanwendung (70) eingerichtet ist, eine Oberflächendiskretisierung (74) einer dreidimensionalen Geometrie (78) des konturierten Teils (36) durchzuführen, um ein Oberflächennetz (82) aus Vielecken (84) zu erzeugen, das die dreidimensionale Geometrie (78) des konturierten Teils (36) approximiert; und
eine neigungssynchronisierte Werkzeugweganwendung (110), die durch ein zweites computerlesbares Softwareprogramm (72b) implementiert und durch den Computer (64) ausgeführt wird, wobei die neigungssynchronisierte Werkzeugweganwendung (110) eingerichtet ist zum:

Definieren einer Mehrzahl von gleichmäßig beabstandeten Z-Werten (114a) entlang einer Z-Achse (116), wobei für jeden der Mehrzahl von gleichmäßig beabstandeten Z-Werten (114a) eine horizontale Ebene bei diesem Z-Wert das Oberflächennetz (82) von Vielecken (84) schneidet, das die dreidimensionale Geometrie (78) des konturierten Teils (36) approximiert, um eine Linie zu definieren;
Bestimmen, für jeden der Mehrzahl von gleichmäßig beabstandeten Z-Werten (114a), eines Neigungsfaktorwertes (124) auf der Grundlage eines maximalen Neigungswinkels der Oberfläche (80) entlang der Linie, um ein Array (130) von Z-Werten (114) und den Z-Werten (114) entsprechenden Neigungsfaktorwerten (124) zu definieren; und
Einstellen einer Anfangs-Z-Koordinate (136a), die einem Anfangsabschnitt (88a) des Oberflächennetzes (82) entspricht, als eine aktuelle Z-Koordinate (136b);

wobei die neigungssynchronisierte Werkzeugweganwendung (110) eingerichtet ist zum anschließenden iterativen

Berechnen einer Reihe von berechneten Absenkungswerten (146) durch Berechnen jedes berechneten Absenkungswertes (146) als eine Summe eines minimalen Absenkungswertes (144) und eines Prozentsatzes (142a) eines maximalen Absenkungswertes (142) abzüglich des minimalen Absenkungswertes (144), um den berechneten Absenkungswert (146) zu erhalten, wobei der Prozentsatz (142a) auf einem aktuellen Neigungsfaktorwert (124) für die aktuelle Z-Koordinate (136b) basiert, der auf der Grundlage des Arrays (130) der Z-Werte (114) und der entsprechenden Neigungsfaktorwerte (124) berechnet wird;
Dekrementieren der aktuellen Z-Koordinate (136b) um den zuletzt berechneten Absenkungswert (146); und
Bestimmen eines Schnittpunkts (150) des Oberflächennetzes (82) mit der horizontalen Ebene (118a) an der aktuellen Z-Koordinate (136b), wodurch ein Werkzeugweg (32) für die aktuelle Z-Koordinate (136b) definiert wird;

so dass die neigungssynchronisierte Werkzeugweganwendung (110) eine Mehrzahl von Werkzeugwegen (32) erzeugt, die jeweils durch die berechneten Absenkungswerte (146) voneinander beabstandet sind, um die Reihe von neigungssynchronisierten Werkzeugwegen (32) zu erhalten; und
wobei der Computer (64) eine Ausgabedatei (168) an eine numerisch gesteuerte Inkrementellblechumformungsmaschine (94) sendet, wobei die Ausgabedatei (168), wenn sie von der numerisch gesteuerten inkrementellen Blechumformungsmaschine (94) ausgeführt wird, die numerisch gesteuerte Inkrementellblechumformungsmaschine (94) veranlasst, ein inkrementelles Blechumformungswerkzeug (96) entlang der Reihe von neigungssynchronisierten Werkzeugwegen (32) zu führen, um das konturierte Teil (36) inkrementell zu formen.

**10.** Computerimplementiertes System (60) nach Anspruch 9, bei dem die Vielecke (84) des Oberflächennetzes (82) eines oder mehrere von Dreiecken (84a), Vierecken (84b), Fünfecken (84c), Sechsecken (84d) und einer Kombination von Vielecken (84) umfassen, die die dreidimensionalen Geometrie (78) des konturierten Teils (36) approximieren.

**11.** Computerimplementiertes System (60) nach Anspruch 9 oder 10, bei dem die Modellierungsanwendung (70) das Oberflächennetz (82) aus einer versetzten Oberfläche (90) erzeugt, die in einem konstanten Offsetabstand (92) von dem konturierten Teil (36) beabstandet ist, wobei die versetzte Oberfläche (90) eine Rohblechdicke (93) und einen Radius (100) einer Werkzeugspitze (98) des Werkzeugs (96) für die inkrementelle Blechumformung (ISF) berücksichtigt.

**12.** Computerimplementiertes System (60) nach einem der Ansprüche 9 bis 11, wobei das Array (130) eine Nachschlagetabelle (134) der Z-Werte (114) und der den Z-Werten (114) entsprechenden Neigungsfaktorwerte (124) umfasst.

**13.** Computerimplementiertes System (60) nach einem der Ansprüche 9 bis 12, bei dem der aktuelle Neigungsfaktorwert (124) für die aktuelle Z-Koordinate (136b) unter Verwendung von Interpolation (166) berechnet wird, wenn die aktuelle Z-Koordinate (136b) zwischen zwei benachbarten Z-Werten (114b) der in dem Array (130) definierten Z-Werte (114) liegt.

**14.** Computerimplementiertes System (60) nach einem der Ansprüche 9 bis 13, bei dem der berechnete Absenkungswert (146) als der minimale Absenkungswert (144) zuzüglich einer Größe des maximalen Absenkungswerts (142) abzüglich des minimalen Absenkungswerts (144) multipliziert mit einer Größe von 1 abzüglich des aktuellen Steigungsfaktorwerts (1224) berechnet wird.

**15.** Computerimplementiertes System (60) nach einem der Ansprüche 9 bis 13, bei dem das Konturteil (36) ein Flugzeugkonturteil (38) zur Verwendung in einem Flugzeug (250a) umfasst.

**Revendications**

**1.** Procédé mis en oeuvre par ordinateur (10) pour générer une série de trajets d'outil synchronisés en pente (32) pour formage incrémentiel de tôle (ISF) (34) d'une pièce profilée (36) en utilisant un système informatique (62) comprenant un ordinateur (64) présentant un dispositif processeur (66), et comprenant une application de modélisation (70) et une application de trajets d'outil synchronisés en pente (110), chacune implémentée par un programme logiciel lisible par ordinateur (72) et chacune exécutée par l'ordinateur (64), le procédé mis en oeuvre par ordinateur (10) comprenant les étapes consistant à :

utiliser l'application de trajets d'outil synchronisés en pente (110) exécutée par l'ordinateur (64) pour effectuer (14) une exécution d'application de trajets d'outil synchronisés en pente (112) comprenant les sous-étapes consistant à :

définir (16) une pluralité de valeurs Z équidistantes (114a) le long d'un axe Z (116) où, pour chacune de la pluralité de valeurs Z équidistantes (114a), un plan horizontal à cette valeur Z recoupe une surface (80) qui se rapproche d'une géométrie tridimensionnelle (78) de la pièce profilée (36) pour définir une ligne ;
déterminer (18), pour chacune de la pluralité de valeurs Z équidistantes (114a), une valeur de facteur de pente (124) basée sur un angle de pente maximum de la surface (80) le long de la ligne, pour définir un réseau (130) de valeurs Z (114) et de valeurs de facteur de pente (124) qui correspondent aux valeurs Z (114) ; et
définir (20) une coordonnée Z initiale (136a) correspondant à une partie de départ (88a) de la surface (80), en tant que coordonnée Z actuelle (136b) ;

l'exécution d'application de trajets d'outil synchronisés en pente (112), ensuite de manière itérative :

calculant (22) une série de valeurs abaissées calculées (146) en calculant chaque valeur abaissée calculée (146) comme une somme d'une valeur abaissée minimum (144) et d'un pourcentage (142a) d'une valeur abaissée maximum (142) moins la valeur abaissée minimum (144), pour obtenir la valeur abaissée calculée (146), le pourcentage (142a) étant basé sur une valeur de facteur de pente actuelle (124) pour la coordonnée Z actuelle (136b), qui est calculée sur la base du réseau (130) des valeurs Z (114) et des valeurs de facteur de pente correspondantes (124) ;
diminuant (24) la coordonnée Z actuelle (136b) de la dernière valeur abaissée calculée (146) ; et

déterminant (26) une intersection (150) de la surface (80) avec le plan horizontal (118a) au niveau de la coordonnée Z actuelle (136b), en définissant ainsi un trajet d'outil (32) pour la coordonnée Z actuelle (136b) ;

de telle sorte que l'application de trajets d'outil synchronisés en pente (110) crée une pluralité de trajets d'outil (32) qui sont chacun respectivement espacés par les valeurs abaissées calculées (146), pour obtenir la série de trajets d'outil synchronisés en pente (32) ; et
envoyer (28) un fichier de sortie (168), à l'aide de l'ordinateur (64), à une machine de formage incrémentiel de tôle (ISF) à commande numérique (94), dans lequel le fichier de sortie (168), lorsqu'il est exécuté par la machine de formage incrémentiel de tôle (ISF) à commande numérique (94), amène la machine de formage incrémentiel de tôle (ISF) à commande numérique (94) à diriger un outil de formage incrémentiel de tôle (ISF) (96) le long de la série de trajets d'outil synchronisés en pente (32) pour former de manière incrémentielle la pièce profilée (36).

2. Procédé mis en oeuvre par ordinateur (10) selon la revendication 1, dans lequel avant d'effectuer (14) l'exécution d'application de trajets d'outil synchronisés en pente (112), le procédé mis en oeuvre par ordinateur (10) comprend en outre l'étape consistant à effectuer (30), à l'aide de l'ordinateur (64) et de l'application de modélisation (70), une discrétisation de surface (74) de la géométrie tridimensionnelle (78) de la pièce profilée (36) pour produire la surface (80), dans lequel la discrétisation de surface (74) produit un maillage de surface (82) de polygones (84) qui se rapproche de la géométrie tridimensionnelle (78) de la pièce profilée (36).

3. Procédé mis en oeuvre par ordinateur (10) selon la revendication 2, dans lequel le maillage de surface (82) de polygones (84) comprend un ou plusieurs parmi des triangles (84a), des quadrilatères (84b), des pentagones (84c), des hexagones (84d), et une combinaison de polygones (84), qui se rapproche de la géométrie tridimensionnelle (78) de la pièce profilée (36).

4. Procédé mis en oeuvre par ordinateur (10) selon la revendication 2 ou 3, dans lequel la détermination (26) de l'intersection (150) de la surface (80) comprend en outre les étapes consistant à déterminer (26) l'intersection du maillage de surface (82) avec un plan horizontal actuel (118b) au niveau de la coordonnée Z actuelle (136b), pour définir un ensemble (153) de vecteurs (154) dans le plan horizontal actuel (118b), chaque vecteur décrivant l'intersection du plan horizontal (118b) avec un polygone (84) du maillage de surface (82), et trier l'ensemble (153) de vecteurs (154) dans un agencement pointe-queue (156), pour produire le trajet d'outil (32) pour la coordonnée Z actuelle (136b).

5. Procédé mis en oeuvre par ordinateur (10) selon l'une quelconque des revendications 2 à 4, dans lequel la réalisation (30) de la discrétisation de surface (74) de la géométrie tridimensionnelle (78) de la pièce profilée (36) comprend en outre l'étape consistant à utiliser l'application de modélisation (70) pour générer, en tant que surface (80), une surface de décalage (90) qui est espacée d'une distance de décalage constante (92) de la pièce profilée (36), dans lequel la surface de décalage (90) représente une épaisseur de tôle vierge (93) et un rayon de pointe d'outil de formage incrémentiel de tôle (ISF) (100) d'une pointe d'outil de formage incrémentiel de tôle (ISF) (98) de l'outil de formage incrémentiel de tôle (ISF) (96).

6. Procédé mis en oeuvre par ordinateur (10) selon l'une quelconque des revendications 1 à 5, dans lequel la détermination (18) des valeurs de facteur de pente (124) pour chacune de la pluralité de valeurs Z équidistantes (114a) comprend en outre l'étape consistant à déterminer (18), pour chacune de la pluralité de valeurs Z équidistantes (114a), la valeur de facteur de pente (124) pour la surface (80) afin de définir le réseau (130) comprenant une table de consultation (134) des valeurs Z (114) et des valeurs de facteur de pente (124) correspondant aux valeurs Z (114).

7. Procédé mis en oeuvre par ordinateur (10) selon l'une quelconque des revendications 1 à 6, dans lequel le calcul (22) des valeurs abaissées calculées (146) comprend en outre l'étape consistant à calculer la valeur de facteur de pente actuelle (124) pour la coordonnée Z actuelle (136b) en utilisant une interpolation (166) lorsque la coordonnée Z actuelle (136b) est entre deux valeurs Z adjacentes (114b) des valeurs Z (114) définies dans le réseau (130).

8. Procédé mis en oeuvre par ordinateur (10) selon l'une quelconque des revendications 1 à 7, dans lequel le calcul (22) de la valeur abaissée calculée (146) comprend en outre l'étape consistant à calculer la valeur abaissée calculée (146) en tant que valeur abaissée minimum (144) plus une quantité de la valeur abaissée maximum (142) moins la valeur abaissée minimum (144) multipliée par une quantité de 1 moins la valeur de facteur de pente actuelle (124), pour obtenir la valeur abaissée calculée (146).

**9.** Système mis en oeuvre par ordinateur (60) pour générer une série de trajets d'outil synchronisés en pente (32) pour un formage incrémentiel de tôle (ISF) (34) d'une pièce profilée (36), le système mis en oeuvre par ordinateur (60) comprenant :

un ordinateur (64) présentant un dispositif processeur (66) et une application de modélisation (70) mise en oeuvre par un premier programme logiciel lisible par ordinateur (72a) et exécutée par l'ordinateur (64), l'application de modélisation (70) étant adaptée pour effectuer une discrétisation de surface (74) d'une géométrie tridimensionnelle (78) de la pièce profilée (36), pour produire un maillage de surface (82) de polygones (84) qui se rapproche de la géométrie tridimensionnelle (78) de la pièce profilée (36) ; et
une application de trajets d'outil synchronisés en pente (110) mise en oeuvre par un second logiciel lisible par ordinateur (72b) et exécutée par l'ordinateur (64), l'application de trajets d'outil synchronisés en pente (110) étant adaptée pour :

définir une pluralité de valeurs Z équidistantes (114a) le long d'un axe Z (116) où, pour chacune de la pluralité de valeurs Z équidistantes (114a), un plan horizontal à cette valeur Z recoupe le maillage de surface (82) de polygones (84) qui se rapproche de la géométrie tridimensionnelle (78) de la pièce profilée (36) pour définir une ligne ;
déterminer, pour chacune de la pluralité de valeurs Z équidistantes (114a), une valeur de facteur de pente (124) basée sur un angle de pente maximum de la surface (80) le long de la ligne, pour définir un réseau (130) de valeurs Z (114) et de valeurs de facteur de pente (124) qui correspondent aux valeurs Z (114) ; et
définir une coordonnée Z initiale (136a) correspondant à une partie de départ (88a) du maillage de surface (82), en tant que coordonnée Z actuelle (136b) ;

l'application de trajets d'outil synchronisés en pente (110) étant ensuite adaptée pour, de manière itérative :

calculer une série de valeurs abaissées calculées (146) en calculant chaque valeur abaissée calculée (146) comme une somme d'une valeur abaissée minimum (144) et d'un pourcentage (142a) d'une valeur abaissée maximum (142) moins la valeur abaissée minimum (144), pour obtenir la valeur abaissée calculée (146), le pourcentage (142a) étant basé sur une valeur de facteur de pente actuelle (124) pour la coordonnée Z actuelle (136b), qui est calculée sur la base du réseau (130) des valeurs Z (114) et des valeurs de facteur de pente correspondantes (124) ;
diminuer la coordonnée Z actuelle (136b) de la dernière valeur abaissée calculée (146) ; et
déterminer une intersection (150) du maillage de surface (82) avec le plan horizontal (118a) au niveau de la coordonnée Z actuelle (136b), en définissant ainsi une trajectoire d'outil (32) pour la coordonnée Z actuelle (136b) ;

de telle sorte que l'application de trajets d'outil synchronisés en pente (110) crée une pluralité de trajets d'outil (32) qui sont chacun respectivement espacés par les valeurs abaissées calculées (146), pour obtenir la série de trajets d'outil synchronisés en pente (32) ; et
dans lequel l'ordinateur (64) envoie un fichier de sortie (168) à une machine de formage incrémentiel de tôle à commande numérique (94), dans lequel le fichier de sortie (168), lorsqu'il est exécuté par la machine de formage incrémentiel de tôle à commande numérique (ISF) (94), amène la machine de formage incrémentiel de tôle à commande numérique (94) à diriger un outil de formage incrémentiel de tôle (96) le long de la série de trajets d'outil synchronisés en pente (32) pour former de manière incrémentielle la pièce profilée (36).

**10.** Système mis en oeuvre par ordinateur (60) selon la revendication 9, dans lequel les polygones (84) du maillage de surface (82) comprennent un ou plusieurs parmi des triangles (84a), des quadrilatères (84b), des pentagones (84c), des hexagones (84d), et une combinaison de polygones (84), qui se rapproche de la géométrie tridimensionnelle (78) de la pièce profilée (36).

**11.** Système mis en oeuvre par ordinateur (60) selon la revendication 9 ou 10, dans lequel l'application de modélisation (70) génère en tant que maillage de surface (82), une surface de décalage (90) espacée d'une distance de décalage constante (92) à partir de la pièce profilée (36), dans lequel la surface décalée (90) tient compte d'une épaisseur de tôle vierge (93) et d'un rayon de pointe d'outil de formage incrémentiel de tôle (ISF) (100) d'une pointe d'outil de formage incrémentiel de tôle (ISF) (98) de l'outil de formage incrémentiel de tôle (ISF) (96).

**12.** Système mis en oeuvre par ordinateur (60) selon l'une quelconque des revendications 9 à 11, dans lequel le réseau (130) comprend une table de consultation (134) des valeurs Z (114) et des valeurs de facteur de pente (124) correspondant aux valeurs Z (114).

**13.** Système mis en oeuvre par ordinateur (60) selon l'une quelconque des revendications 9 à 12, dans lequel la valeur de facteur de pente actuelle (124) pour la coordonnée Z actuelle (136b) est calculée en utilisant une interpolation (166), lorsque la coordonnée Z actuelle (136b) est entre deux valeurs Z adjacentes (114b) des valeurs Z (114) définies dans le réseau (130).

**14.** Système mis en oeuvre par ordinateur (60) selon l'une quelconque des revendications 9 à 13, dans lequel la valeur abaissée calculée (146) est calculée en tant que valeur abaissée minimum (144) plus une quantité de la valeur abaissée maximum (142) moins la valeur abaissée minimum (144) multipliée par une quantité de 1 moins la valeur de facteur de pente actuelle (1224).

**15.** Système mis en oeuvre par ordinateur (60) selon l'une quelconque des revendications 9 à 13, dans lequel la pièce profilée (36) comprend une pièce profilée d'aéronef (38) à utiliser dans un aéronef (250a).

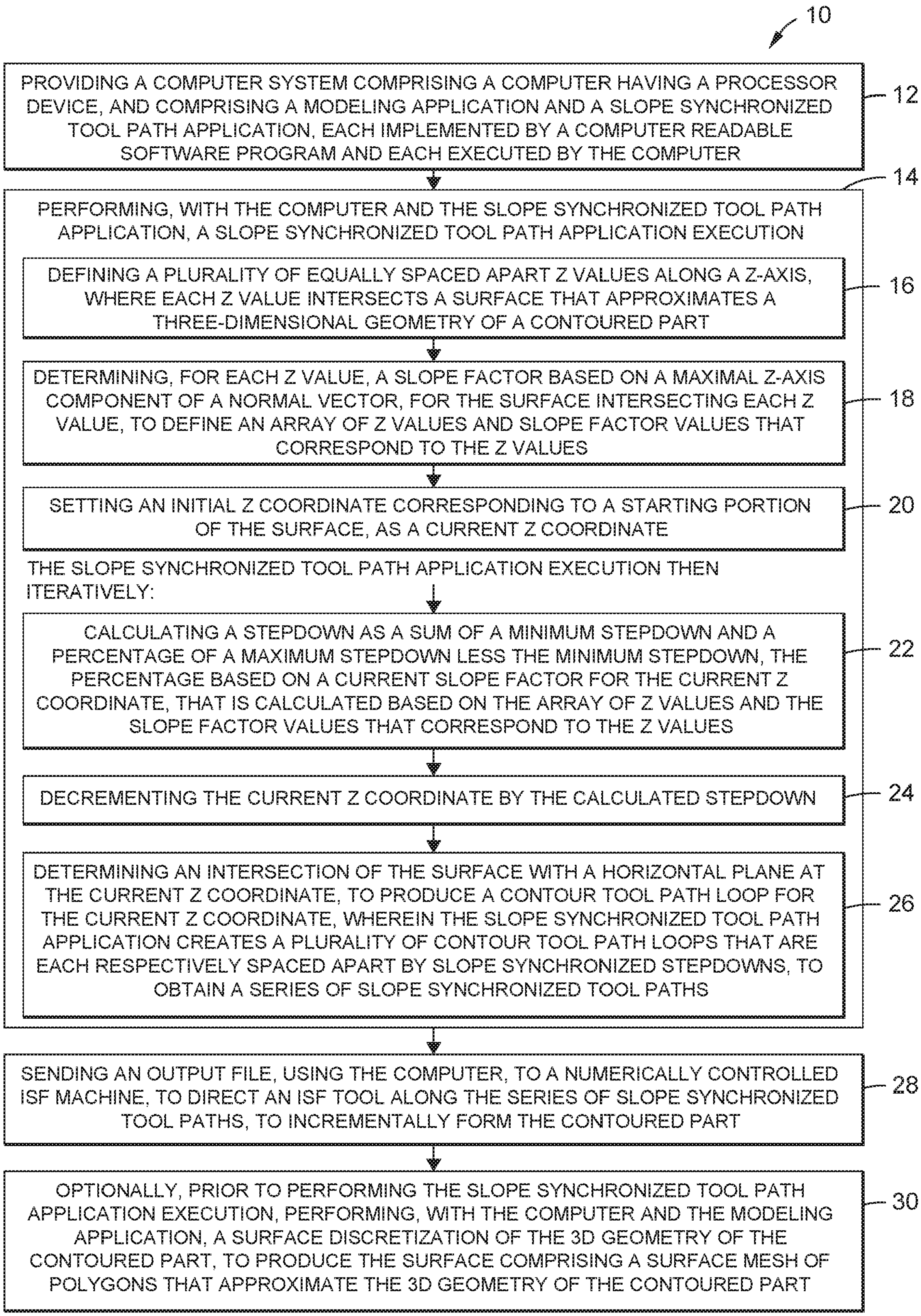
10
PROVIDING A COMPUTER SYSTEM COMPRISING A COMPUTER HAVING A PROCESSOR DEVICE, AND COMPRISING A MODELING APPLICATION AND A SLOPE SYNCHRONIZED TOOL PATH APPLICATION, EACH IMPLEMENTED BY A COMPUTER READABLE SOFTWARE PROGRAM AND EACH EXECUTED BY THE COMPUTER
12
PERFORMING, WITH THE COMPUTER AND THE SLOPE SYNCHRONIZED TOOL PATH APPLICATION, A SLOPE SYNCHRONIZED TOOL PATH APPLICATION EXECUTION
14
DEFINING A PLURALITY OF EQUALLY SPACED APART Z VALUES ALONG A Z-AXIS, WHERE EACH Z VALUE INTERSECTS A SURFACE THAT APPROXIMATES A THREE-DIMENSIONAL GEOMETRY OF A CONTOURED PART
16
DETERMINING, FOR EACH Z VALUE, A SLOPE FACTOR BASED ON A MAXIMAL Z-AXIS COMPONENT OF A NORMAL VECTOR, FOR THE SURFACE INTERSECTING EACH Z VALUE, TO DEFINE AN ARRAY OF Z VALUES AND SLOPE FACTOR VALUES THAT CORRESPOND TO THE Z VALUES
18
SETTING AN INITIAL Z COORDINATE CORRESPONDING TO A STARTING PORTION OF THE SURFACE, AS A CURRENT Z COORDINATE
20
THE SLOPE SYNCHRONIZED TOOL PATH APPLICATION EXECUTION THEN ITERATIVELY:
CALCULATING A STEPDOWN AS A SUM OF A MINIMUM STEPDOWN AND A PERCENTAGE OF A MAXIMUM STEPDOWN LESS THE MINIMUM STEPDOWN, THE PERCENTAGE BASED ON A CURRENT SLOPE FACTOR FOR THE CURRENT Z COORDINATE, THAT IS CALCULATED BASED ON THE ARRAY OF Z VALUES AND THE SLOPE FACTOR VALUES THAT CORRESPOND TO THE Z VALUES
22
DECREMENTING THE CURRENT Z COORDINATE BY THE CALCULATED STEPDOWN
24
DETERMINING AN INTERSECTION OF THE SURFACE WITH A HORIZONTAL PLANE AT THE CURRENT Z COORDINATE, TO PRODUCE A CONTOUR TOOL PATH LOOP FOR THE CURRENT Z COORDINATE, WHEREIN THE SLOPE SYNCHRONIZED TOOL PATH APPLICATION CREATES A PLURALITY OF CONTOUR TOOL PATH LOOPS THAT ARE EACH RESPECTIVELY SPACED APART BY SLOPE SYNCHRONIZED STEPDOWNS, TO OBTAIN A SERIES OF SLOPE SYNCHRONIZED TOOL PATHS
26
SENDING AN OUTPUT FILE, USING THE COMPUTER, TO A NUMERICALLY CONTROLLED ISF MACHINE, TO DIRECT AN ISF TOOL ALONG THE SERIES OF SLOPE SYNCHRONIZED TOOL PATHS, TO INCREMENTALLY FORM THE CONTOURED PART
28
OPTIONALLY, PRIOR TO PERFORMING THE SLOPE SYNCHRONIZED TOOL PATH APPLICATION EXECUTION, PERFORMING, WITH THE COMPUTER AND THE MODELING APPLICATION, A SURFACE DISCRETIZATION OF THE 3D GEOMETRY OF THE CONTOURED PART, TO PRODUCE THE SURFACE COMPRISING A SURFACE MESH OF POLYGONS THAT APPROXIMATE THE 3D GEOMETRY OF THE CONTOURED PART
30

FIG. 1A

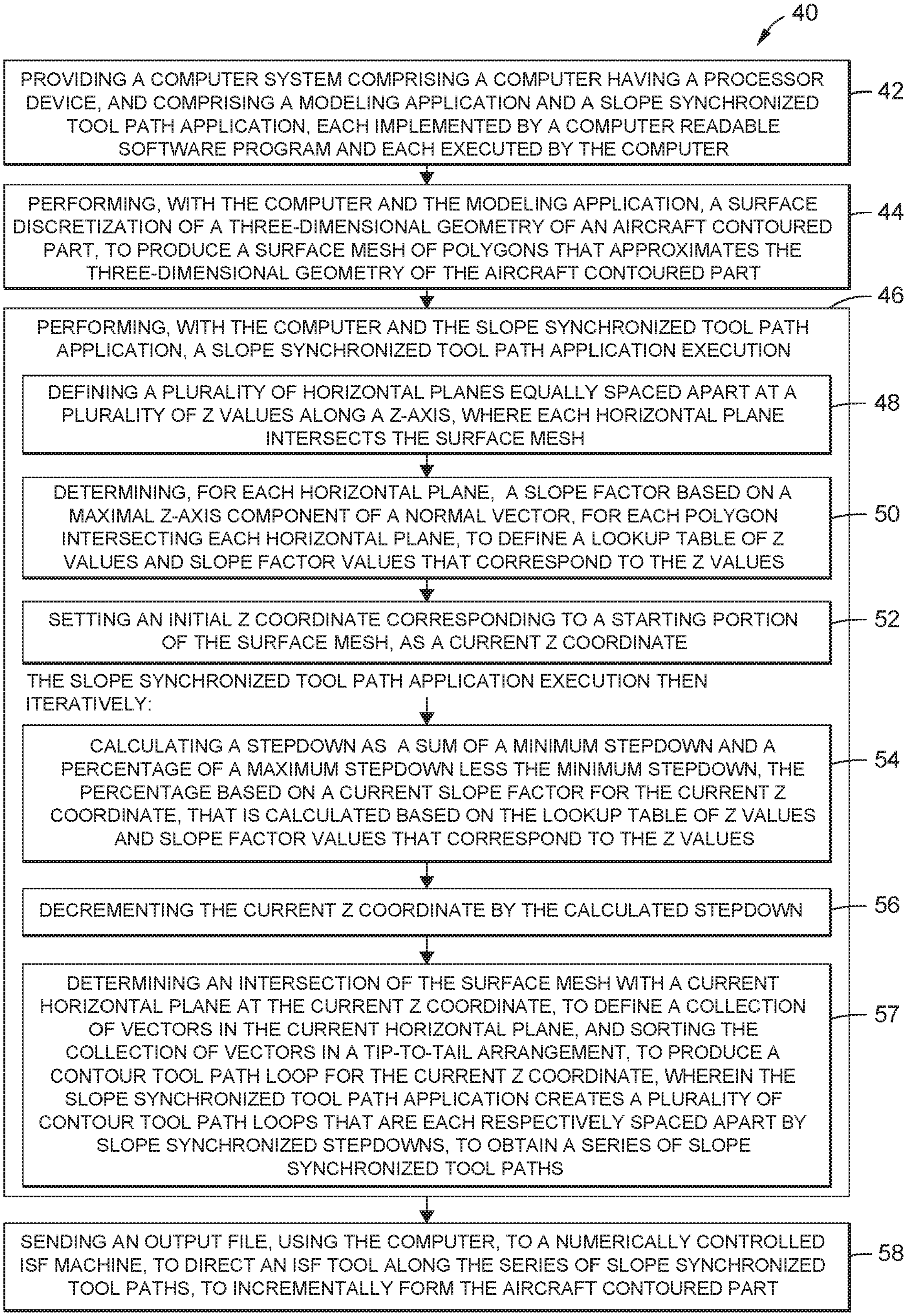
40
PROVIDING A COMPUTER SYSTEM COMPRISING A COMPUTER HAVING A PROCESSOR DEVICE, AND COMPRISING A MODELING APPLICATION AND A SLOPE SYNCHRONIZED TOOL PATH APPLICATION, EACH IMPLEMENTED BY A COMPUTER READABLE SOFTWARE PROGRAM AND EACH EXECUTED BY THE COMPUTER
42
PERFORMING, WITH THE COMPUTER AND THE MODELING APPLICATION, A SURFACE DISCRETIZATION OF A THREE-DIMENSIONAL GEOMETRY OF AN AIRCRAFT CONTOURED PART, TO PRODUCE A SURFACE MESH OF POLYGONS THAT APPROXIMATES THE THREE-DIMENSIONAL GEOMETRY OF THE AIRCRAFT CONTOURED PART
44
46
PERFORMING, WITH THE COMPUTER AND THE SLOPE SYNCHRONIZED TOOL PATH APPLICATION, A SLOPE SYNCHRONIZED TOOL PATH APPLICATION EXECUTION
DEFINING A PLURALITY OF HORIZONTAL PLANES EQUALLY SPACED APART AT A PLURALITY OF Z VALUES ALONG A Z-AXIS, WHERE EACH HORIZONTAL PLANE INTERSECTS THE SURFACE MESH
48
DETERMINING, FOR EACH HORIZONTAL PLANE, A SLOPE FACTOR BASED ON A MAXIMAL Z-AXIS COMPONENT OF A NORMAL VECTOR, FOR EACH POLYGON INTERSECTING EACH HORIZONTAL PLANE, TO DEFINE A LOOKUP TABLE OF Z VALUES AND SLOPE FACTOR VALUES THAT CORRESPOND TO THE Z VALUES
50
SETTING AN INITIAL Z COORDINATE CORRESPONDING TO A STARTING PORTION OF THE SURFACE MESH, AS A CURRENT Z COORDINATE
52
THE SLOPE SYNCHRONIZED TOOL PATH APPLICATION EXECUTION THEN ITERATIVELY:
CALCULATING A STEPDOWN AS A SUM OF A MINIMUM STEPDOWN AND A PERCENTAGE OF A MAXIMUM STEPDOWN LESS THE MINIMUM STEPDOWN, THE PERCENTAGE BASED ON A CURRENT SLOPE FACTOR FOR THE CURRENT Z COORDINATE, THAT IS CALCULATED BASED ON THE LOOKUP TABLE OF Z VALUES AND SLOPE FACTOR VALUES THAT CORRESPOND TO THE Z VALUES
54
DECREMENTING THE CURRENT Z COORDINATE BY THE CALCULATED STEPDOWN
56
DETERMINING AN INTERSECTION OF THE SURFACE MESH WITH A CURRENT HORIZONTAL PLANE AT THE CURRENT Z COORDINATE, TO DEFINE A COLLECTION OF VECTORS IN THE CURRENT HORIZONTAL PLANE, AND SORTING THE COLLECTION OF VECTORS IN A TIP-TO-TAIL ARRANGEMENT, TO PRODUCE A CONTOUR TOOL PATH LOOP FOR THE CURRENT Z COORDINATE, WHEREIN THE SLOPE SYNCHRONIZED TOOL PATH APPLICATION CREATES A PLURALITY OF CONTOUR TOOL PATH LOOPS THAT ARE EACH RESPECTIVELY SPACED APART BY SLOPE SYNCHRONIZED STEPDOWNS, TO OBTAIN A SERIES OF SLOPE SYNCHRONIZED TOOL PATHS
57
SENDING AN OUTPUT FILE, USING THE COMPUTER, TO A NUMERICALLY CONTROLLED ISF MACHINE, TO DIRECT AN ISF TOOL ALONG THE SERIES OF SLOPE SYNCHRONIZED TOOL PATHS, TO INCREMENTALLY FORM THE AIRCRAFT CONTOURED PART
58

FIG. 1B

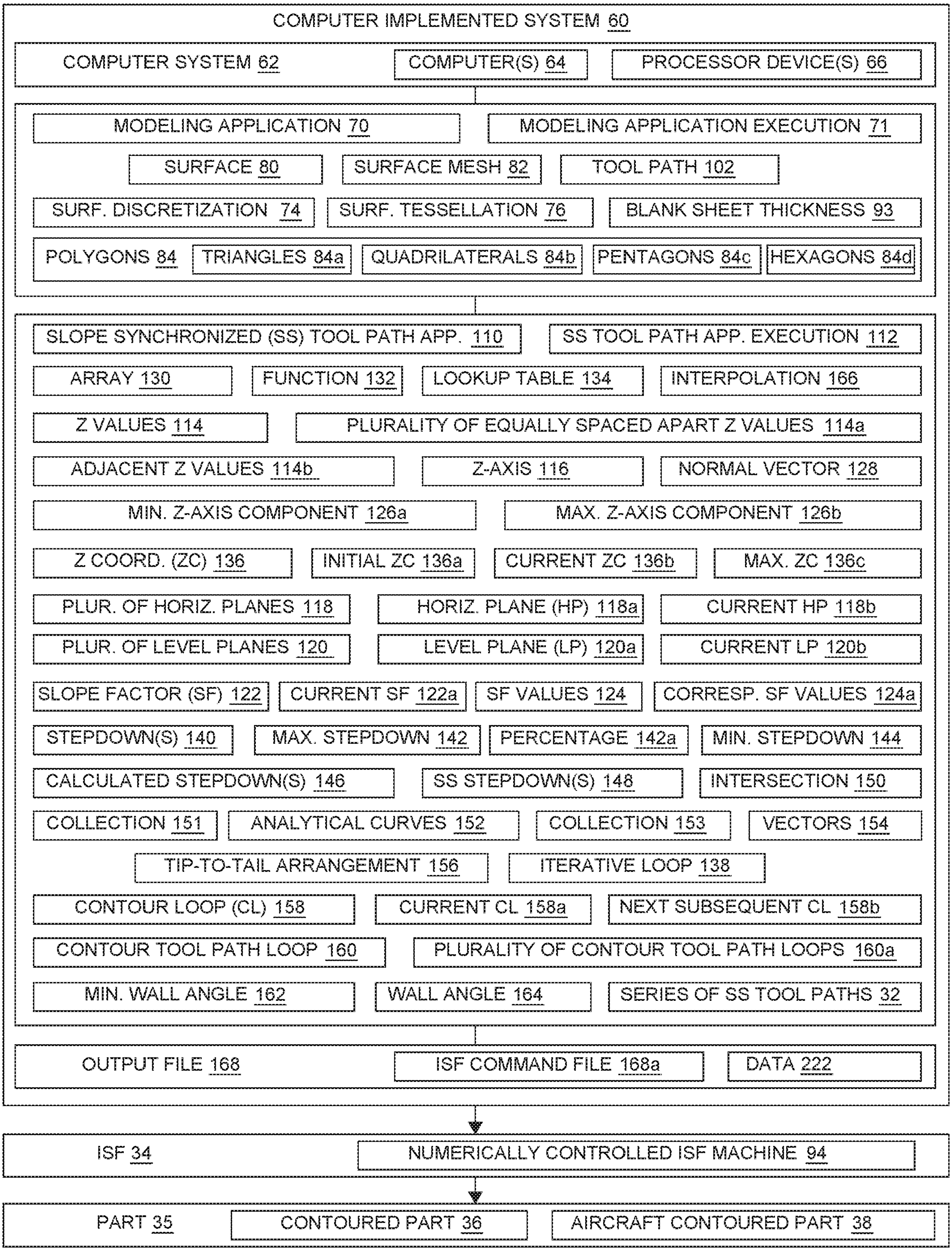
COMPUTER IMPLEMENTED SYSTEM 60
COMPUTER SYSTEM 62
COMPUTER(S) 64
PROCESSOR DEVICE(S) 66
MODELING APPLICATION 70
MODELING APPLICATION EXECUTION 71
SURFACE 80
SURFACE MESH 82
TOOL PATH 102
SURF. DISCRETIZATION 74
SURF. TESSELLATION 76
BLANK SHEET THICKNESS 93
POLYGONS 84
TRIANGLES 84a
QUADRILATERALS 84b
PENTAGONS 84c
HEXAGONS 84d
SLOPE SYNCHRONIZED (SS) TOOL PATH APP. 110
SS TOOL PATH APP. EXECUTION 112
ARRAY 130
FUNCTION 132
LOOKUP TABLE 134
INTERPOLATION 166
Z VALUES 114
PLURALITY OF EQUALLY SPACED APART Z VALUES 114a
ADJACENT Z VALUES 114b
Z-AXIS 116
NORMAL VECTOR 128
MIN. Z-AXIS COMPONENT 126a
MAX. Z-AXIS COMPONENT 126b
Z COORD. (ZC) 136
INITIAL ZC 136a
CURRENT ZC 136b
MAX. ZC 136c
PLUR. OF HORIZ. PLANES 118
HORIZ. PLANE (HP) 118a
CURRENT HP 118b
PLUR. OF LEVEL PLANES 120
LEVEL PLANE (LP) 120a
CURRENT LP 120b
SLOPE FACTOR (SF) 122
CURRENT SF 122a
SF VALUES 124
CORRESP. SF VALUES 124a
STEPDOWN(S) 140
MAX. STEPDOWN 142
PERCENTAGE 142a
MIN. STEPDOWN 144
CALCULATED STEPDOWN(S) 146
SS STEPDOWN(S) 148
INTERSECTION 150
COLLECTION 151
ANALYTICAL CURVES 152
COLLECTION 153
VECTORS 154
TIP-TO-TAIL ARRANGEMENT 156
ITERATIVE LOOP 138
CONTOUR LOOP (CL) 158
CURRENT CL 158a
NEXT SUBSEQUENT CL 158b
CONTOUR TOOL PATH LOOP 160
PLURALITY OF CONTOUR TOOL PATH LOOPS 160a
MIN. WALL ANGLE 162
WALL ANGLE 164
SERIES OF SS TOOL PATHS 32
OUTPUT FILE 168
ISF COMMAND FILE 168a
DATA 222
ISF 34
NUMERICALLY CONTROLLED ISF MACHINE 94
PART 35
CONTOURED PART 36
AIRCRAFT CONTOURED PART 38

FIG. 2A

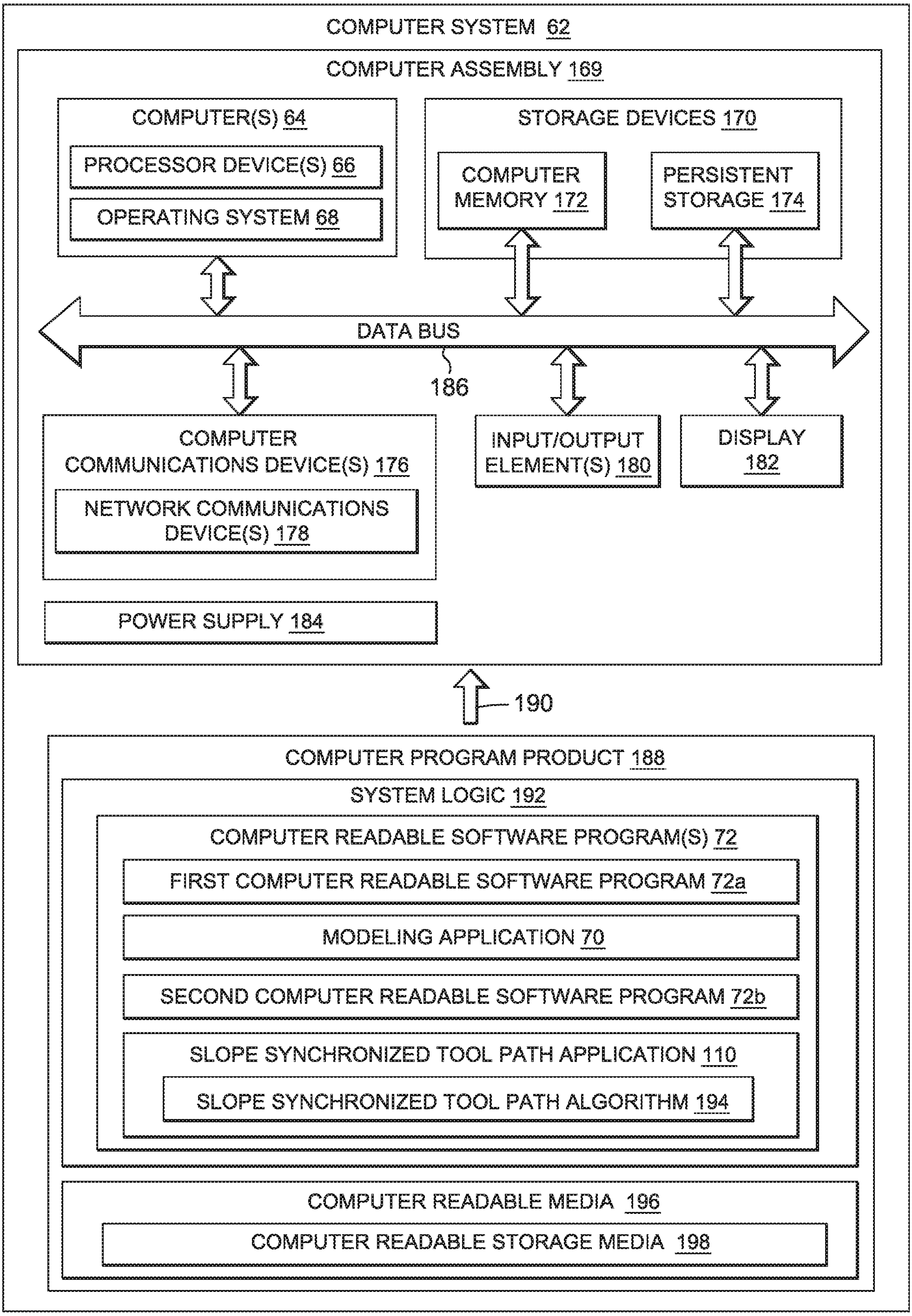
COMPUTER SYSTEM 62
COMPUTER ASSEMBLY 169
COMPUTER(S) 64
PROCESSOR DEVICE(S) 66
OPERATING SYSTEM 68
STORAGE DEVICES 170
COMPUTER MEMORY 172
PERSISTENT STORAGE 174
DATA BUS
186
COMPUTER COMMUNICATIONS DEVICE(S) 176
NETWORK COMMUNICATIONS DEVICE(S) 178
INPUT/OUTPUT ELEMENT(S) 180
DISPLAY 182
POWER SUPPLY 184
190
COMPUTER PROGRAM PRODUCT 188
SYSTEM LOGIC 192
COMPUTER READABLE SOFTWARE PROGRAM(S) 72
FIRST COMPUTER READABLE SOFTWARE PROGRAM 72a
MODELING APPLICATION 70
SECOND COMPUTER READABLE SOFTWARE PROGRAM 72b
SLOPE SYNCHRONIZED TOOL PATH APPLICATION 110
SLOPE SYNCHRONIZED TOOL PATH ALGORITHM 194
COMPUTER READABLE MEDIA 196
COMPUTER READABLE STORAGE MEDIA 198

FIG. 2B

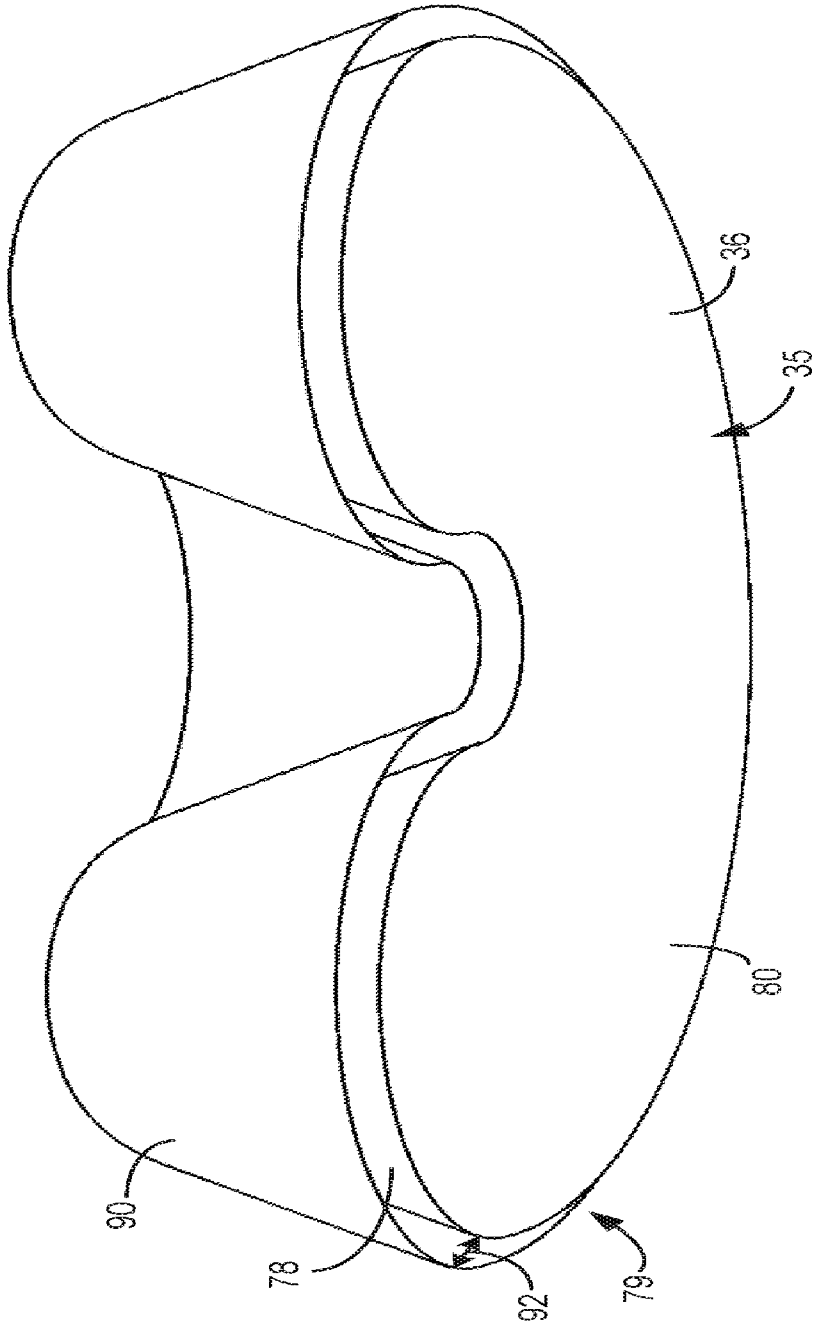


FIG. 3

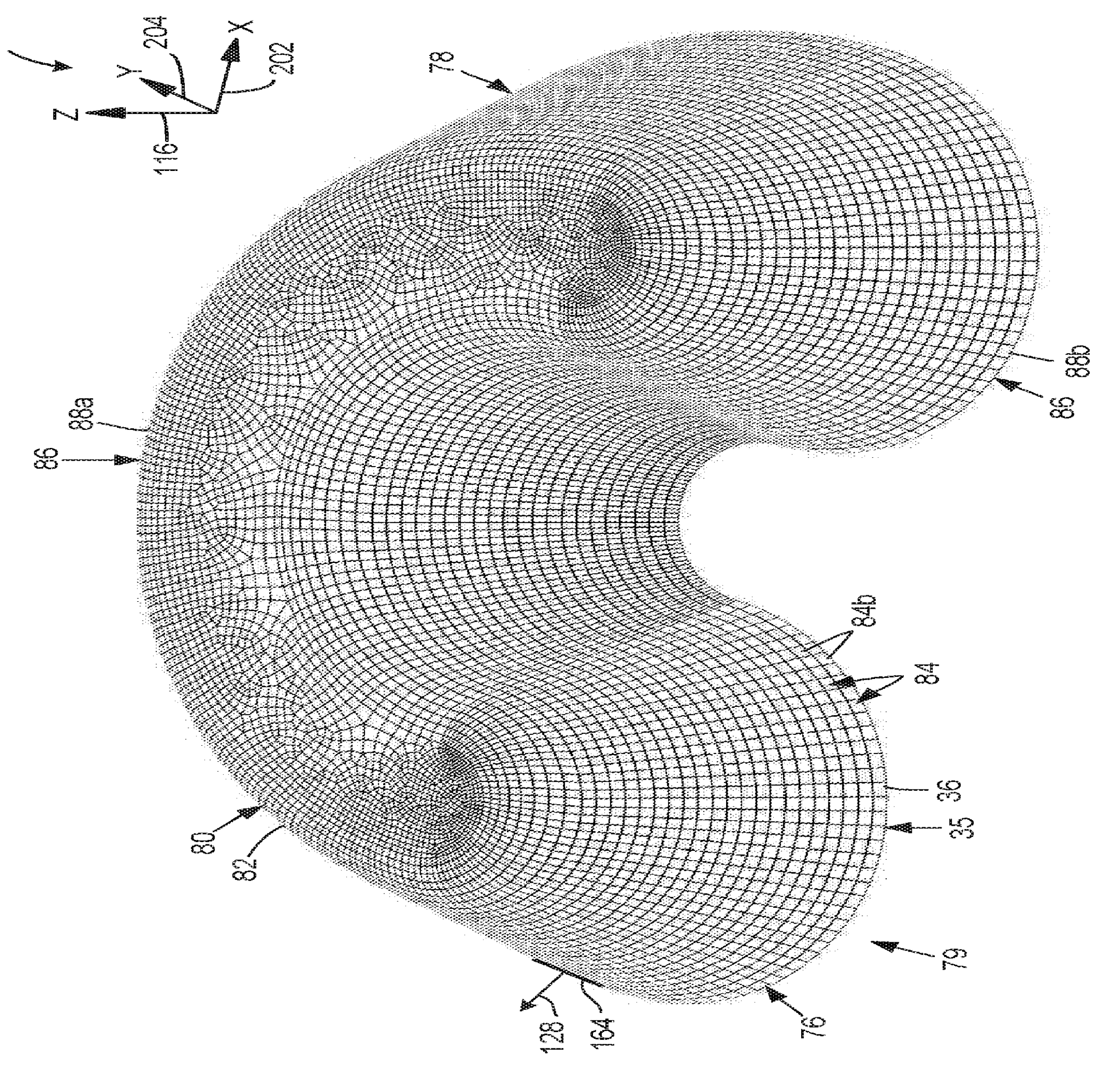
200
204
Y
X
Z
202
116
78
86
88a
88b
86
84b
84
36
35
80
82
79
76
128
164

FIG. 4

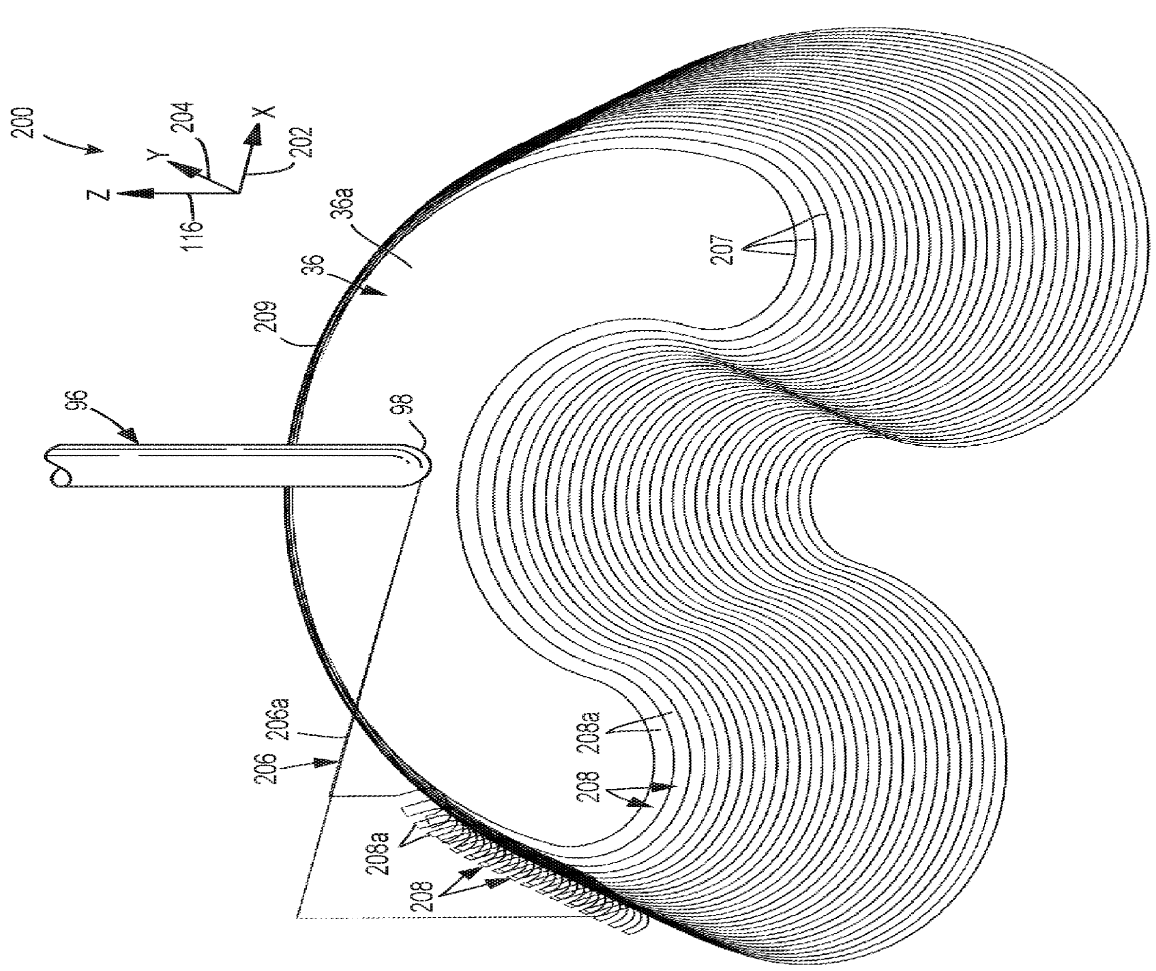


FIG. 5A

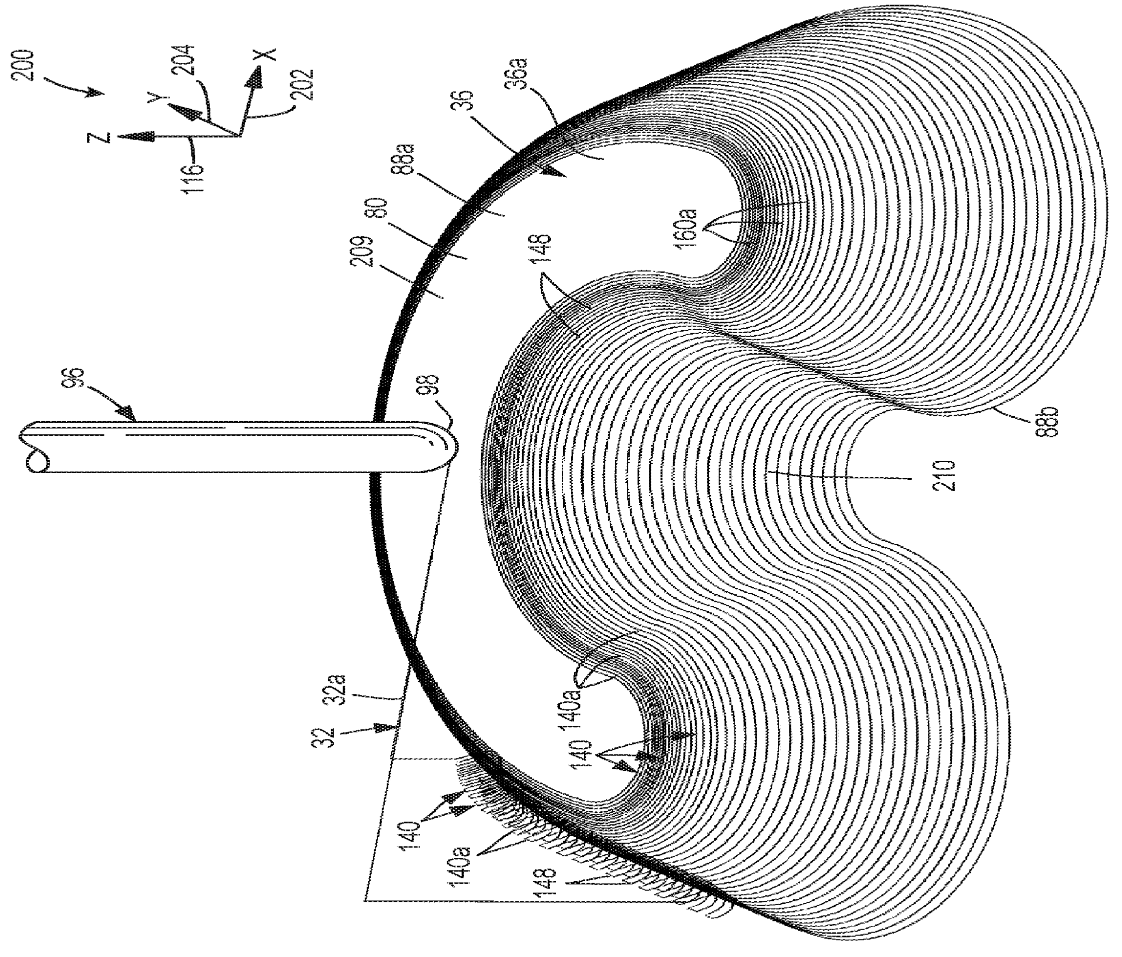
200
204
Y
X
202
Z
116
36a
36
88a
80
209
148
160a
96
98
88b
210
32
32a
140a
140
140
140a
148

FIG. 5B

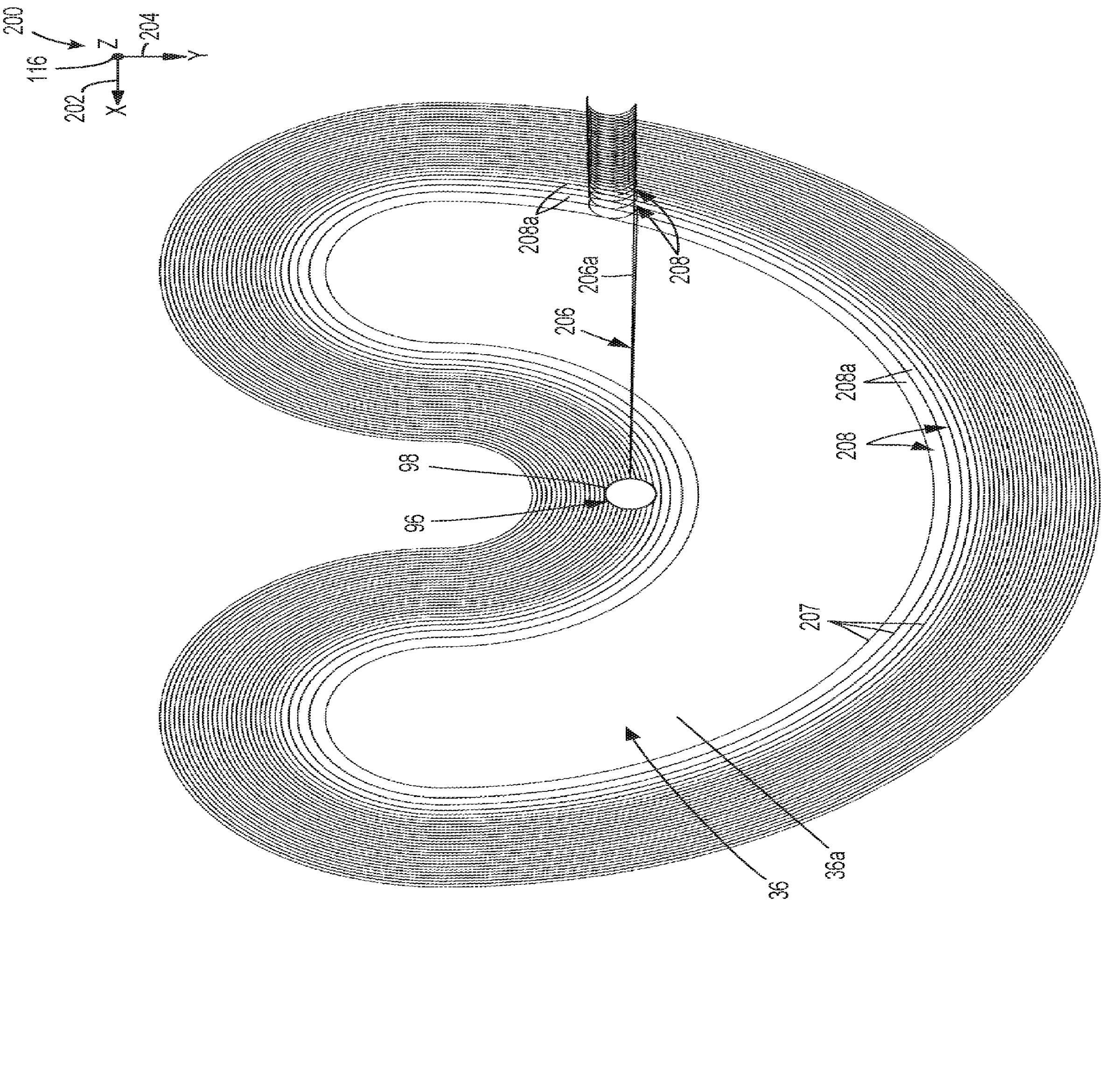


FIG. 6A

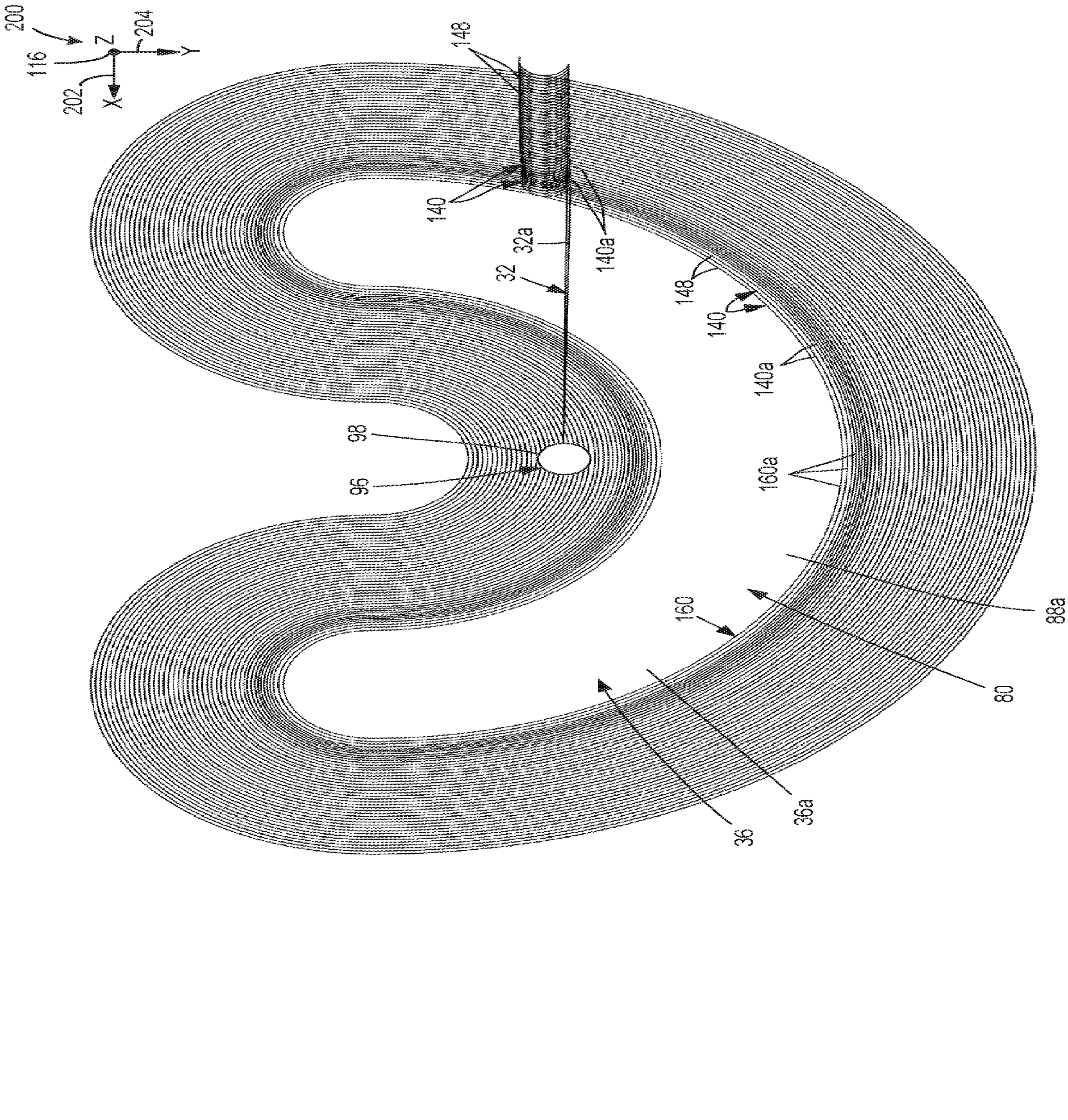
200
116
202
204
Z
X
Y
148
140
140a
32a
32
148
140
140a
98
96
160a
160
88a
80
36
36a

FIG. 6B

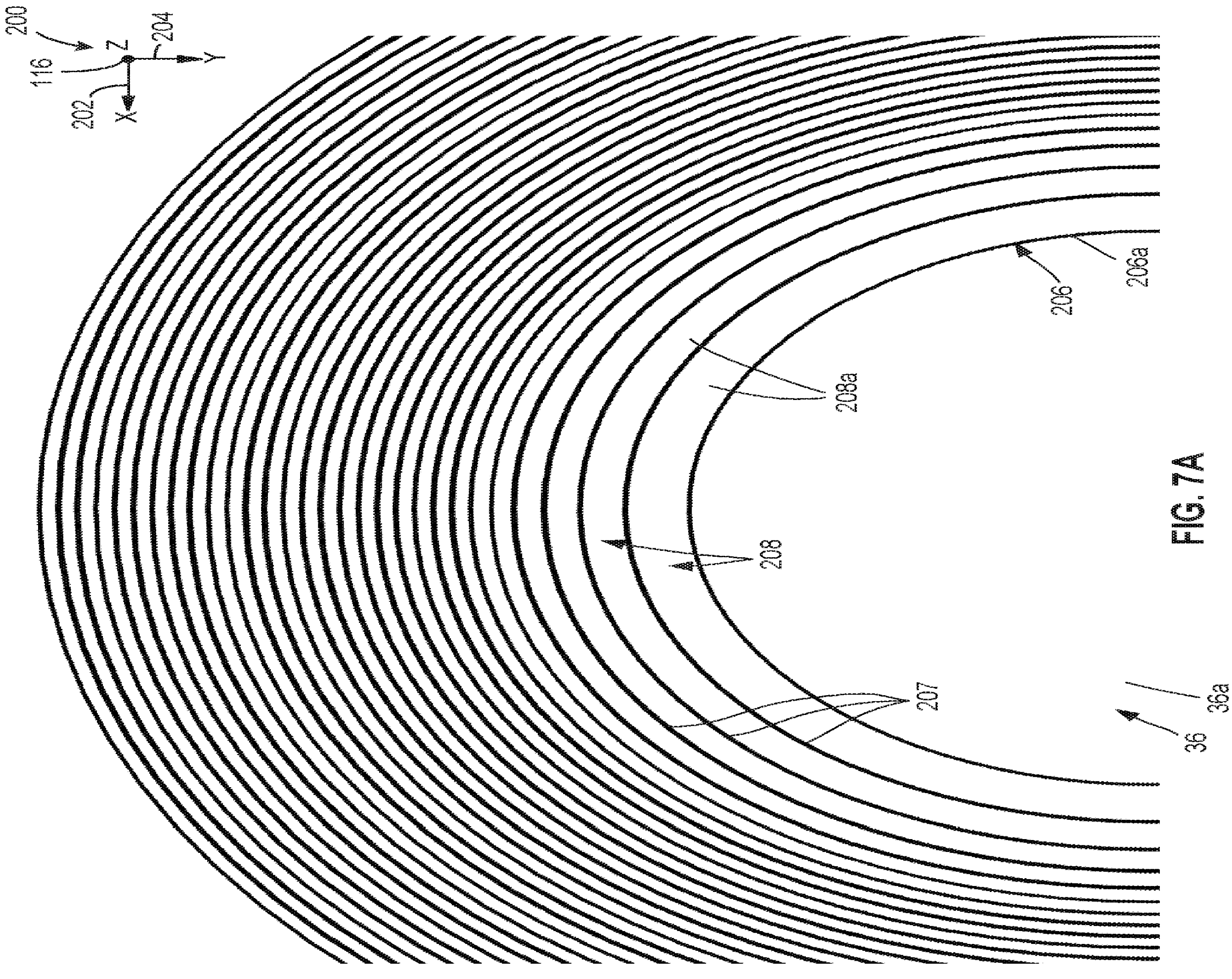


FIG. 7A

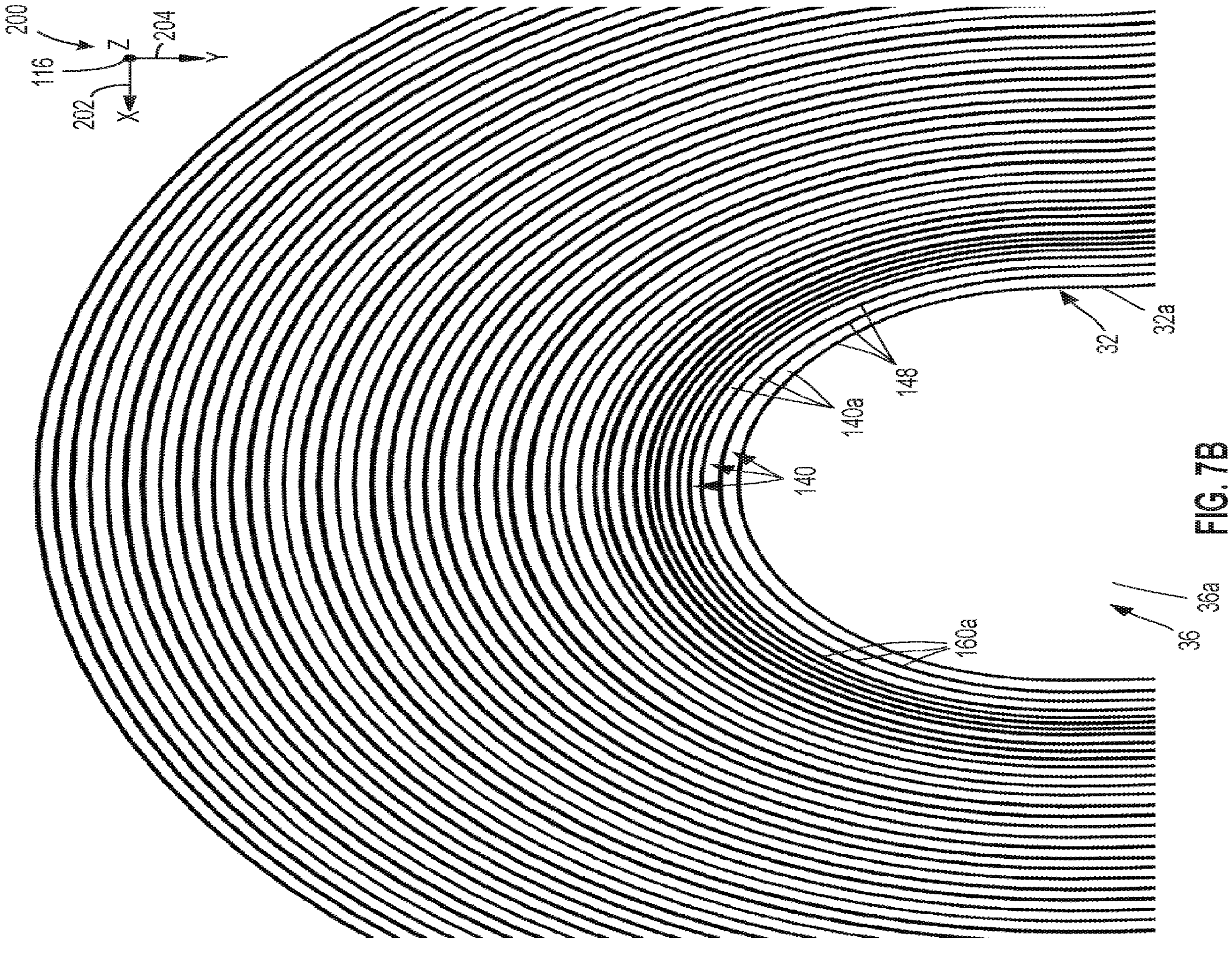


FIG. 7B

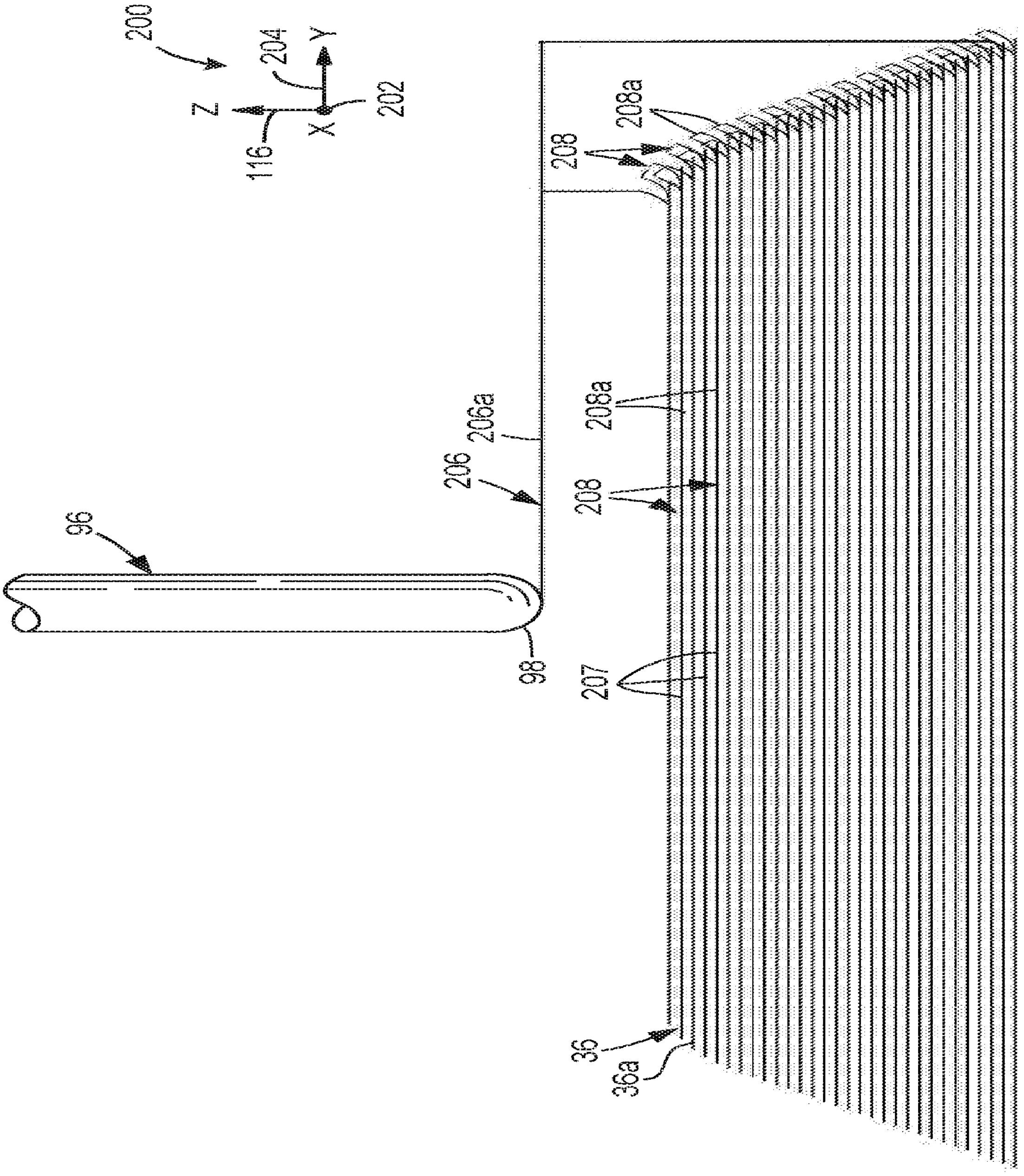


FIG. 8A

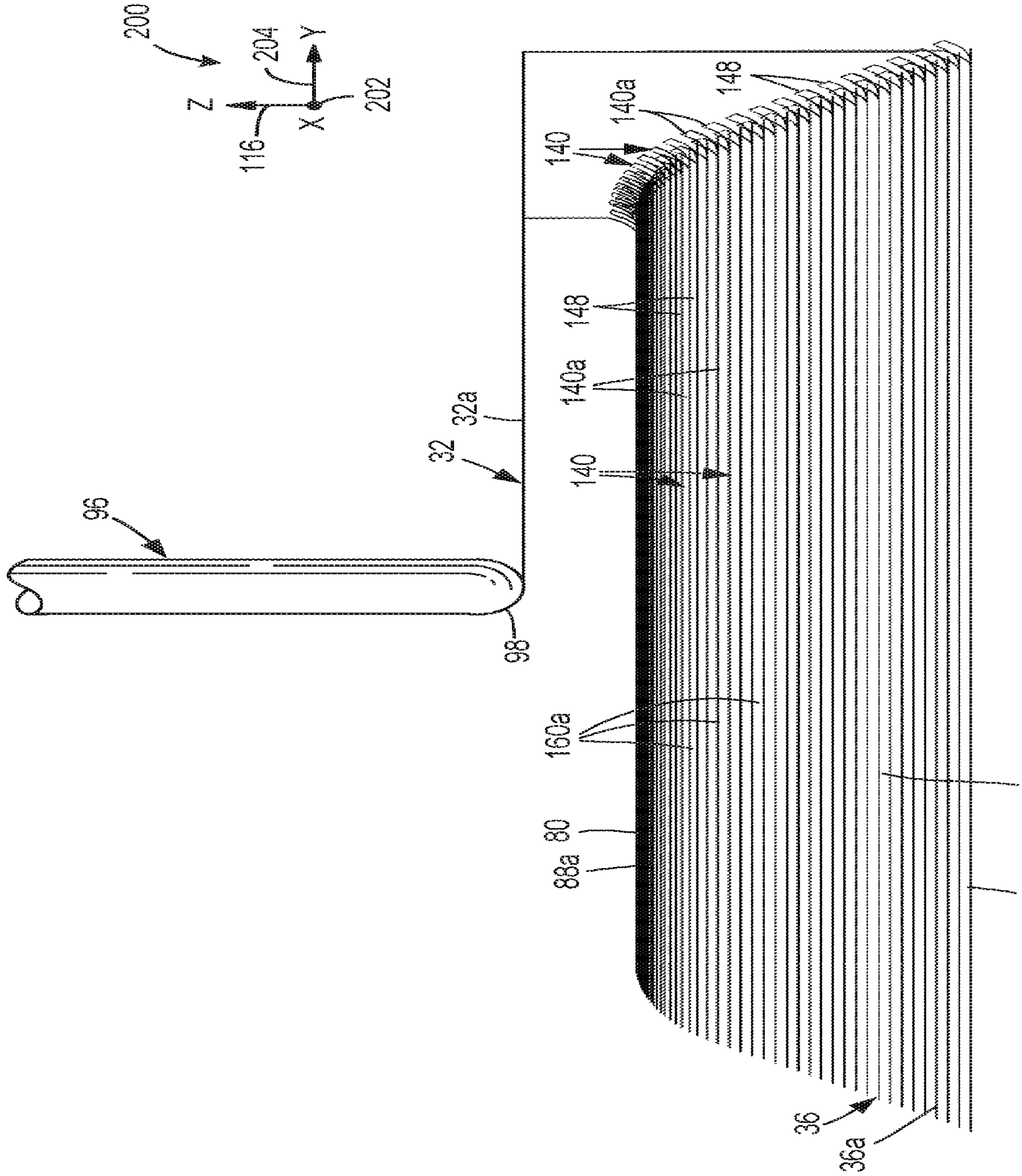
200
204
Y
Z
116
X
202
140a
148
140
148
140a
32a
32
140
96
98
160a
80
88a
210
88b
36
36a

FIG. 8B

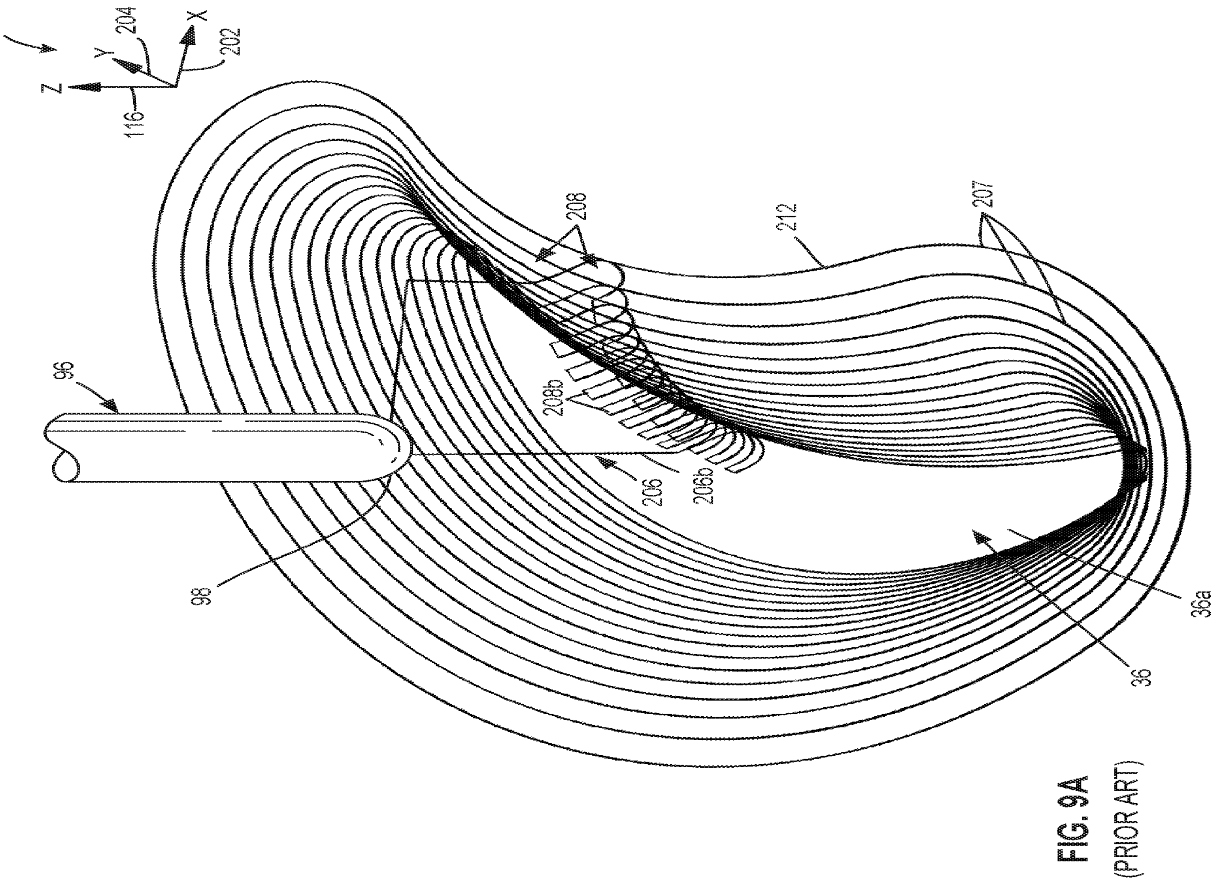


FIG. 9A
(PRIOR ART)

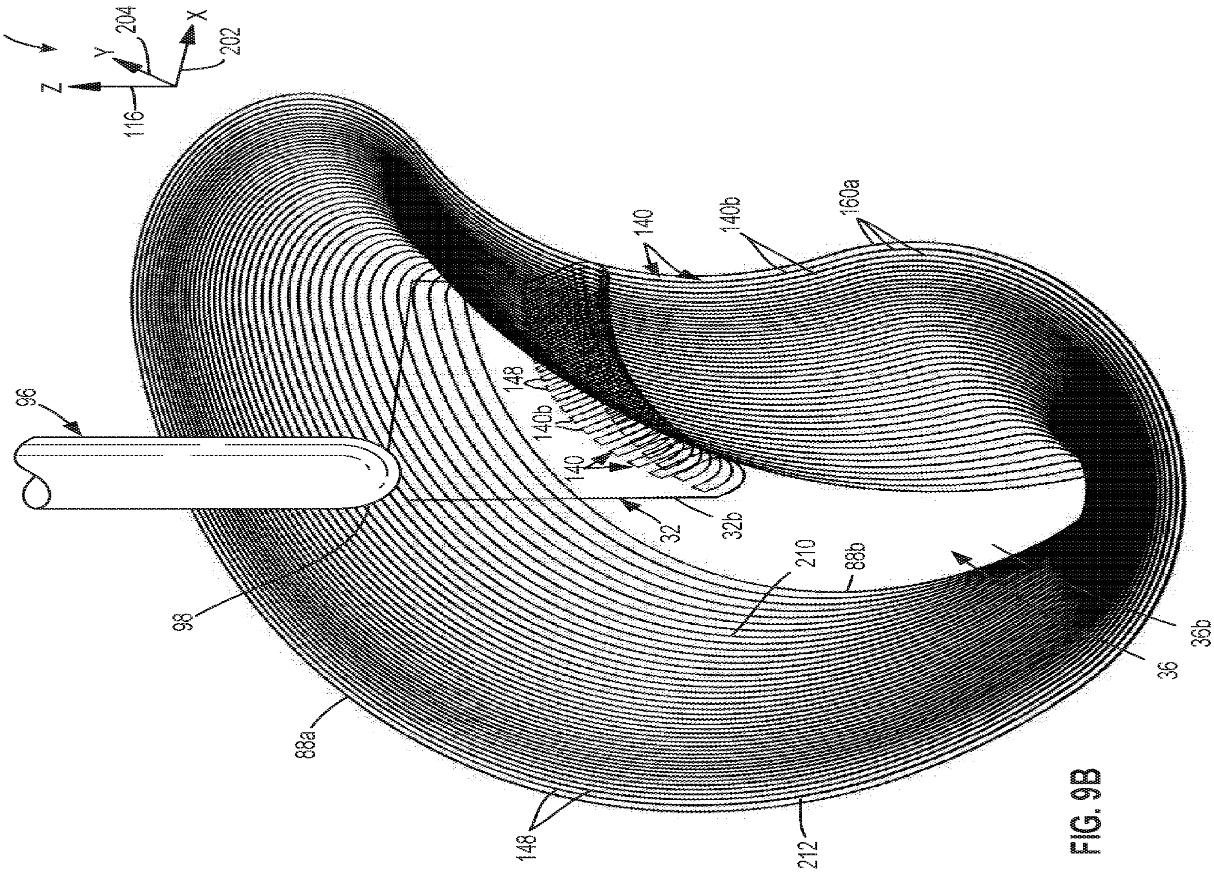
200
204
X
Y
Z
202
116
96
98
140
140b
160a
148
140b
140
32
32b
210
88b
36b
36
88a
148
212

FIG. 9B

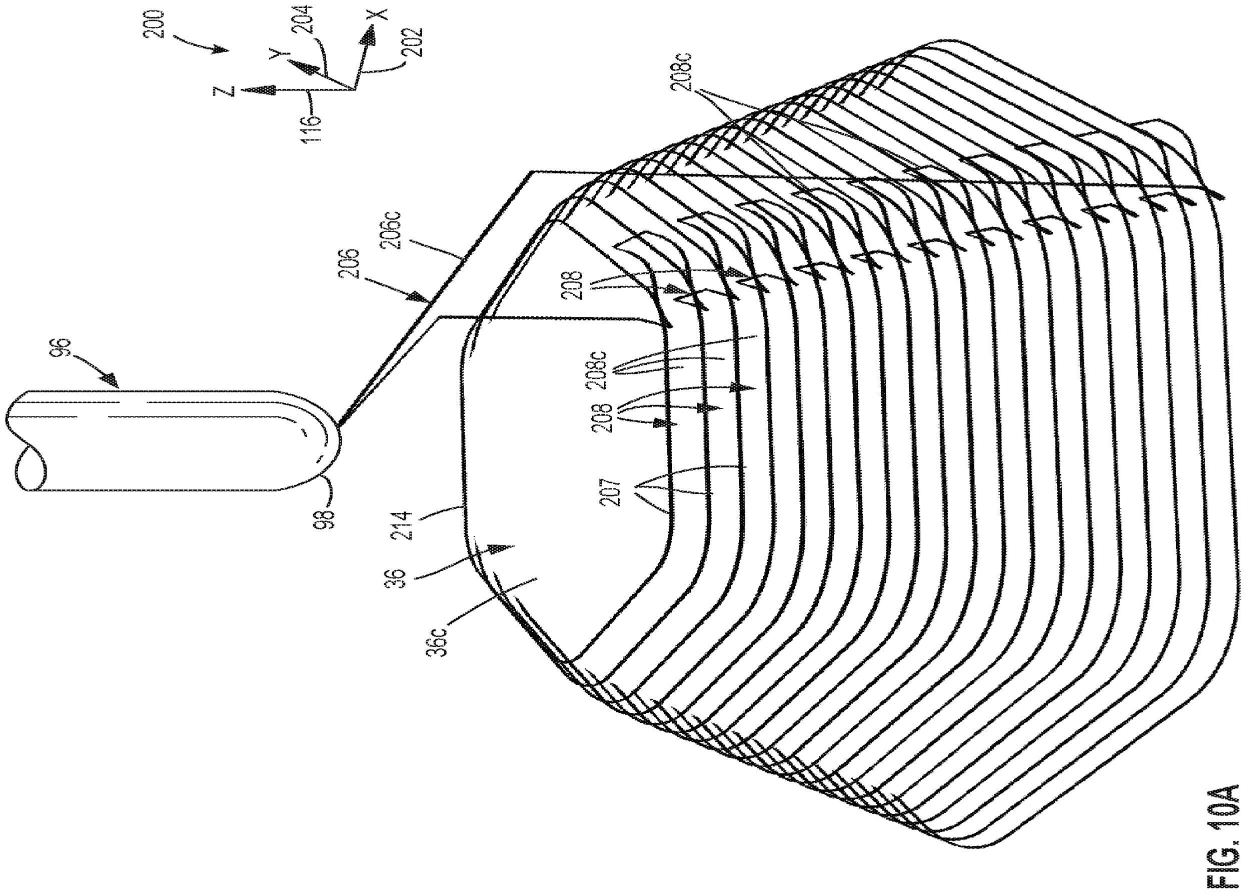
200
204
Y
X
Z
202
116
208c
206c
206
96
208
208c
208
207
98
214
36
36c

FIG. 10A

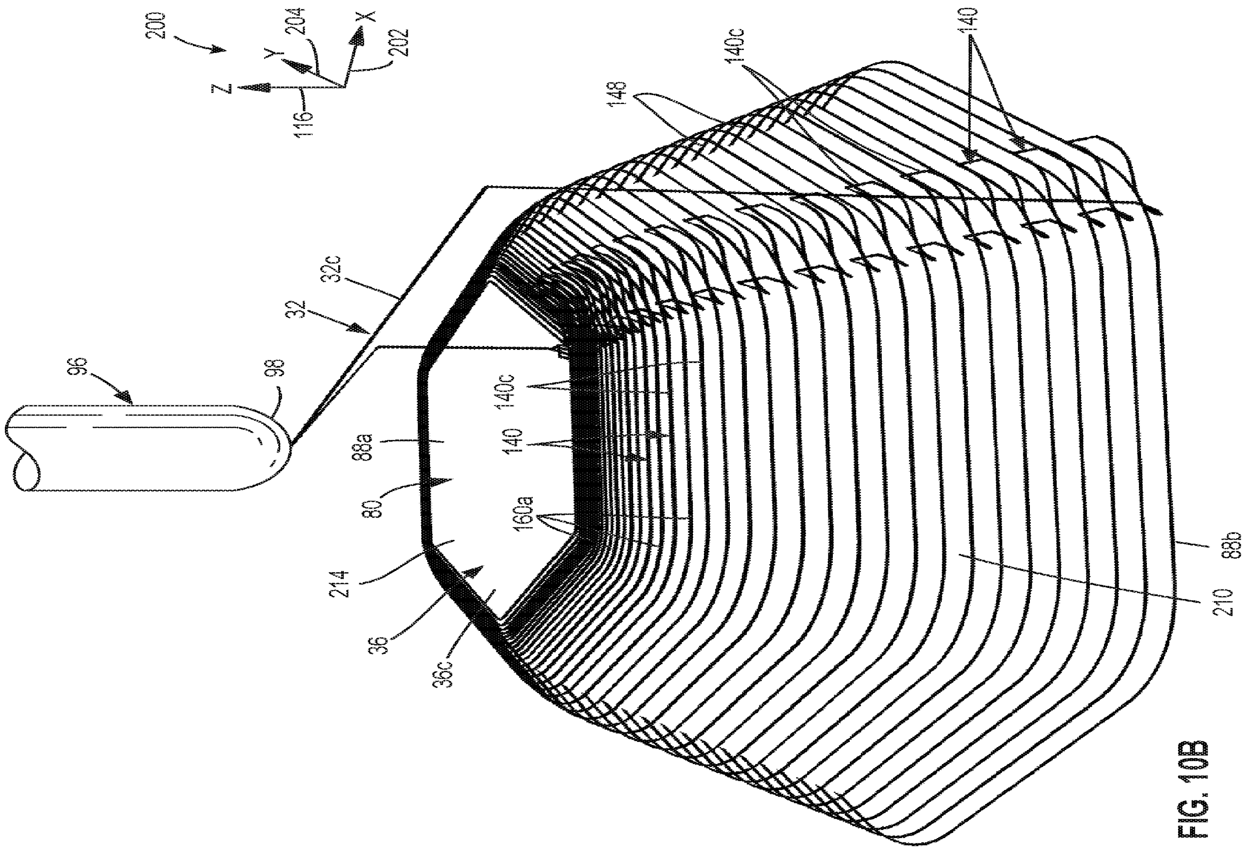
200
204
Y
X
Z
116
202
140c
148
140
32c
32
96
98
88a
80
140c
140
160a
214
36
36c
210
88b

FIG. 10B

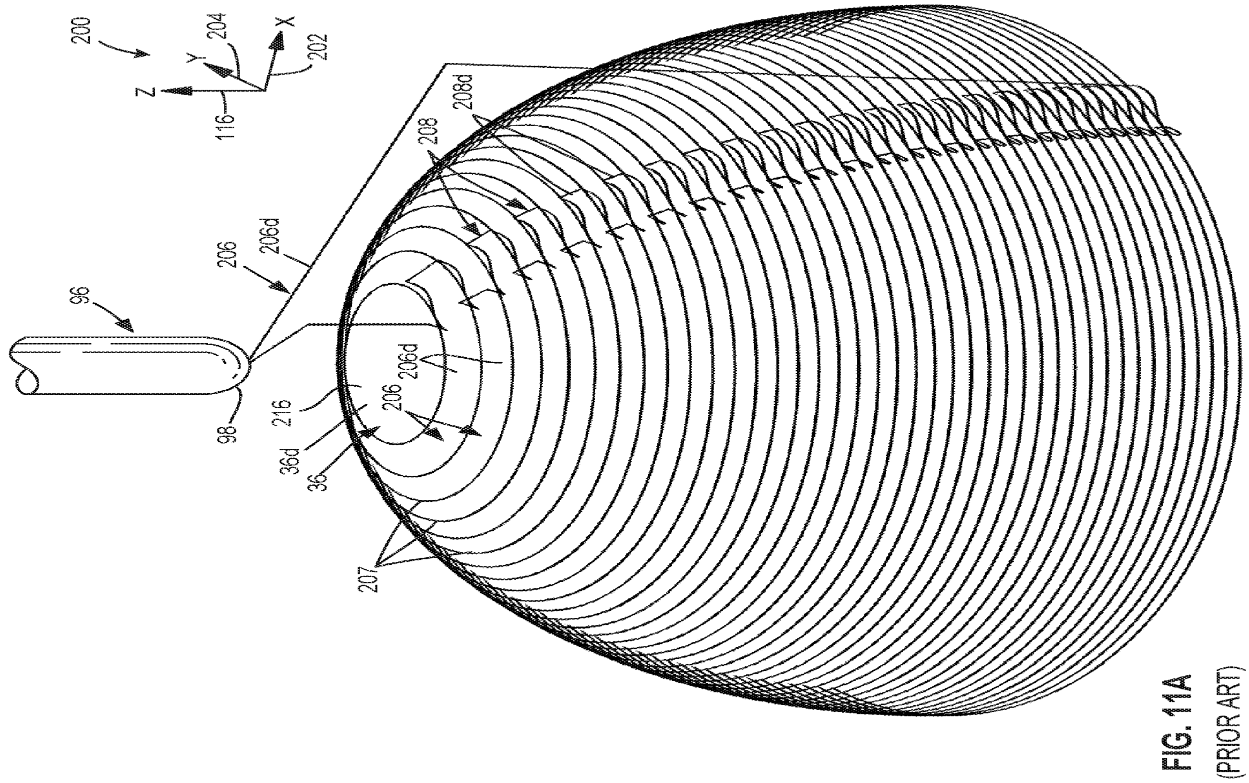


FIG. 11A
(PRIOR ART)

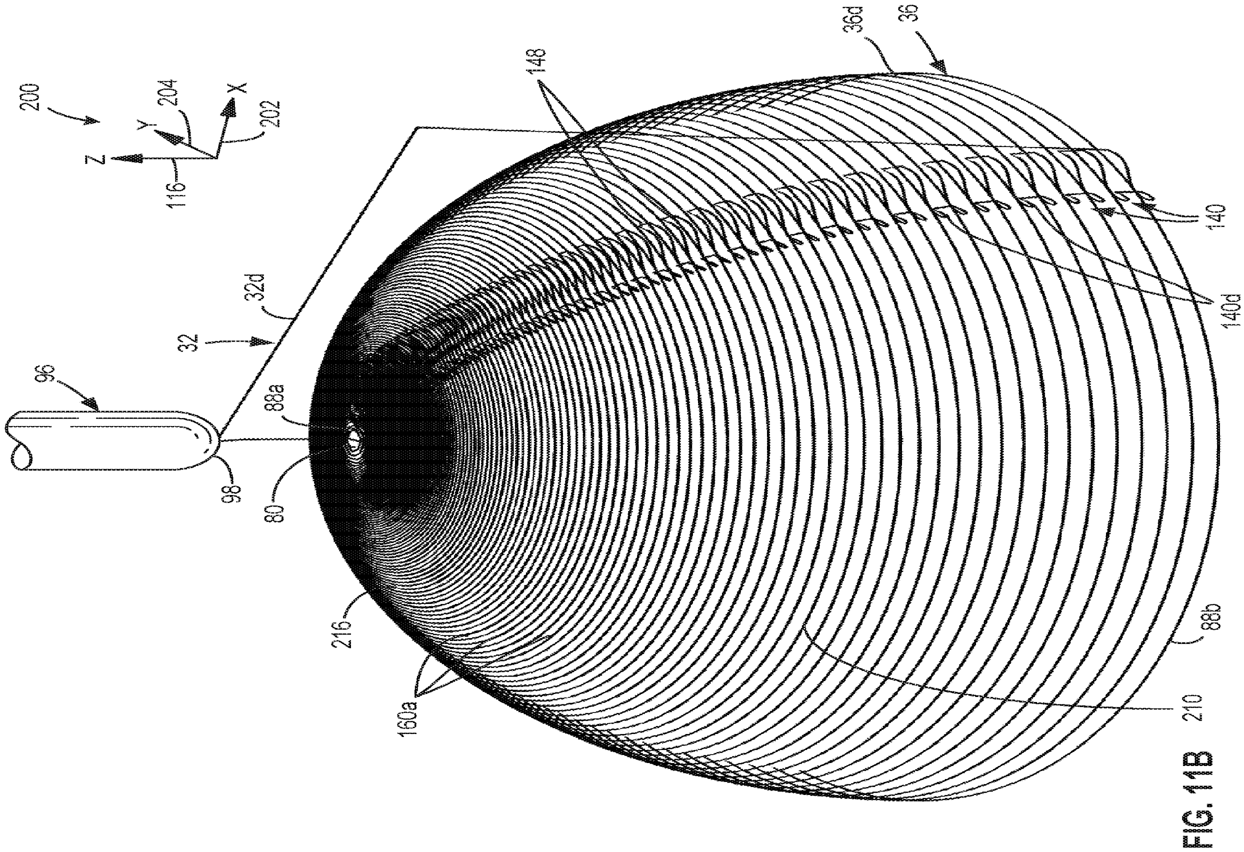
200
204
Y
X
Z
202
116
96
32
32d
98
80
88a
148
36d
36
140
140d
216
160a
88b
210

FIG. 11B

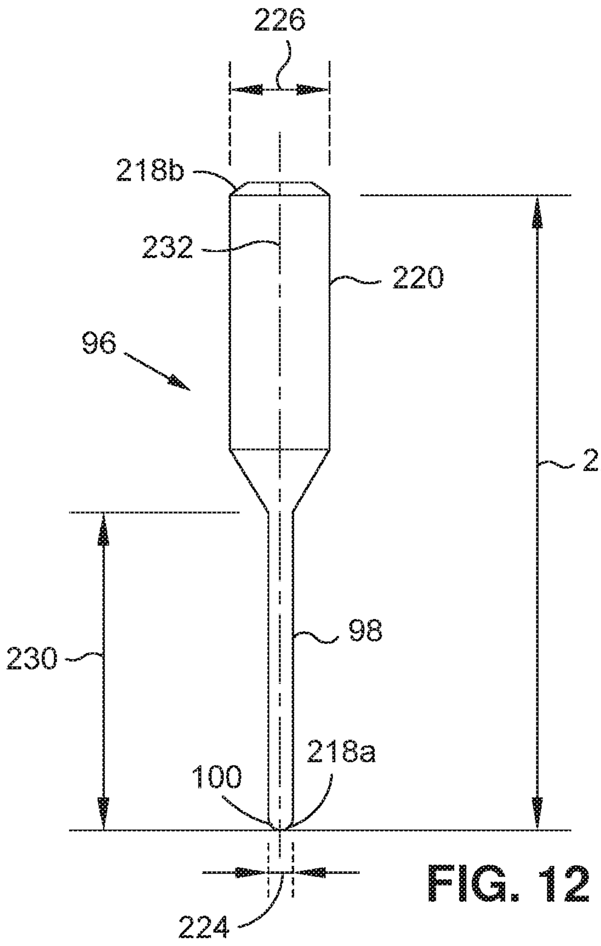
226
218b
232
220
96
228
230
98
218a
100
224

FIG. 12

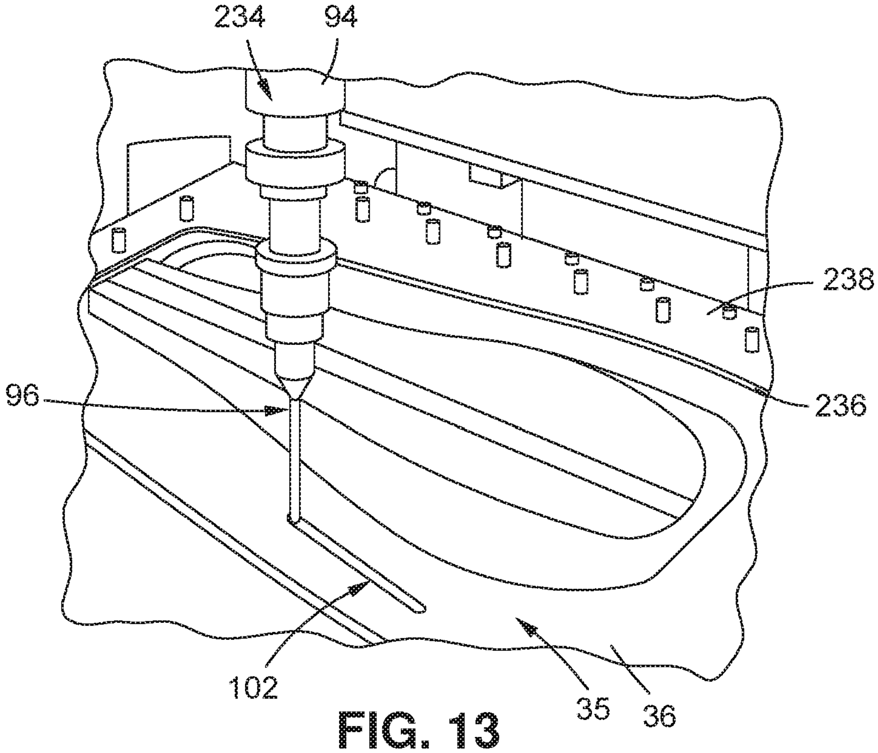
234
94
238
96
236
102
35
36

FIG. 13

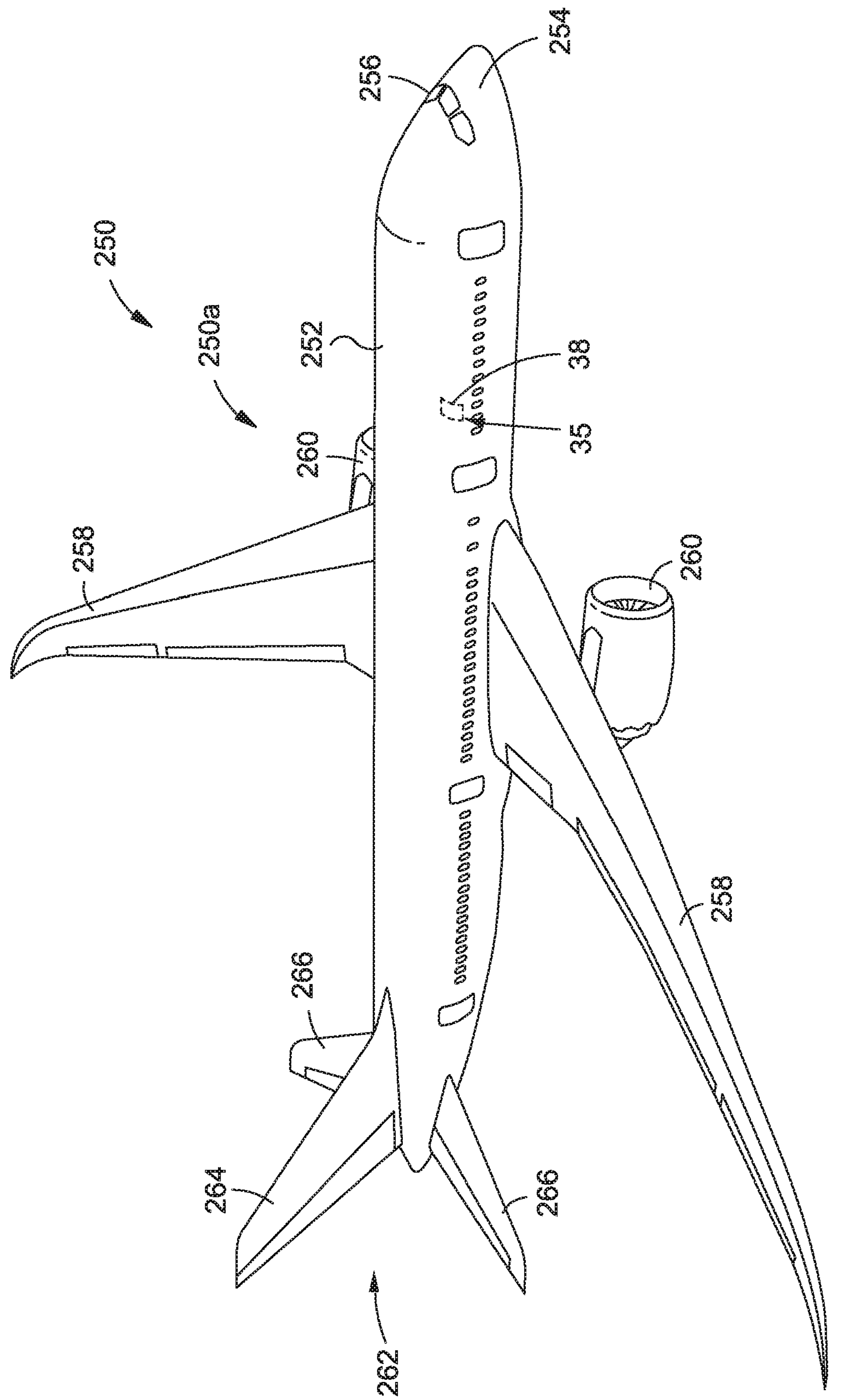


FIG. 14

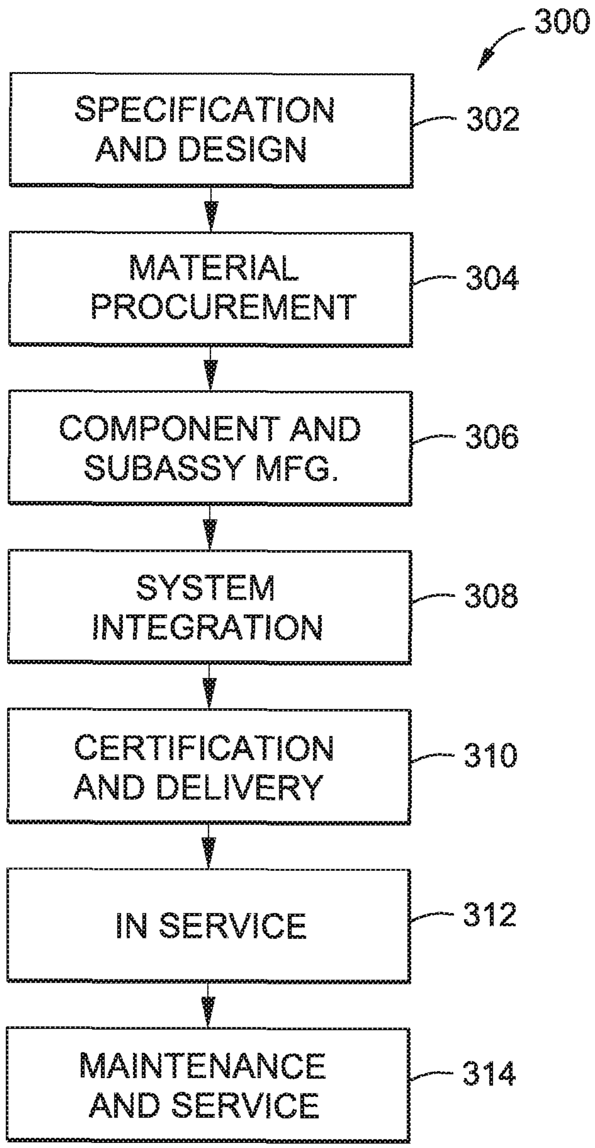
300
SPECIFICATION AND DESIGN
302
MATERIAL PROCUREMENT
304
COMPONENT AND SUBASSY MFG.
306
SYSTEM INTEGRATION
308
CERTIFICATION AND DELIVERY
310
IN SERVICE
312
MAINTENANCE AND SERVICE
314

FIG. 15

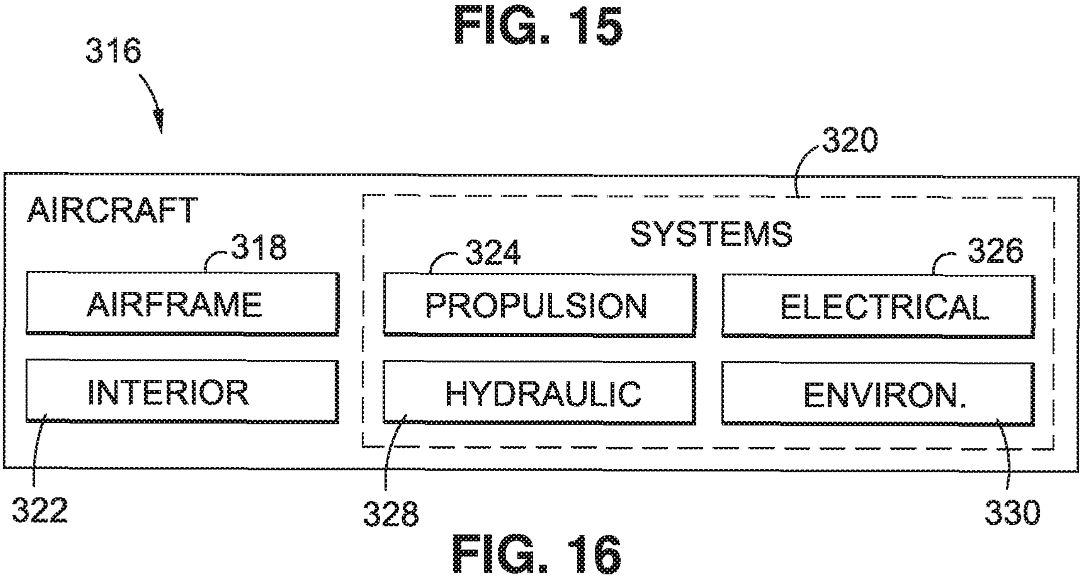
316
320
AIRCRAFT
318
SYSTEMS
324
326
AIRFRAME
PROPULSION
ELECTRICAL
INTERIOR
HYDRAULIC
ENVIRON.
322
328
330

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Investigations on a novel quadratic spiral tool path and its effect on incremental sheet forming process. **CHANG ZHIDONG et al.** The International Journal of Advanced Manufacturing Technology. Springer
- Automatic feature recognition and tool path strategies for enhancing accuracy in double sided incremental forming. **LINGAM R et al.** The International Journal of Advanced Manufacturing Technology. Springer